(19) Europäisches Patentamt
European Patent Office
Office européen des brevets

(11) **EP 1 486 956 A1**

(12) **EUROPEAN PATENT APPLICATION**
published in accordance with Art. 158(3) EPC


(43) Date of publication:
**15.12.2004 Bulletin 2004/51**

(21) Application number: **03710364.5**

(22) Date of filing: **14.03.2003**

(51) Int Cl.[7]: **G11B 7/0045**, G11B 7/007, G11B 7/24, G11B 20/18

(86) International application number:
**PCT/JP2003/003102**

(87) International publication number:
**WO 2003/079335 (25.09.2003 Gazette 2003/39)**

(84) Designated Contracting States:
**DE FR GB**

(30) Priority: **15.03.2002 JP 2002072925**
**06.02.2003 JP 2003029078**



(71) Applicant: **Kabushiki Kaisha Toshiba**
**Tokyo 105-8001 (JP)**

(72) Inventors:
- **Ando, Hideo**
  **Hino-shi, Tokyo 191-0022 (JP)**
- **Watabe, Kazuo, D-707 Park-City-Yokohama**
  **Yokohama-shi, Kanagawa 240-0001 (JP)**
- **Sato, Hiroharu**
  **Tokyo 113-0033 (JP)**
- **Yamada, Hisashi**
  **Yokohama-shi, Kanagawa 244-0001 (JP)**
- **Nagai, Yuuji,**
  **106 Toshiba-Nakahara-Kazoku-Apart**
  **Kawasaki-shi, Kanagawa 211-0041 (JP)**
- **Noda, Chosaku**
  **Kawasaki-shi, Kanagawa 213-0033 (JP)**
- **Kashihara, Yutaka**
  **Chigasaki-shi, Kanagawa 253-0087 (JP)**
- **Ogawa, Akihito,**
  **641 Toshiba-Shinkoyasu-Dai-1-Ryo**
  **Yokohama-shi, Kanagawa 221-0013 (JP)**
- **Kojima, Tadashi**
  **Yokohama-shi, Kanagawa 221 (JP)**

(74) Representative: **Henkel, Feiler & Hänzel**
**Möhlstrasse 37**
**81675 München (DE)**


(54) **INFORMATION RECORDING MEDIUM, AND INFORMATION RECORDING/REPRODUCING DEVICE AND METHOD**


(57) An information storage medium (1) has tracks in which information is recorded. The tracks are formed as a groove section (2) and a land section (3). The groove section (2) has a synchronous structure in which wobbles (2a) and (2b) formed on both walls of the groove section (2) are not displaced from each other in the circumferential direction of the medium, and the land section (3) has an asynchronous structure in which wobbles formed on both sides of the land section (3) are displaced from each other. A good signal is reproduced from each of the groove and land sections.


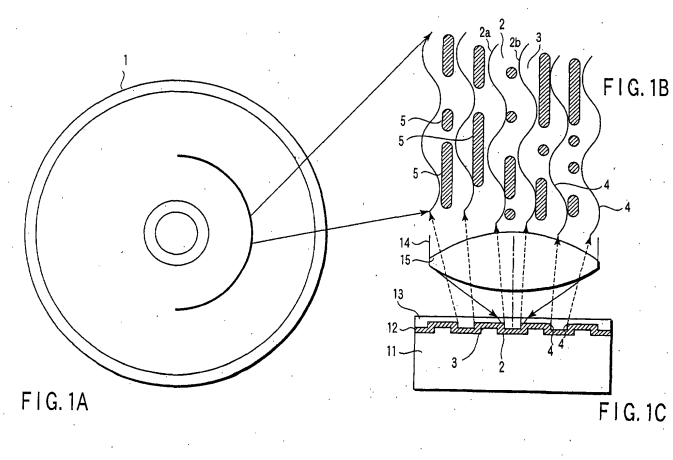

FIG. 1A
FIG. 1B
FIG. 1C

EP 1 486 956 A1

## Description

Technical Field

The present invention relates to an information recording medium, an information reproducing apparatus, and an information recording and reproducing apparatus, and in particular, to a data recording format for an optical disk and a wobble address conversion system for an optical disk based on this data recording format.

Background Art

In current DVD-RAM standards, an L/G (land and groove) recording format is adopted to improve recording density. In this format, information recording marks are recorded on both tracks of spiral land and groove sections.

It is a basic policy of the current DVD-RAM standards to make recording conditions (recording power and recording pulse conditions) of the land and groove sections coincident with each other. A user therefore cannot help but adopt a ZCLV (zoned constant linear velocity) format in order to make the widths of the land and groove sections equal to each other and make the conditions of these sections coincident with each other. In this ZCLV format, a recording area of an optical disk is divided into a plurality of donut-shaped zones. The rotation speed is constant on each of the zones and decreases toward the outer radius of the disk.

A boundary between the land and groove sections is wavy. This wavy boundary is called a wobble. A wobble signal generated from the wobble can be used to generate a sampling clock signal to control the rotation speed of a spindle motor which rotates the optical disk and sample an analog reproduction signal from the optical disk and convert it to a digital signal. The wobble can be used to record a sector address of the optical disk.

In the ZCLV format, adjacent wobbles are synchronized with each other (or not displaced in a track tangential direction). The wobbles have a larger wavelength closer to the outer periphery of the disk. However, the wavelengths of wobble signals obtained by optically tracing the wobbles using an optical pickup are fixed within the same zone.

Documents listed below relate to the optical disk.

Patent No. 2,663,817: identification information is shared by lands (L) and grooves (G) and is misaligned with respect to the center of the land and the groove. This relates to the current DVD-RAM disk standard.

Jpn. Pat. Appln. KOKAI Publication No. 04-172623 and Jpn. Pat. Appln. KOKAI Publication No. 2000-11460: recording marks are formed at the positions of the grooves, whereas address land prepits are provided in the land portions. This relates to the current DVD-RW disk and DVD-R disk.

Jpn. Pat. Appln. KOKAI Publication No. 11-149644: this document shows a method of recording information in the lands and the groove. Address information is recorded on the basis of wobble modulation using gray codes.

Users desire to view "higher-definition" videos using a system that utilizes a reproduction-exclusive DVD-Video disk in which motion pictures are recorded in an MPEG-2 format. If in response to this desire, the "higher definition" and a reproduction time equal to or longer than the current reproduction time (135 minutes) are to be ensured, the capacity of the information recording medium (optical disk) must be sharply increased.

Consideration will be made of the suitability of the techniques in the above documents for providing "higher definition" videos.

[Technique in Patent No. 2,663,817]

1. This technique fails to provide a sufficient format compatibility with DVD-ROM disks that are reproduction-exclusive information recording media. Thus, a reproducing apparatus or recording and reproducing apparatus that is compatible with DVD-ROMs and DVD-RAMs must have a large scale circuit and a complicated circuit firm. Consequently, it is difficult to reduce the price of this apparatus. Further, the apparatus lacks performance stability (control troubles are likely to occur).
2. Recording marks (recordable data) cannot recorded in a CAPA (prepit) portion so as to overlap each other. Accordingly, a recording capacity cannot be increased.

[Techniques in Jpn. Pat. Appln. KOKAI Publication No. 04-172623 and Jpn. Pat. Appln. KOKAI Publication No. 2000-11460]

1. Recording marks (recordable data) are recorded only in the grooves. Thus, in principle, these techniques provide

a smaller recording capacity than an L/G recording method.

2. Since these techniques are premised on serial recording, it is difficult to additionally write or rewrite data using a small data unit. If a restricted overwrite is forcedly executed using a small data unit, already recorded data may be partly destroyed. Consequently, the already recorded data may become very unreliable.

[Technique in Jpn. Pat. Appln. KOKAI Publication No. 11-149644]

This technique uses a radial push-pull signal to detect wobble information on indefinite bits (areas having bit contents varying between adjacent grooves) in the land portions (FIGS. 1 and 2 in the document). .With this detecting method, when an "offset during tracking (tracking is executed offset from the center)", a "tilt in an information recording medium", a "variation in the characteristics of reproducing optical heads", or the like occurs, the amplitude and polarity of the radial push-pull signal varies drastically at the indefinite bit positions in the land portions. Therefore, with the method in this document, detections are inaccurate and it is very difficult to ensure the reliability of products.

Further, this document has no description of the format compatibility between reproduction-exclusive information recording media and additionally recordable information recording media and rewritable information recording media. Further, data recorded on an information recording medium has only three layers, that is, an "ECC format", a "frame (= sector (FIG. 4))", and a "segment". It is thus difficult to ensure format compatibility with the reproduction-exclusive information recording medium.

Furthermore, with this document, no error check codes are added to various addresses having gray code characteristics (an error check code obtained by dividing a gray code by a creation polynomial does not have the gray code characteristics, so that it has been considered to be impossible to add an error check code to a gray code). Accordingly, even if the various addresses are determined using a signal reproduced from a wobble signal, it is impossible to make evaluation as to whether or not the result of the.determination is correct. Thus, disadvantageously, reproduction of various types of address information having the gray code characteristic is very unreliable.

As described above, with the techniques in Documents 1 to 4, it is difficult to easily accomplish the object to provide "higher-definition" videos such as those desired by users.

A complete CLV (constant linear velocity) format as a recording format of an optical disk allows the storage capacity to be improved more than the above ZCLV format. However, the CLV format causes the problem that no wobbles are synchronized with each other in land and groove sections.

Disclosure of Invention

The present invention is provided to solve the above problems. It is an object of the present invention to provide an information recording medium that meets the following conditions:

α] Not only to enable displays at a definition higher than that achieved with the current DVD-Video disk but also to increase the capacity of an information recording medium so as to enable the high-quality videos to be reproduced for a long time.

β] To ensure a high format compatibility between a reproduction-exclusive information recording medium (next-generation DVD-ROM) and an additionally recordable information recording medium (next-generation DVD-R) and a rewritable information recording medium (next-generation DVD-RAM).

γ] To ensure mixed recording of the high-quality videos and PC (Personal Computer) data on one information recording medium, that is, enable additional writing and rewriting of data,using a very small unit such as that used for PC data, without making already recorded data unreliable in spite of the additional writing and rewritting of data using the very small unit (the already recorded data is not destroyed).

δ] To improve the reliability of reproduction of address information prerecorded on the additionally recordable or rewritable information recording media. e] To allow a reference clock to be more accurately extracted from a wobble signal prerecorded on the information recording medium, that is, synchronize the reference clock from the wobble signal during recording (a phase lock loop process) and synchronize the reference clock while information is being reproduced from recording marks recorded on the information recording medium (a phase 'lock loop process).

ζ] To ensure high-speed accesses, that is, ensure the more frequent placement of address information prerecorded on the additionally recordable, or rewritable information recording medium.

η] To ensure extendibility to a single-side 2-recording-layer structure, that is, ensure that with a single-side 2-recording-layer structure, while recording or reproduction is being executed in one of the recording layers, the operation is not affected by the other recording layer. It is also an object of the present invention to provide an information reproducing apparatus that can stably reproduce data from the information recording medium or an information recording and reproducing apparatus that can stably record data on the information recording medium.

To attain the above object, there is provided as one embodiment of the invention, an information storage medium having tracks in which information is recorded, the tracks being formed as a groove and a land, wherein the groove has a synchronous structure in which wobbles are formed on both walls of the groove and synchronized with each other, and the land has an asynchronous structure in which wobbles are formed on both walls of the land and asynchronized with each other.

The above information storage medium can perform both land/groove recording and CLV recording concurrently with each other and thus increase in recording capacity.

Brief Description of Drawings

FIGS. 1A to 1C are views of groove and land sections of an information storage medium according to the present invention;

FIG. 2 is a block diagram showing a recording unit of an information recording/reproducing apparatus according to the present invention;

FIG. 3 is a block diagram showing a reproduction unit of the information recording/reproducing apparatus according to the present invention;

FIG. 4 is a flowchart showing a first embodiment of an information recording method applied to the recording/reproducing apparatus shown in FIGS. 2 and 3;

FIGS. 5A to 5D are views for describing a recording method according to the present invention;

FIG. 6 is a flowchart showing a second embodiment of the information recording method applied to the recording/reproducing apparatus shown in FIGS. 2 and 3;

FIG. 7 is a view of a first embodiment of a wobble address structure according to the present invention;

FIGS. 8A and 8B are views of a second embodiment of the wobble address structure according to the present invention; and

FIG. 9 is a view of a third embodiment of the wobble address structure according to the present invention.

FIG. 10 is a diagram illustrating a process procedure of generating recording data fields.

FIG. 11 is a diagram illustrating the configuration of a data frame.

FIG. 12 is a diagram illustrating the contents of a data ID in FIG. 11.

FIG. 13 is a diagram illustrating the contents of a data field number in FIG. 12.

FIG. 14 is a diagram illustrating the definitions of recording types.

FIGS. 15A and 15B are diagrams showing an example of initial values in a shift register set before main data is scrambled, and illustrating the shift register itself.

FIG. 16 is a diagram illustrating the structure of an ECC block.

FIG. 17 is a diagram illustrating an example of the arrangement of scrambled frames.

FIG. 18 is a diagram of an ECC block in which outer parities (POs) are interleaved in a left and right blocks.

FIGS. 19A and 19B are diagrams illustrating the modulated data in the ECC block to which synchronous codes have been added.

FIG. 20 is a diagram showing the types of synchronous codes in FIG. 19.

FIG. 21 is a diagram illustrating the structure of data in a lead-in area in a reproduction-exclusive information recording medium.

FIG. 22 is a diagram illustrating data units of data recorded on an information recording medium.

FIGS. 23A and 23B are diagrams illustrating differences between a first and second embodiments of the reproduction-exclusive information recording medium according to the present invention.

FIGS. 24A to 24D are diagrams of a comparison of data recording formats of various information recording media according to the present invention with one another.

FIG. 25 is a diagram showing the zone structure of a rewritable information recording medium according to the present invention.

FIG. 26 is a diagram illustrating a 180° phase modulation and an NRZ method in wobble modulation.

FIGS. 27A to 27C are diagrams illustrating the principle of generation of indefinite bits in the case where wobble modulation is based on land (L)/groove (G) recording.

FIG. 28 is a diagram showing an example of gray codes.

FIG. 29 is a diagram illustrating special track codes according to the present invention.

FIGS. 30A to 30D are diagrams illustrating a method of recording rewritable data on the rewritable information recording medium according to the present invention.

FIGS. 31A to 31D are diagrams illustrating wobble information on the rewritable information recording medium according to the present invention.

FIGS. 32A to 32E are diagrams illustrating how address bits are arranged in areas in which respective wobble addresses are placed, in the rewritable information recording medium according to the present invention.

FIGS. 33A to 33E are diagrams illustrating how the address bits are arranged in the areas in which the respective wobble addresses are placed, in an additionally recordable information recording medium according to the present invention.
FIG. 34 is a diagram illustrating a process of creating wobble address data in a recordable information recording medium.
FIG. 35 is a diagram illustrating signals applied to the fundamental concept of the present invention and the contents of a related process.
FIG. 36 is a diagram illustrating a method of setting EDC information having gray code characteristics.
FIG. 37 is a diagram illustrating a method of setting odd/even number identification information on lands in connection with the L/G recording.
FIG. 38 is a diagram showing a method of setting track number information on the rewritable information recording medium.
FIGS. 39A and 39B are diagrams illustrating a method of changing a groove width.
FIG. 40 is a diagram illustrating another example of the arrangement of indefinite bits in a groove area in L/G recording.
FIG. 41 is a diagram showing an example of header area in a ROM medium.
FIG. 42 is a diagram showing another example of a header area.
FIG. 43 is a diagram showing the relationship between a track form obtained by subjecting groove wobbles to phase modulation using track address data and a wobble detection signal from a land.
FIG. 44 is a diagram illustrating address detection values from land tracks in groove wobbling.
FIG. 45 is a diagram illustrating track numbers resulting from groove wobbling as well as data detected in land tracks.
FIG. 46 is a diagram showing an example of an addressing format.
FIG. 47 is a diagram showing an example of embedding of address information in a land track.
FIG. 48 is a diagram showing an example in which land addresses are formed by changing the width of a part of the groove.
FIG. 49 is a diagram illustrating the principle of detection of the odd or even track numbers of land tracks based on a change in the width of a part of the groove.
FIG. 50 is a diagram showing an example of the addressing format of the rewritable information recording medium.
FIG. 51 is a diagram showing an example of an address layout.

## Best Mode for Carrying Out the Invention

Embodiments of the present invention will now be described with reference to the accompanying drawings.
FIG. 1A is a plane figure (top view) of a rewritable information storage medium (optical disk) 1 according to the present invention, FIG. 1B is a partly enlarged view of FIG. 1A and FIG. 1C is a partly enlarged cross-sectional view of the information storage medium 1. As shown in FIG. 1C, the information storage medium 1 includes a supporting substrate 11 having a thickness of 1.0 mm to 1.2 mm, a recording film 12 formed on the substrate 11 and a transparent protecting layer 13 having a thickness of 25 μm to 300 μm and formed on the film 12. The recording film 12 is irradiated with a laser beam 14 through the transparent protecting layer 13. The information storage medium 1 is irradiated with the laser beam 14 through an objective lens 15.
In land and groove recording of the present invention, a convex section (groove) is referred to as a groove section 2 and a concave section (bank) is referred to as a land section 3 when viewed from the laser beam 14. A boundary between the groove and land sections 2 and 3 is defined as a wall section 4.
Checking the size of a condensed spot of the laser beam 14, which is substantially concentrated on the recording film 12, by analyzing a vector field, the condensed spot emitted onto the groove section 2 is relatively increased in size and the condensed spot emitted onto the land section 3 is relatively decreased in size.
Consequently, the resolution of signals reproduced from recording marks 5 recorded on the groove section 2 is relatively low and so is the reliability thereof. When the recording marks 5 are formed in the groove section 2, a cross erase phenomenon in which the recording marks 5 recorded on the adjacent land sections 3 are erased, easily occurs.
Similarly, the resolution of signals reproduced from recording marks 5 recorded on the land section 3 is relatively high and so is the reliability thereof. When the recording marks 5 are formed in the land section 3, a cross erase phenomenon in which the recording marks 5 recorded on the adjacent groove sections 3 are erased, dose not easily occurs.
The present invention has a great feature in the recording method that aims at increasing the capacity of an information storage medium using analytic results of the above vector field.

As shown in FIGS. 1, both the wall sections 4 of the groove section 2 in which the reliability of signals reproduced from the recording marks 5 is relatively low are synchronized and wobbled (meander). In other words, wobbles 2a and 2b of both sides of the groove section 2 are not displaced from each other in the circumferential direction (up-and-down direction in FIGS. 1A to 1C) of the information storage medium 1. In this embodiment, the CLV format is adopted to increase the storage capacity and the frequencies of wobble signals produced from the wobbles are constant on the entire surface of the medium.

The adoption of the CLV format inhibits the wobbles in the groove and land sections 2 and 3 from being synchronized with each other. As a result, the following phenomenon occurs. The groove and land sections 2 and 3 vary in width depending on a location, and this width variation varies the amount of light of reproduction signals, thereby degrading the characteristics of the signals reproduced from the recording marks 5.

Since the above reproduction signals are transferred to both a sync code position detecting section 45 and a demodulation circuit 52 in a recording/reproducing apparatus (described later) shown in FIG. 3, the section 45 and circuit 52 are decreased in throughput. In order to resolve this drawback, according to the present embodiment, the tracks are so formed as to displace the wobbles on both wall sections 4 of the land section 3 in which the reliability of the reproduction signals obtained by analytic results of a vector field is high.

The information recording/reproducing apparatus according to the present invention will now be described.

FIG. 2 specifically shows a block of a recording unit of the information recording/reproducing apparatus. Main data (source data or user data) to be recorded is supplied to a given-information adding section 68 via an interface section 42. The section 68 subdivides the main data in units of sector.

When a medium for recording is a rewritable information storage medium, the given-information adding section 68 adds data ID, IED, a data type, preset data and a reservation area of the sector to the front of the main data and also adds EDC to the rear of the main data as described later. The data ID is generated from a data ID generating section 65 and the preset data is generated from a preset data generating section 66.

On the other hand, when a medium for recording is a reproduction-exclusive information storage medium (an original master), the given-information adding section 68 adds data ID, IED and copyright management information of the sector to the front of the main data and adds EDC to the rear of the main data. The data ID is generated from the data ID generating section 65 and the copyright management information is generated from a copyright management information generating section 67.

The sector data generated from the given-information adding section 68 is sent to a data layout partial exchanging section (or data extracting section) 63. The data layout partial exchanging section 63 determines the position of the sent sector data.

The sector data from the data layout partial exchanging section 63 is sent to a scramble circuit 57 and then subjected to a scramble process.

The sector data so scrambled are supplied in sequence to an ECC encoding circuit 61. The circuit 61 ECC-encodes the sector data by a predetermined number (e.g., data for 16 to 32 sectors).

The ECC-encoded data is supplied to a modulation circuit 51. The modulation circuit 51 performs a given modulation for the received data while acquiring necessary information from a modulating conversion table recording section 53 (this modulation is, for example, an 8/16 modulation and another modulation technique can be adopted). The circuit 51 sends the modulated data to a data combining section 44.

A DSV computing section 48 computes a DSV (digital sum value) for modulated data (e.g., six-bit channel) of the bottom of each sector of the modulated data sent to the section 44. The section 48 sends the computed DSV to a sync code selecting section 46.

The sync code selecting section 46 selects a specific (optimum) sync code from among a variety of sync code tables, which are recorded on a sync code selecting table recording section 47, based on the DSV computed by the DSV computing section 48 and low order n-bit data generated from the preset data generating section 66 or the copyright management information generating section 67.

The sync code selected by the sync code selecting section 46 and the modulated data supplied from the modulation circuit 51 are arranged alternately in the data combining section 44.

The data so combined is written to a rewritable information storage medium (e.g., a RAM disk and a RW disk adopting a phase change recording format) via an information recording/reproducing section 41. The section 41 includes an optical pickup and emits a laser beam to the information storage medium to record information or form a recording mark.

When the data so combined is dedicated to a reproduction-exclusive information storage medium, (a) it is recorded on an original master for replicating a ROM disk by an original master recording section of the ROM disk or (b) it is burnt in a reproduction-exclusive R disk (e.g., a disk using pigment that permanently changes the reflectivity of a laser irradiation portion to which data is to be written) by the information recording/reproducing section 41.

The operations of the respective elements of the above-described apparatus are controlled by an MPU in a control section 43 using a RAM in the section 43 as a work area in accordance with control programs written to a ROM

in the section 43.

FIG. 3 is a block diagram showing a reproduction unit that reproduces information from the rewritable information storage medium or the reproduction-exclusive information storage medium in the information recording/reproducing apparatus.

The information recording/reproducing section 41 irradiates the information storage medium with a laser beam to reproduce information. A wobble signal demodulation circuit 50 demodulates a wobble signal from a reproduction signal supplied from the information recording/reproducing section 41. A spindle motor rotation control circuit 60 controls the rotation speed of a spindle motor (not shown), which rotates an optical disk, in response to the wobble signal supplied from the circuit 50.

A sync code position extracting section 45 detects a sync code of the top of each sector recorded on the optical disk. The demodulation circuit 52 can sense a position of the top of a sector of data reproduced from the reproducing section 41 and that of a sync code in the sector in accordance with information of the sync code detected from the sync code position extracting section 45. In the demodulation circuit 52, the sync code is deleted from the sector based on sync code information supplied from the sync code position extracting section 45. The data remaining in the sector, which is 8/16 modulated, is demodulated based on demodulation information supplied from a demodulating conversion table recording section 54.

A descramble circuit 58 first descrambles a data ID portion and an IED portion of the scrambled data. A data ID portion and IED portion extracting section 71 extracts the descrambled ID and IED portions and supplies them to the control section 43. The control section 43 monitors the data ID portions supplied in sequence. The control section 43 can detect an out-of-track in accordance with the contents of the descrambled data. When the control section detects an out-of-track, it can read information again in a short period of time.

The data demodulated by the demodulation circuit 52 is also sent to an ECC decoding circuit 162. The circuit 62 brings together a given number of sectors (16 or 32 sectors) as one ECC block, and ECC-decodes the ECC-encoded data and transmits it to the descramble circuits 58 and 59.

The descramble circuit 59 descrambles the entire main data and sends the descrambled data to a data location exchanging section 64. The section 64 sends specific data of the descrambled data to the data ID portion and IED portion extracting section 71.

The section 71 detects data ID and IED from the descrambled data and extracts data ID whose error has been checked. A data ID portion error check section 72 checks whether data ID includes an error. If an error is detected, it is corrected by the ECC decoding circuit 62. Further, a main data extracting section 73 extracts the main data that is located at a given distance from the top of each sector data and outputs the main data through the interface section 42.

FIG. 4 is a flowchart showing a first embodiment of an information recording method, which is applied to the information recording/reproducing apparatus shown in FIGS. 2 and 3. When AV (audio video) information is recorded mainly on the information storage medium 1, it is not rewritten more frequently than PC information. With the help of this feature, the information recording/reproducing apparatus shown in FIGS. 2 and 3 records information on the information recording medium 1 as follows.

The information recording medium 1 includes a data area for recording information and a management area for managing the information recorded on the data area. The contents such as video data are recorded on the data area. This processing is all controlled by the control section 43 shown in FIGS. 2 and 3.

1. Basically information is recorded in sequence on an unrecorded area.
2. When a user gives an instruction to rewrite the recorded information, the information is recorded on an unrecorded area, and the previously recorded information is left as it is and inhibited from being provided to the user by deleting data in the management information.
3. After information is completely recorded on the entire surface of the information storage medium 1, the information of which is inhibited from being provided to the user, is overwritten with new information whose recording is designated by the user.

As in step ST101 in FIG. 4, if a user gives an instruction to record information, the information is additionally written first to the groove section at the inner radius of the medium 1. If the user gives an instruction to delete a file, the file is inhibited from being provided to the user by deleting data in the management information of the medium 1, and the file. recorded within a data area is not deleted. If the user gives an instruction to rewrite a file, the file is inhibited from being provided to the user by deleting data in the management information without overwriting the file and information is additionally written to an unrecorded area.

When the additional writing of information to the groove section is completed (YES in step ST103), information is additionally written to the land section (step ST104). In this case, too, when a user gives an instruction to delete or rewrite a file, the file is inhibited from being provided to the user by deleting data in the management information of the information storage medium 1 and information is additionally written to an unrecorded area.

When the additional writing of information to the land section is completed (YES in step ST105), a file area of the groove or land section, recorded with the information to which the rewrite instruction or the delete instruction is given is overwritten with new information.

The above-described recording method decreases the number of times of write to the groove section at the inner radius of a disk and prevents a recording film at the inner radius of the disk from deteriorating.

FIG. 5A is a view of the information storage medium 1 in which information is recorded halfway through the medium 1 and only in the groove sections. In FIG. 5A, reference numeral 7 indicates a recorded area only for the groove sections having a radius of r and reference numeral 6 indicates an unrecorded area from the radius of the recorded area 7 to the outermost radius of the medium 1. FIG. 5B is a partly enlarged view of a range corresponding to the radius of r in FIG. 5A. As shown in FIG. 5B, recording marks 5 are formed halfway through the groove sections 2. FIG. 5C is a view of the information storage medium in which recording of information in all the groove sections 2 is completed and that in the land sections 3 is started. In FIG. 5C, reference numeral 9 denotes a recorded area for both the groove and land sections from the innermost radius of the medium 1 to the radius of r, and reference numeral 8 denotes a recorded area only for the groove sections from the radius of r to the outermost radius of the medium 1. FIG. 5D is a partly enlarged view of a range corresponding to the radius of r in FIG. 5C. As shown in FIG. 5D, recording marks 5 are formed halfway through the land sections 3 and they are formed in all the groove sections 2.

FIG. 6 is a flowchart showing a second embodiment of an information recording method according to the present invention, which is applied to the information recording/reproducing apparatus shown in FIGS. 2 and 3.

According to the method shown in FIG. 6, information is first additionally written to (recording marks 5 are formed in) all the groove sections 2 on the information storage medium in steps ST201 to ST203 and then a file area of the groove sections 2 whose deletion or rewriting is designated by a user is overwritten in steps ST204 and ST205. If information is completely recorded on the groove sections 2 in this manner, it starts to be recorded on the land sections 3 in steps ST206 to ST208.

As described above, a cross erase phenomenon is easily appears in the land sections 3 when information is recorded on the groove sections 2 as analytic results of a vector field. Therefore, information is recorded on the groove sections 2 first (in this case no cross erase phenomenon occurs because no recording marks 5 are formed in the land sections). No information is recorded on the land sections 3 until the recording in the groove sections 2 is completed. Since a cross erase phenomenon is relatively hard to cause in the groove sections 2 when information is recorded on the land sections 3. Thus, an unnecessary cross erase phenomenon is not easy to generate on the recording marks 5 recorded on the groove sections 2 when the recording marks 5 are formed in the land sections 3. Consequently, an influence of cross erase can be lessened in the land (land)/groove (groove) recording and a track pitch of the CLV format can be narrowed, thus improving the recording capacity of the information storage medium.

As another embodiment of the present invention, a method of using wobble signals from the wobble which vary in synchronization with each other on the right and left wall sections 4 of the groove section 2, as address information on the information storage medium 1 will now be described with reference to FIGS. 7 and 8.

An FSK (frequency shift keying: information items "1" and "0" are superimposed on wobbles in accordance with variation in frequency) method is adopted as a recording format of address information in the form of a wobble. Assuming that the frequencies used for the FSK method are f1 and f2, wobbles having frequencies f1 and f2 are formed in a wobble address region (described later). A wobble having a frequency f3 that is far lower than the frequencies f1 and f2 is formed on a wall section between the wobble address region and its adjacent one. For the sake of simple descriptions in the following embodiments, however, the wall section is regarded as a straight line.

Paying attention to the groove sections 2 shown in FIG. 7, most of right and left wall sections 4 of the groove sections 2 are not wobbled but straightened. In odd regions 21, however, wall sections are wobbled (meander) in synchronization with each other.

In wobbles formed in a rewritable optical disk such as a DVD-RAM, generally, a size corresponding to, e.g., one sector is defined as one set including blocks A and B, and the first half of each block is used as an address region, as illustrated in FIG. 7. The address region of the block A is defined as an odd region 21 and that of the block B is defined as an even region 22. The ratio of the total length of the odd regions 21 to that of the tracks along the circumference of the information storage medium 1 is 1 to 4, and so is the ratio of the total length of the even regions 22 to that of the tracks.

A signal reproduced from the recording marks 5 is detected by detecting a variation in the total amount of light of a laser beam 14 that is reflected by the recording film 12 and passes through the objective lens 15 as shown in FIG. 1C. In contrast, a wobble detection signal is generated by computing a difference in total amount of light between a laser beam 14, which passes the right side of the optical axis (indicated by alternate long and short dashed lines) of the objective lens 15 in FIG. 1C and a laser beam 14 that passes the left side of the optical axis of the objective lens. The wobble detection signal so generated is processed by the wobble signal demodulation circuit 50 shown in FIG. 3 and decoded as address information on the information storage medium 1. The wobble detection signal has substantially the same waveform as the shape of wobbles formed on the right and left wall sections 4 of the groove section 2

in the odd region 21.

When a condensed spot that concentrates on the recording film 12 of the information storage medium 1 traces a groove section 2, the wobble signal demodulation circuit 50 detects address information in response to a wobble signal detected from the odd region 21 in FIG. 7. When the condensed spot traces a land section 3, the circuit 50 detects address information in response to a wobble signal detected when a laser beam passes the wobbles on the wall section 4 of a groove section 2 adjacent to the land section 3 (at the inner radius of the storage medium). The wobble detection signal generated from the groove section 2 adjacent to the land section 3 (at the inner radius of the storage medium) when the condensed spot traces the land sections 3 and that generated from the odd region 21 when the spot traces the groove section 2 have basically the same waveform.

Though not shown in FIG. 3, an out-of-track detection signal (tracking error signal) is generated in order to allow a condensed spot to stably trace the groove sections 2 or land sections 3. The polarity of the out-of-track detection signal generated when the spot traces the groove sections 2 and that of the signal generated when it traces the land sections 3 are opposite to each other. By detecting the polarity of the out-of-track detection signal, the control section 43 determines whether a wobble detection signal represents address information on the groove sections 2 or the land sections 3.

It has been described above that information is recorded on the groove sections 2 and then the land sections 3. In the present embodiment, the order in which address numbers are set is determined in accordance with the order of recording. In other words, if the address number of a groove section 2 detected by a wobble signal generated from the odd region 21 is "i," the address number of the land section 3 adjacent to the groove section 2 at the outer radius of the information storage medium 1 is also detected as "i." This is because an address number is detected from a wobble signal on the wall section 4 of the groove section 2 adjacent to the land section 3 at the inner radius of the medium 1 when the spot traces the land section 3. Assuming that the last address number of the groove section 2 at the outermost radius of the medium 1 is "j," the control section 43 computes address k of the land section by the following equation:

$$k = j + i$$

In the groove section 2, the control section 43 computes an address number k directly from the detected wobble signal. In the land section 3, it computes an address number k by adding an address number j in the groove section 2 at the outermost radius of the medium 1 to the address information detected directly from a wobble signal.

As described above, information is recorded on the groove sections 2 and then the land sections 3. However, the feature of the present invention lies in that information is recorded first in one of a land section and a groove section and then recorded on the other section after the first recording is completed. Therefore, as another embodiment, there can be provided an information recording method in which information is recorded on the land section and then the groove section 3.

Another embodiment of the information storage medium according to the present invention will now be described.

In order to detect a wobble signal with stability when a condensed spot traces a land section 3, if one of (right and left) wall sections of the land section 3 is wobbled, the other wall section always needs to be straightened. When information is recorded in the complete CLV format as in the present invention, the right and left wall sections of the land section 3 may simultaneously be wobbled, as shown in FIG. 8A, according to the radius of the information storage medium 1. In order to avoid this phenomenon, the wobbled sections are moved to the even region 22 from the odd region 21 as shown in FIG. 8B in the present embodiment. Paying attention to the groove sections 2 only, wobbles are formed alternately in the odd and even regions 21 and 22 of adjacent groove sections 2. In other words, a wobble address is recorded on an even region of a groove section that is formed adjacent to another groove section having an odd region in which a wobble address is recorded, with a land section interposed between these adjacent groove sections.

Still another embodiment of the information storage medium according to the present invention will now be described.

In the method of reading address information while a condensed spot is tracing a land section 3 shown in FIG. 7, a wobble is detected from one of wall sections of a groove section 2. FIG. 9 shows a wobble address structure of an information storage medium according to the present embodiment. As shown in FIG. 9, a wobble is formed so as to synchronizing a wobble address region 23a of a groove section 2 with one of wall sections of another groove section 2 that is formed adjacent to the groove section 2 with a land section 3 interposed therebetween. In other words, one of two land sections 3 adjacent to both sides of a groove section 2 in a wobble address region 23 has a synchronous structure as the groove section in the wobble address region 23 does. In a wobble address region 23c of a land section 3, the right and left wall sections of the land section 3 are wobbled in synchronization each other. Thus, address

information is detected from the land section 3 with higher stability and higher reliability in response to a wobble detection signal, with the result that the address information is reproduced with higher accuracy.

Now, description will be given of embodiments of various wobble address systems applied to the information recording media other than rewritable information recording media in which the CLV system is applied to the entire surface of the optical disk as described above. The information recording media other than the CLV-system-based rewritable information recording media include ZCLV-system-based rewritable information recording media which have a plurality of zones in a radial direction and in which the same rotation speed is applied to within the same zone and in which different rotation speeds are applied to a plurality of zones, additionally recordable information recording media that allow only one write (additional writing), and reproduction-exclusive information recording media. In the description below, the additionally recordable information recording media and the rewritable information recording media are collectively represented as "recordable information recording media".

The present embodiment has a large number of characteristics. Accordingly, before describing the embodiments in detail, the characteristics of the present embodiment will be described below in brief as inventive points. In the description below, the contents of major inventive points are denoted by alphabets such as A). The contents of improvements (intermediate-level inventive points) required to implement the major inventive points are denoted by, for example, (a14). Moreover, the contents of details required to implement the contents of the improvements are denoted by, for example, (a141). That is, the contents of the points of the invention will be hierarchically described all together.

Parts of the detailed description of the embodiments which correspond to the inventive points below will be denoted by parenthesized corresponding alphabet numbers.

A) In the embodiments below, plural types of recording formats can be set for a reproduction-exclusive information recording medium. [Effects] A medium (data) structure can be optimized in accordance with contents recorded on the reproduction-exclusive information recording medium. Specifically, the techniques described below are used.

(aa) For contents that can be freely duplicated any number of times (the contents that are not very important), the data is recorded by consecutively joining segments together (arranging them close to one another) as in the case of the prior art.

(ab) For important contents restricted in terms of copying, the segments are arranged away from one another on the information recording medium so that "identification information on the reproduction-exclusive information recording medium", "copy information", "encryption key related information", "address information", and the like can be recorded in the gap between the segments. This serves to protect the contents in the information recording medium and ensures the increased speed of accesses. To accomplish this, the techniques below are used.

(a11) A common format is used within the same disk (the format cannot be changed within the same disk).

(a12) Two formats can be mixed together within the same disk in accordance with recorded contents.

(a13) The two types of formats partly have a common format area (this area is read upon activation).

[Effects] If the data structure varies all over the information recording medium, when a reproducing apparatus starts reproducing data from the information recording medium for the first time, it cannot decide which data structure it should use. Consequently, an unnecessarily long time is required to start reproduction. When a common data structure is used in a part (a lead-in and lead-out parts) of the information recording medium, this part is first accessed upon activation (when an information reproducing apparatus or an information recording and reproducing apparatus starts reproduction immediately after the installation of the information recording medium) to enable the minimum required information to be reproduced using the same format. Consequently, reproduction can be stably and quickly started upon activation.

(a14) Format identification flag information (including a part of the second proposal) for a DVD-ROM is recorded on the disk.

(a141) The format identification flag information is recorded in the common format area.

(a142) The format identification flag information is recorded in a recordable area.

As shown in FIGS. 16 and 17, in the present invention, data recorded on the information recording medium is two-dimensionally arranged. Further, as error-correcting additional bits, PIs (Parity In) are additionally provided in a row direction, while POs (Parity Out) are additionally provided in a column direction. This structure provides an excellent error correcting capability based on an erasure correcting process and a vertical and horizontal repeated correcting process.

(b11) One error correction unit (ECC block) is composed of 32 sectors. Specifically, as shown in FIGS. 16 and 17, in the embodiments of the present invention, the ECC block is constructed by sequentially arranging 32 sectors from "sector 0" to "sector 31" in a vertical direction. One sector is composed of six columns. [Effects] The next-generation DVD must be able to accurately reproduce information using an error correcting process even with a scratch of a certain length on the surface of the information recording medium, the scratch of this length being a scratch with which the current-generation DVD accurately reproducing information using an error correcting process.

The embodiments of the present invention increase a recording density in order to provide a large capacity enough to

deal with high-quality videos. As a result, when the conventional one ECC block = 16 sectors is applied, the length of a physical scratch decreases which can be corrected by the error correction. By constructing one ECC block using 32 sectors as in the case of the embodiments of the present invention, it is possible to increase the allowable length of a scratch in the surface of the information recording medium which can be corrected by the error correction. This also makes it possible to provide compatibility with the ECC block structure of the current DVD and to continue to use the current format.

(c) The same sector is divided into a plurality of parts. Different product codes (smaller ECC blocks) are provided for the respective divided parts.

As shown in FIG. 17, data sets of 172 bytes each from the sector data are alternately arranged on a left and right sides to obtain a right and left groups (the data belonging to each of the right and left groups are interleaved so as to be "nested"). Then, 32 sectors of the divided right and left groups are aggregated together to constitute a smaller ECC block. For example, "2-R" in FIG. 17 represents a sector number and a right and left group identification number (for example, the second right data) (L in FIG. 17 represents the left).

[Effects] The capability of correcting errors in the sector data is improved to make the recorded data more reliable.

For example, it is assumed that a track offset occurs during recording to inadvertently overwrite already recorded data, thus destroying one sector of data. In the embodiments of the present invention, to deal with the destroyed data in one sector, two smaller ECC blocks are used to carry out error corrections. Accordingly, the burden of the error corrections on one ECC block is reduced to ensure error corrections with an improved performance.

In the embodiments of the present invention, even after an ECC block has been formed, a data ID is placed at a head position of each sector. Thus, before an access, the position of data can be checked quickly.

(c11) The data in the same sector are interleaved (the small data sets of the same length into which the sector is divided are alternately belonged to the different groups). The groups are belonged to different smaller ECC blocks. [Effects] The embodiments of the present invention can provide a structure resistant to burst errors. For example, it is assumed that there is a long scratch extending in a circumferential direction of the information recording medium, thus precluding data of more than 172 bytes from being read. In this case, burst errors of more than 172 bytes are distributively arranged in two smaller ECC blocks. This reduces the burden of the error corrections on one ECC block to ensure error corrections with an improved performance.

D) The sectors constituting the ECC block are used to define plural types of sync frame structures. The present invention is characterized in that the sync frame structure is varied depending on whether the sector number of a sector constituting one ECC block is even or odd. [Effects] Since the data ID is placed at the head position of each sector even after an ECC block has been constructed, the position of the data can be checked quickly before an access.

(d11) The positions at which the POs are interleaved and inserted vary between the right and left groups (FIG. 18). [Effects] Since the data ID is placed at the head position of each sector even after an ECC block has been constructed, the position of the data can be checked quickly before an access.

E) A structure in which an ECC block is divided into segments. [Effects] This structure provides a high format compatibility between the reproduction-exclusive information recording medium and the additionally recordable information recording medium and the rewritable information recording medium.

Combination with L/G wobble modulation: this is suitable for zone layout (an ECC block cannot be accommodated within one round of a track).

F) A structure in which a header is placed between segments. [Effects] The reproduction-exclusive information recording medium, the additionally recordable information recording medium, and the rewritable information recording medium can be quickly and easily distinguished from one another.

(f11) The contents of the data are varied between the reproduction-exclusive information recording medium and the additionally recordable information recording medium and the rewritable information recording medium (this is utilized for the distinction).

(f12) A random signal is utilized for a DVD-ROM header. [Effects] In spite of a match in position between adjacent tracks, a DPD signal can be stably detected at the position of the DVD-ROM header.

G) Guard areas are recorded in a segment format for the recordable information recording medium so as to partly overlap each other. [Effects] When between segments, there is a gap (a part in which no recording marks are present) between a front and rear guard areas, a light reflectance changes at the gap from a macro viewpoint because the light reflectance changes depending on whether or not a recording mark is present. Thus, with the single-side 2-recording-layer structure, the gap disturbs information reproduction signals to frequently cause errors during reproduction. By arranging the guard areas so that they partly overlap each other as in the case of the present invention, it is possible to prevent the creation of a gap in which no recording marks are present. Further, the adverse effect of interlayer crosstalk from already recorded areas in the single-side two recording layers can be removed to provide stable reproduction signals.

H) Address information is arranged a plurality of times per segment. [Effects] A track offset during recording

can be quickly detected. If a track offset occurs while a recording mark is being recorded, already recorded areas may be overwritten to destroy already recorded information. If address information have been arranged n times per segment, the address information can ideally be detected n times while a reproducing light-condensed spot is passing through one segment area. Accordingly, the time required to reproduce one piece of address information decreases with increasing number of pieces of address information placed per segment. Even if a track offset occurs during recording to partly destroy already recorded information, the track offset can be quickly detected by arranging address information a plurality of times per segment as in the case of the present invention. Therefore, destroyed information can be interpolated by an error correcting process based on ECC blocks.

I) For address information (particularly segment address information), a method of applying address numbers is conditioned. [Effects] The frequency of polarity reversals in wobble symbols (address bits) is increased to allow the positions of the boundaries between the symbols (address bits) to be more accurately detected.

(i11) The address number starts with "1" instead of "0", which causes all bits to have the same value.

(i12) Address numbers having three or more consecutive "1s" or "0s" are eliminated.

J) Address information is recorded using L/G recording + wobble modulation. [Effects] The capacity can be maximized.

K) Undefined bits are distributively arranged in the lands and grooves using L/G recording + wobble modulation. [Effects] When all the undefined bits are arranged either in the lands or in the grooves, misdetections often occur when address information is reproduced from the part in which indefinite bits are arranged. By distributively arranging the indefinite bits in the lands and grooves, it is possible to distribute the risk of misdetections to provide a system that allows address information to be detected totally stably.

(k11) The width of the grooves is locally changed to form indefinite bits in the grooves.

(k12) The wobble amplitude of the grooves is locally changed to form indefinite bits in the grooves.

(L) A wobble phase modulation of 180° (±90° ) is employed for L/G recording. [Effects] When the track number of the groove is changed in connection with "L/G recording + wobble modulation of the grooves" to generate indefinite bits on the corresponding land, the general level of reproduction signals from the recording marks recorded on the land changes. Thus, disadvantageously, the rate of errors in the reproduction signals from the recording marks locally increases. However, when a phase modulation of 180° (±90° ) is used for the wobble modulation applied to the grooves as in the case of the present invention, the land width varies at the positions of the indefinite bits on the land, in the form of a laterally symmetrical sine wave. Consequently, a variation in the general level of reproduction signals from the recording marks takes a very simple shape similar to a sine wave. Moreover, if stable tracking is applied, the positions of the indefinite bits on the land can be predicted. Therefore, according to the embodiments of the present invention, a circuit is used to execute a correcting process on reproduction signals from the recording marks. This provides a structure that allows the quality of reproduction signals to be easily improved.

M) Gray codes are employed for track addresses.

[Effects] The frequency of generation of indefinite bits on the lands is reduced, the indefinite bits being generated by changes in the track number of the groove in connection with "L/G recording + wobble modulation of the grooves". The land width changes at the positions of the indefinite bits on the lands, in a laterally symmetrical form. As a result, no wobble detection signals are obtained from the positions of the indefinite bits on the lands. Furthermore, the general level of reproduction signals from the recording marks recorded on the lands changes. Thus, disadvantageously, the rate of errors in the reproduction signals from the recording marks is locally degraded. Thus, by reducing the frequency of generation of indefinite bits on the lands, it is possible to reduce the frequency of generation of problematic areas such as those described above. Moreover, wobble detection signals and reproduction signals from the recording marks can be stably reproduced.

N) Error detection codes having gray code characteristics are added to the gray codes. [Effects] 1. Since the error detection codes are added to the track address information, the accuracy with which the track address information is reproduced increases drastically. 2. Since the error detection codes have the gray code characteristics to reduce the number of indefinite bits in the land portions, the track address information in the land portions including error detection code areas can be more accurately reproduced and determined. To accomplish this, the techniques described below are used.

(n11) Wobble address placed areas 561 and 562 are each divided into an error correction unit 606 and error detection units 607 and 608. [Effects] Even with the mixture of indefinite bits, their adverse effect can be contained in one error detection unit to allow other data to be more accurately reproduced. Further, by using EDC information 613 and 614 to detect the positions of the indefinite bits, it is possible to determine the track number of an area into which indefinite bits have been mixed, on the basis of the combination of the EDC information and even number track/odd number track detection information.

O) The gray codes are simply scrambled using an exclusive OR calculating process. [Effects] The scrambled codes still meet gray code conditions. This makes it possible to suppress an increase in the number of indefinite bits in the land portions.

P) A shift reserved area is provided in a wobble address format to shift the position of the address information (this becomes effective through combination with other techniques).

Q) Each indefinite bit is misaligned with respect to the track address information for rearrangement (this becomes effective through combination with other techniques).

(q11) Within the same track, the relative positions of the indefinite bits are fixed regardless of the position of the segment.

(q12) Even within the same track, the relative positions of the indefinite bits vary depending on the position of the segment.

(q13) Even within the same track, the relative positions of the indefinite bits vary depending on the position of the segment.

(q14) The positions of the indefinite bits are varied by sequentially circulating higher bits of track number information A 611 and B 612.

R) The address information is scrambled.

[Effects] The frequency of wobble polarity reversals for each symbols (address bit) is increased to allow the positions of the boundaries between the symbols (address bits) to be more accurately detected.

(r11) The scrambling is executed utilizing a segment number as a seed.

(r111) The data pattern of a target to be exclusive-ORed is varied utilizing an M sequence variation.

(r112) The data pattern of a target to be exclusive-ORed is fixed.

(r12) A scrambled pattern is varied between the track number information A 611 and the track number information B 612 by scrambling the information while varying the scramble M sequence.

(r13) The scramble seed is changed between two address areas within the same segment.

(r131) Two types of seeds for a front and rear addresses are provided and fixed seeds are used everywhere on the disk.

(r132) Both segment address information and wobble address number information are used as seeds.

S) The contents of the pattern are changed between two address areas within the same segment. [Effects] The frequency of polarity reversals in wobble symbols (address bits) increases to allow the positions of the boundaries between the symbols (address bits) to be more accurately detected.

(s11) A bit reversing process is executed on two address areas within the same segment.

T) Even number/odd number identification information for the track numbers is placed in the area between segments. [Effects] The even number/odd number identification information is located outside recording information areas formed by the recording marks. Accordingly, the even number/odd number identification information does not affect reproduction signals from the recording marks. To accomplish this, the techniques described below are used.

(t11) The even number/odd number identification information is physically placed. [Effects] Detections can be accomplished accurately and quickly.

(t12) The grooves are locally severed. [Effects] This improves manufacturability and yield, thus reducing the price of the product. The use of one beam recording enables the use of an inexpensive general-purpose master recording apparatus.

(t13) Prepits are arranged in the land portions.

(t14) The grooves are locally markedly wobbled (this technique includes "groove severing + land prepits"). [Effects] This improves manufacturability and yield, thus reducing the price of the product. The use of the one beam recording enables the use of an inexpensive general-purpose master recording apparatus. It is possible to sharply reduce interlayer crosstalk from already recorded areas in single-side two recording layers (the adverse effect from the other recording layer on reproduction signals during reproduction of information).

U) By enabling even or odd track numbers to be sensed and improving the gray codes, it is possible to define the addresses in spite of the presence of indefinite bits. [Effects] The addresses can be accurately defined regardless of the results of determinations based on the indefinite bits.

V) Even the track addresses of the lands can be defined by using the track number information A/B (611/612) to shift the address numbers and utilizing special track codes. [Effects] This technique allows even the land portions to have areas which do not contain any indefinite bits and which allow the track addresses to be defined. This enables even the addresses of the land portions to be accurately determined. To accomplish this, the techniques described below are used.

(v11) The track number is incremented zigzag. The land area between the same track numbers is defined to have this track number. The track number of the land area between different track numbers is determined using means for determining whether the track number is even or odd.

W) Undefined bits are distributively arranged also in the groove areas. [Effects] This technique allows even the land portions to have areas which do not contain any indefinite bits and which allow the track addresses to be defined. This enables even the addresses of the land portions to be accurately determined. It is possible to predict areas in the land portions and groove portions which do not contain any indefinite bits and which allow the track addresses to be defined. This allows the track address to be more accurately detected.

(wy11) When the grooves are created, the groove width is locally changed to create areas with a fixed land width.

(w12) The wobble amplitude in the grooves is changed to arrange the indefinite bits in the groove areas.

X) Zone identification information and segment address information are arranged in each segment. The track address is placed in the header area between the segments. [Effects] 1. All information is recorded by wobble modulation, thus preventing reproduction signals from having a discontinuous part in a prepit header portion as in the case of the current DVD-RAM. As a result, data can be stably reproduced from the recording marks. 2. Compared to the current DVD-RAM, the zone identification information and the segment address information are arranged in each segment (recording marks can be recorded in the same place so as to overlap each other). This allows recording to be more efficiently carried out to enable an increase in capacity. 3. The track address is placed in the header area between the segments. Accordingly, the indefinite bit positions on the lands are not present in the segment area. This prevents an increase in error rate during reproduction from the recording marks. To accomplish this, the techniques described below are used.

(x11) The track address is distributively recorded across a plurality of header areas.

A detailed description will be given of the data format of a ZCLV system-based information recording medium according to the embodiments of the present invention and various wobble address systems suitable for the data format.

1] Data Structure Portions Common to Reproduction-Exclusive Information Recording Medium (Next-Generation DVD-ROM), Additionally Recordable Information Recording Medium (Next-Generation DVD-R), and Rewritable Information Recording Medium (Next-Generation DVD-RAM) according to Present Invention

As shown in FIG. 10, data recorded in data fields of the information recording medium are called data frames, scrambled frames, or recording frames or recorded data fields depending on a signal processing stage. The data frame is composed of 2,048 bytes and has main data, a 4-byte data ID, a 2-byte ID error detection code (IED), a 6-byte reserved byte, and a 4-byte error detection code (EDC). An adding section 68 (see FIG. 2) adds the data ID, the IED, and the EDC to the main data.

After addition of the error detection code (EDC), the main data is scrambled. Then, a cross Reed-Solomon error correction code is applied to the scrambled 32 data frames (scrambled frames) to execute what is called an ECC encode process. This allows the recording frames to be constructed. The recording frames contain the parity of outer-code (PO) and the parity of inner-code (PI).

Each of the PO and PI is an error correction code composed of 32 scrambled frames and created for an ECC block.

The recorded data fields are subjected to a 4/6 modulation. Synchronous codes (SYNC) are added to the recorded data fields at intervals of 91 bytes to constitute the recording frames. Four recorded data fields are recorded in one data field.

FIG. 10 shows how data changes from main data to recording frames. FIG. 11 shows the form of a data frame. The data frame has 2,064 bytes composed of 172 bytes $\times$ 2 $\times$ 6 rows and including the 2,048-byte main data.

FIG. 12 shows a data ID composed of 4 bytes. A first 1 byte composed of bits b31 to b24 is data field information. The next 3 bytes (bits b23 to b0) are a data field number.

The data field information in an embossed data zone is as descried below. The data field information contains a sector format type, a tracking method, reflectance, a recording type, an area type, a data type, a layer number, and the like.

Sector format type: 1b indicates a zone format type, the tracking method: 0b indicates a pit tracking, reflectance: 1b indicates at most 40%, recording type: 0b indicates a general type, whereas 1b indicates real-time information (different methods of defect management are used for 0b and for 1b), area type: 01b indicates a lead-in area, data type: 0b indicates read only data, layer number: 0b indicates a dual layer 0 or a single layer disk, whereas 1b indicates a dual layer 1.

The data field information in a rewritable data zone will be described below.

Sector format type: 1b indicates a zone format type, the tracking method: 1b indicates a groove tracking, reflectance: 1b indicates at most 40%, recording type: 0b indicates a general type, whereas 1b indicates real-time information (different methods of defect management are used for 0b and for 1b), area type: 00b indicates a data area, data type: 1b indicates rewritable data, layer number: 0b indicates a dual layer 0 or a single layer disk, whereas 1b indicates a dual layer 1. These bits must also be assigned in accordance with the above rules.

FIG. 13 shows the contents of the described data field number. If the ECC block belongs to an embossed data zone, a defect management area, or a disk identification zone, a sector number is recorded in any case. If the ECC block belongs to a data area, the data field number is a "logical sector number (LSN) + 031000h". In this case, the ECC block contains user data.

Further, the ECC block may belong to a data area but contain no user data, that is, may be unused. This corresponds to any of the three cases described below. (1) In the first sector, three bits starting with a bit 0 are 0. In each of the subsequent sectors, a serially incremented field number is described. (2) A field number between 00 0000h and 00 000Fh is described. (3) Nothing is described.

FIG. 14 shows the definitions of recording types.

That is, the ECC block is "reserved" when present in an embossed data zone. The ECC block is "reserved" when present in a rewritable zone and in a lead-in and lead-out areas. When the ECC block is present in a rewritable data zone and in a data area, 0b indicates general data, whereas 1b indicates real-time data. For the general data, if the block is defective, a linear replacement algorithm is applied to the corresponding sector. For the real-time data, if the block is defective, the linear replacement algorithm is not applied to the corresponding sector.

Now, the error detection code (IED) will be described.

When each of the bytes arranged in a matrix is defined as Ci, j (i=0 to 11, i= 0 to 171) and each byte for the IED is defined as C0, j (j=0 to 4), the IED is expressed as follows:

$$IED(X) = \sum_{j=4}^{5} C_{0,j} \cdot X^{5-j}$$
$$= \{I(X) \cdot X^2\} \bmod \{G_E(X)\}$$

In this case, the following equations are established:

$$I(X) = \sum_{j=0}^{3} C_{0,j} \cdot X^{3-j}$$

$$G_E(X) = \prod_{k=0}^{1} (X + \alpha^k)$$

where $\alpha$ represents the primitive root of the primitive polynomial.

$$P(x)=x^8 +x^4 +x^3 +x^2 +1$$

The RSV is 6 bytes and the first byte is used as seed information for scrambling. The other five bytes are 0h and are reserved.

The error detection code (EDC) is a 4-byte check code and accompanies 2,060 bytes in the unscrambled data frame. It is assumed that the MSB of the first byte of the data ID is b16511, while the LSB of the last byte is b0. Then, each bit bi (i=31 to 0) for the EDC is expressed as follows:

$$EDC(x) = \sum_{i=31}^{0} b_i x^i$$
$$= I(x) \bmod \{g(x)\}$$

In this case, the following equations are established:

$$I(x) = \sum_{i=16511}^{32} b_i x^i$$

$$g(x) = x^{32} + x^{31} + x^4 + 1$$

FIG. 15A shows an example of initial values provided to a feedback shift register when a scrambled frame is to be created. FIG. 15B shows the feedback shift register, which is used to create a scrambled byte. Sixteen types of preset values are prepared.

Eight bits from r7 (MSB) to r0 (LSB) are shifted and used as a scramble byte. Each initial preset number in FIG. 15A is equal to 4 bits (b7 (MSB) to b4 (LSB)) of the data ID. When scrambling of the data frame is started, the initial value in r14 to r0 must be set to any of the initial preset values in the table shown in FIG. 15A, on the basis of the 4 bits of the data ID.

The same initial preset value is used for 16 consecutive data frames. Then, the initial preset value is switched and the same switched preset value is used for the next 16 consecutive data frames.

The lower 8 bits r7 to r0 of the initial value is extracted as a scrambled byte S0. Subsequently, the 8 bits are shifted and a scramble byte S1 is then extracted. Such an operation is repeated 2,047 times. Once scramble bytes S0 to S2,047 are extracted from r7 to r0, the data frame changes from a main byte Dk to a scrambled byte D'k. The scrambled byte D'k is expressed as follows:

D'k = Dk • Sk for k = 0 to 2047

where • means Exclusive-OR logical operation.

Now, the configuration of an ECC block will be described. (B) (C)

FIG. 16 shows an ECC block. The ECC block is formed of 32 consecutive scrambled frames. In a vertical direction, 192 rows + 16 rows are arranged. In a horizontal direction, (172 + 10) × 2 columns are arranged. "B0, 0", B1, 0", ... are each 1 byte. PO and PI denote error correction codes and mean an outer parity and an inner parity, respectively.

In the ECC block in FIG. 16, a (6 rows × 172 bytes) unit is treated as one scrambled frame. FIG. 17 shows the ECC block redrawn as an arrangement of scrambled frames. That is, the ECC block is composed of 32 consecutive scrambled frames. Moreover, this system treats the ECC block as a pair of (block 182 bytes × 207 bytes). When each of the scrambled frames in the left ECC block is denoted by L, while each of the scrambled frames in the right ECC block is denoted by R, the scrambled frames are arranged as shown in FIG. 17. Specifically, left and right scrambled frames are alternately present in the left block, whereas right and left scrambled frames are alternately present in the right block.

That is, the ECC block is composed of 32 consecutive scrambled frames. The left half of each row of odd-number sector is replaced with the right half. Further, 172 bytes × 2 × 192 rows is equal to 172 bytes × 12 rows × 32 scrambled frames and constitutes an information field. The 16-byte PO is added to each of the two 172-byte columns to form an outer code for the RS (208, 192, 17). Furthermore, the 10-byte PI (RS(182, 172, 11)) is added to each of the two 208-byte rows in the left and right blocks.

The number in each scrambled frame denotes a scrambled frame number. The suffixes R and L denote the right and left halves, respectively, of the scrambled frame. The PO and PI, shown in FIG. 16, are generated using the procedure described below.

First, a 16-byte Bi, j (i = 192 to 207) is added to a column j (j = 0 to 171 and j = 182 to 353). The Bi, j is defined by a polynomial Rj(X), shown below. The polynomial Rj(X) forms the outer code RS(208, 192, 17) for each of the two 172-byte columns.

$$R_j(X) = \sum_{i=192}^{207} B_{i,j} \cdot X^{207-i}$$
$$= \{I_j(X) \cdot X^{16}\} \bmod \{G_{PO}(X)\}$$

In this case, the following equations are established:

$$I_{j,k}(X) = \sum_{i=0}^{191} B'_{m,n} \cdot X^{191-i}$$

$$G_{PO}(X) = \prod_{k=0}^{15} (X + \alpha^k)$$

Then, a 10-byte Bi, j (j = 172 to 181, j = 354 to 363) is added to a row i (i = 0 to 207). The Bi, j is defined by a polynomial Ri(X), shown below. The polynomial Ri(X) forms the outer code RS(182, 172, 11) for each (208 × 2) / 2-byte row (For j = 172 to 181).

$$R_i(X) = \sum_{j=172}^{181} B_{i,j} \cdot X^{181-j}$$
$$= \{I_i(X) \cdot X^{10}\} \bmod \{G_{PI}(X)\}$$

In this case, the following equations are established:

$$I_i(X) = \sum_{j=0}^{171} B_{i,j} \cdot X^{171-j}$$

$$G_{PI}(X) = \prod_{k=0}^{9} (X + \alpha^k)$$

(For j = 354 to 363)

$$R_i(X) = \sum_{j=354}^{363} B_{i,j} \cdot X^{363-j}$$
$$= \{I_i(X) \cdot X^{10}\} \bmod \{G_{PI}(X)\}$$

In this case, the following equations are established:

$$I_i(X) = \sum_{j=182}^{353} B_{i,j} \cdot X^{353-j}$$

$$G_{PI}(X) = \prod_{k=0}^{9} (X + \alpha^k)$$

where $\alpha$ represents the primitive root of the primitive polynomial.

$$P(x) = x^8 + x^4 + x^3 + x^2 + 1$$

The elements Bi, j of each B matrix in FIG. 16 constitute 208 rows × 182 × 2 rows. In the B matrix, the rows are interleaved so that the elements Bi, j are rearranged into elements Bm, n. Rules for the interleaving are expressed by the following equations:

$$m = i + \lfloor (i + 6) / 12 \rfloor *$$

n=j [when i ≦ 191, j ≦ 181]

$$m = (i - 191) \times 13 - 7$$

n=j [when i ≧ 192, j ≧ 181]

$$m = i + \lfloor i / 12 \rfloor *$$

n=j [when i ≦ 191, j ≦ 182]

$$m = (i - 191) \times 13 - 1$$

n=j [when i ≧ 192, j ≧ 182]

where *$\lfloor p \rfloor$ means a maximum integer that is smaller than p.

As a result, as shown in FIG. 18, the 16 parity rows (composed of the PO and PI) are individually distributed. Specifically, a data layout partial exchanging section 63 (see FIG. 2) places each of the 16 parity rows at intervals of two recording frames. Accordingly, a recording frame previously composed of 12 rows is now composed of 12 + 1 rows. After the row interleaving, 13 rows × 182 bytes is referenced as a recording frame. Consequently, after the row interleaving, the ECC block is composed of 32 recording frames. Each recording frame contains a total of 6 rows from the right and left sides of the frame as described in FIG. 17. Further, the POs are arranged at different rows for the left block (182 × 208 bytes) and for the right block (182 × 208 bytes). The figure shows the ECC block as one complete ECC block. However, during actual data reproduction, such ECC blocks arrive consecutively at the error correcting section. To improve the correcting capability of such an error correcting process, an interleave system such as the one shown in FIG. 18 is employed. An ECC encoding circuit 61 (see FIG. 2) executes such an interleave process and an error correcting process.

Now, the configuration of the recorded data field (point D) will be described.

A modulating circuit 51 (see FIG. 2) continuously modulates a recording frame of 13 rows × 182 bytes (2,366 bytes). A data synthesizing section 44 then adds two synchronous codes to the modulated recording frame. One of the synchronous codes is additionally placed in front of the zero-th column. The other synchronous code is additionally placed in front of the ninety-first column. When a recorded data field is started, the synchronous code SY0 is in a state 1 (shown in FIG. 20). The recorded data field is composed of 13 sets × 2 sync frames as shown in FIG. 19. One recorded data field of 29,016 channel bit length is equivalent to 2,418 bytes before modulation.

In FIG. 19, SY0 to SY3 denote synchronous codes (SYNC) selected from the codes shown in FIG. 20. The numbers 24 and 1,092, described in FIG. 19, indicate channel bit lengths.

In FIG. 19, for both even recorded data field and odd recorded data field, the PO (Parity Out) information is inserted into the sync data area in the last two sync frames (that is, the last sync frame having a SYNC code SY3 and the succeeding sync frame having a SYNC code SY1).

A "part of the left PO" shown in FIG. 17 is inserted into the last two sync frames in the even recorded data field. A "part of the right PO" shown in FIG. 17 is inserted into the last two sync frames in the odd recorded data field. As shown in FIG. 17, one ECC block is composed of a left and right "smaller ECC blocks". Data from the different PO groups (the PO belonging to the left smaller ECC block and the PO belonging to the right smaller ECC block) are alternately inserted for each sector.

FIG. 19A shows the left data field in which synchronous codes SY3 and SY1 are consecutive. FIG. 19B shows the right data field in which synchronous codes SY3 and SY1 are consecutive.

FIG. 21 shows a diagram illustrating the data structure of a lead-in area in the reproduction-exclusive information recording medium according to the present invention.

2] First Embodiment (A) of Reproduction-Exclusive Information Recording Medium according to Present Invention

The present invention allows two types of data structures for data recorded on the reproduction-exclusive information recording medium (next-generation DVD-ROM). A contents provider can select either of the two data structures in accordance with the contents of the data.

2-1) Description of Data Structure in First Embodiment of Reproduction-Exclusive Information Recording Medium (Next-Generation DVD-ROM) according to Present Invention

The present invention is characterized in that data that can be or is recorded on the information recording medium has a first data unit (ECC block), the first data block being composed of second data units (segments), the second data unit being composed of third data units (sector), the third data unit being composed of fourth data units (sync data), and that data errors can be detected or corrected within the first data unit.

That is, in the embodiments of the present invention, the data recorded on the information recording medium has data units and a hierarchical structure such as those shown in FIG. 22 regardless of the type of the information recording medium (reproduction-exclusive/additionally recordable/rewritable). The most fundamental characteristic of the present invention is that one ECC block 401, the largest data unit in which data errors can be detected or corrected, is divided into eight segments 411 to 418 [this corresponds to Inventive Point (E)]. Each of the segments 411 to 418 is composed of four sectors 230 to 233 or 234 to 238. As already described in FIGS. 19 and 18 and shown again in FIG. 22, each of the sectors 230 to 241 is composed of 26 sync frames #0 420 to #25 429. One sync frame is composed of a sync code 431 and a sync code 432, shown in FIG. 20. One sync frame contains 1,116 channel bits (24 + 1,092) of data as shown in FIG. 19. A sync frame length 433 that is a physical distance on an information recording medium 221 over which one sync frame is recorded is fixed everywhere (provided that a variation in physical distance owing to intra-zone synchronization is excluded).

The present invention is also characterized in that the reproduction-exclusive information recording medium allows plural types of recording formats to be set [this corresponds to Inventive Point (A)]. Specifically, there are two types of recording formats shown in a first and second embodiments of the reproduction-exclusive information recording medium. FIG. 23 shows differences between the first and second embodiments of the reproduction-exclusive information recording medium according to the present invention. FIG. 23A shows the first embodiment. Segments #1 411 to #8 418 are physically consecutively recorded on the information recording medium 221 so as not to have any gap between the segments. On the other hand, in the second embodiment, header areas #1 441 to #8 448 are each inserted between corresponding two of the segments #1 411 to #8 418 [this corresponds to Inventive Point (F)]. The physical length of each header area #1 441 to #8 448 is equal to the sync frame length 433.

The physical distance of data recorded on the information recording medium 221 is based on the sync frame length 433. Accordingly, making the physical length of each of the header areas #1 441 to #8 448 equal to the sync frame length 433 is effective in facilitating the management of the physical layout of data recorded on the information recording medium 221 and the control of accesses to data.

2-2) Parts Common to Second Embodiment of Reproduction-Exclusive Information Recording Medium (Next-Generation DVD-ROM) according to Present Invention

The data structure is such that no gaps are created between the lead-in and lead-out parts. [Effects] If the data structure varies all over the information recording medium, when a reproducing apparatus starts reproducing data from the information recording medium for the first time, it cannot decide which data structure it should use. Consequently, an unnecessarily long time is required to start reproduction. When a common data structure is used for a part (the lead-in and lead-out parts) of the information recording medium, this part is first accessed upon activation (when an information reproducing apparatus or an information recording and reproducing apparatus starts reproduction immediately after the installation of the information recording medium) to enable the minimum required information to be reproduced using the same format. Consequently, reproduction can be stably and quickly started upon activation.

2-3) Place in which Identification Information for Two Types of Formats is Recorded (this corresponds to Inventive Point (A)]

(2-311) A common format is used within the same disk (the format cannot be changed within the same disk).

Alternative embodiments are as follows:

(2-312) Two formats can be mixed together within the same disk in accordance with recorded contents.

(2-313) Format identification flag information (including a part of the second proposal) for a DVD-ROM is recorded on a disk.

(2-321) The format identification flag information is recorded in the common format area (in a control data zone, shown in FIG. 21).

(2-322) The format identification flag information is recorded in a recordable area. For a rewritable information recording medium, the identification flag is provided in a disk identification zone in a rewritable data zone.

3] Second Embodiment of Reproduction-Exclusive Information Recording Medium (Next-Generation DVD-ROM) according to Present Invention

3-1) Description of Structure in which "ROM Header" Is Placed between Segments

The recording format shown in the second embodiment of the reproduction-exclusive information recording medium according to the present invention is configured so that each of the header areas #1 441 to #8 448 is inserted between the corresponding two of the segments #1 411 to #8 418 as described above and shown in FIG. 23B [this corresponds to Inventive Point (A)].

3-2) Description of Concrete Data Structure of "ROM Header" in a Second Embodiment [this corresponds to Inventive Point (F)]In a reproducing operation performed on a conventional ROM medium, an error correction block containing a request data block must first be read: Then, the position at which a specified block is expected to be present with respect to the current position is calculated and predicted from a difference in block number or the like. Then, a seek operation is started. After the seek operation has proceeded to the predicted specified position, a read clock is extracted from information data. Then, channel bit synchronization, detection of a frame synchronization signal, and symbol synchronization are executed to read symbol data. A block number is subsequently detected to confirm that this is the specified block. That is, in reproduction from common ROM media, only RF signals based on information pits are used as detection signals. Accordingly, the RF signals are responsible for all of the control of disk rotations, an information line speed, and the generation of a channel bit read clock that is a data read clock. In recording and reproducing media, address information or the like, which is of interest to the present invention, is present in a signal form different from that of data information in order to specify a recorded place. Accordingly, a channel bit clock generation PLL or the like can use such signals to detect the line speed or the like. It is thus possible to perform control so as to place the oscillating frequency of the PLL close to the correct channel bit clock frequency. Thus, an optimum system can be provided which can not only reduce the lockup time of the PLL but also prevent runaway. However, ROM media fail to allow the use of such signals and thus similar control systems. Consequently, systems have been constructed which, for example, utilize a maximum code length (Tmax) or minimim code length (Tmin) signal in information signals. That is, for the ROM media, it is important to lock the PLL as early as possible. It has thus been desired to provide a signal form that serves to accomplish this object. However, for the ROM media for existing CDs or DVDs, a data/track structure is determined by focusing only on the recording density and subsequently constructing the data/track structure of the recording and reproducing medium. As a result, a data stream and the like vary with the media.

Introduction of a measure to improve the recording density has been considered in order to develop a recording system for the next-generation media while allowing similar data streams to be used among the recording and reproducing media such as the ROM media and R/RAM. One technique to improve the recording density is to improve a modulation efficiency. The introduction of a new modulating system has been considered which reduces the minimum bit length (Tmin) with respect to a recording and reproducing beam diameter. When the minimum bit length is reduced with respect to the beam diameter, a signal amplitude cannot be controlled. Further, it is difficult to detect the phase of a channel bit clock generating PLL that executes channel bit separation even though data reads can be carried out using a PPML technique or the like. The introduction of the technique to increase the density makes it more difficult to facilitate the locking of the PLL in the MOM media relying only on pit signals as described above. Accordingly, high-speed seeks also become difficult and auxiliary signals must be inserted in order to achieve the seek.

The recording format shown in the second embodiment of the reproduction-exclusive information recording medium according to the present invention is configured so that even for the ROM media, each of the header areas #1 441 to #8 448 is inserted between the corresponding two of the segments #1 411 to #8 418 as described above and shown in FIG. 23B. Further, a signal required to facilitate seeks and locking of the channel bit clock generating PLL is inserted into each header area. This allows the realization of control similar to that performed for a reproducing process in recordable media.

FIG. 41 is a diagram showing an embodiment of the header area in a ROM medium. The header area is composed of a header sync 1001 and a specific code 1002. The header sync is composed of a repetition of channel bit lengths each larger than the Tmax in the information signal. The specific code is composed of an error correction ECC block number, a segment number (Segment-No), a copyright protection signal, and other control information signals. The Tmax signal, used for a frame synchronous signal for the information data, has its code length determined taking the capabilities of channel bit synchronization and symbol synchronization into account. However, the synchronous signal in the segment header area undergoes few such restrictions. Accordingly, provided that during a seek operation for a variable-speed reproduction, the synchronous signal allows the detection of a signal form different from those in the other information data areas, it allows the line speed or the like to be predicted. This makes it possible to perform control so as to place the oscillating frequency of the channel bit clock generating PLL close to the channel bit clock frequency even if the oscillating frequency is running away. A specific method may be to construct a plurality of signals each having a code length larger than that of the Tmax signal inserted into the frame synchronous signal.

A special control signal not provided in the data areas can be placed in the specific code. The special control signal includes, for example, a copyright protection signal or a medium-specific information signal. Provision of such a special information area enables the system to be expanded.

FIG. 42 is a diagram showing another embodiment. The header area is composed of a header sync 1001 and a random code 1003. A random signal is placed in the specific code area, shown in FIG. 41, so as to facilitate the locking of the channel bit clock generating PLL. In a recording medium such as the conventional DVD-RAM, a signal (VFO) of a repetition of fixed code lengths is inserted to allow the PLL to be easily locked. The ROM media are likely to employ a method of detecting a phase difference as a method of detecting a tracking error signal. With the method of detecting a phase difference, if a track adjacent to a target track has a signal pattern similar to that of the target track, crosstalk from the adjacent track prevents tracking errors from being detected. Thus, it is problematic to employ the VFO signal, composed of a signal of a fixed period used in the recording media and the like. On the other hand, if a PRML system or the like is used to increase the recording density, the minimum code length is likely to make it difficult to detect a phase difference using the channel bit clock generating PLL. Naturally enough, in connection with the facilitation of locking of the phase of the PLL, a detection sensitivity increases consistently with the number of phase detections. This must thus be taken into account. Accordingly, the random code part shown in FIG. 42 uses a random signal composed of the combination of limited code lengths free from a shortest-pit part of the code length which is not reliable in terms of PLL phase detections and a longest-pit part of the code length which reduces the number of detections. That is, the random signal is composed of codes having limited run lengths.

The specific code shown in FIG. 41 may also be scrambled using a random signal from a random number generator for which an initial value is specified using a segment number. In this case, when scramble data is modulated into a recording signal, a modulation table is desirably deformed to provide a recording signal stream having limited run lengths. Such a process makes it possible to prevent adjacent track patterns from being equal in the specific code area as in the case of the scramble processing function used for the data area in the current DVD-ROMs.

4] Description of Format Relationship between Recordable Information Recording Medium and Reproduction-Exclusive Information Recording Medium (Next-Generation DVD-ROM) according to Present Invention

With reference to FIG. 24, description will be given to the recording format (format) relationship between the recordable information recording medium and reproduction-exclusive information recording medium (next-generation DVD-ROM) according to the present invention. FIGS. 24A and 24B are copies of the first and second embodiments of the reproduction-exclusive information recording medium shown in FIG. 23.
Similarly to the second embodiment of the reproduction-exclusive information recording medium, the recordable information recording medium has header areas each provided between the corresponding two of the segments #1 411 to #8 418; the length of the header area is equal to the sync frame length 433. However, different data (recording mark) patters are recorded in the header areas of the reproduction-exclusive information recording medium and in the header areas #2 452 to #8 448 of the additionally recordable information recording medium shown in FIG. 24C. Likewise, different data (recording mark) patters are recorded in the header areas #2 442 to #8 448 of the reproduction-exclusive information recording medium shown in FIG. 24B and in the header areas #2 462 to #8 468 of the rewritable information recording medium shown in FIG. 24D. This enables the type of the information recording medium 221 to be determined.

A method of utilizing the header areas of the reproduction-exclusive information recording medium has already been described in [5]. However, with reference to FIGS. 24B, 24C, and 24D, description will be given of a method of utilizing the header areas of the reproduction-exclusive information recording medium and recordable information recording medium on the basis of the difference between these media. The additionally recordable information recording medium shown herein is a write once type recording medium on which a recording operation is performed only once. The term "additionally recordable information recording medium" is used in FIG. 24 for the following reason: a continuous printing process is normally executed, but if recording is executed in particular blocks, an additional writing system is used to consecutively record data in two adjacent data blocks.

Before describing the difference in the header structure between the media, description will be given of the difference in a data stream between the reproduction-exclusive information recording medium and a recording and reproducing medium. In the reproduction-exclusive information recording medium, a specified relationship is established between channel bits and symbol data in all the data blocks including the header areas. However, in the additionally recordable information recording medium, at least the phase of the channel bit changes in the area between blocks as well as an area corresponding to the stoppage of the recording operation. In the rewritable information recording medium, the phase is likely vary with the segments. That is, in the reproduction-exclusive medium, the channel bit phase remains unchanged from beginning to end, whereas in the recording type medium, the channel bit phase changes significantly in the header area.

On the other hand, in the recording type medium, recording track grooves are physically formed as recording tracks and wobbled in order to control a recording rate or allow the insertion of addressing information. Accordingly,

the oscillating frequency of the channel bit clock generating PLL can be controlled and prevented from running away even during a processing operation such as a variable-speed reproduction. However, after recording has been completed, the additionally recordable information recording medium is used exclusively for reproduction. Thus, to deal with the case in which the phase difference system is introduced as a method of detecting a tracking errors as described in [5], it is desirable to avoid having the same recording signal pattern in adjacent tracks. In the rewritable information recording medium, if the phase difference system is not used as a method of detecting a tracking errors, no problems generally occur even with the same information signal pattern in the adjacent tracks. Accordingly, the header area desirably has a structure in which the channel clock generating PLL can be easily locked, that is, the random code area shown in FIG. 42 desirably has a signal of a fixed period such as a VFO.

Since the different types of media have respective properties, data structures optimized taking the properties of the media into account are introduced into the header areas 442 in FIG. 24B, header areas 452 in FIG. 24C, and header areas 462 in FIG. 24D, respectively.

Each header area of the reproduction-exclusive information recording medium is composed of a pattern that facilitates the detection of the line speed and a signal the facilitates the locking of the channel bit generating PLL based on a random signal.

Each header area of the additionally recordable information recording medium is composed of a signal the facilitates the locking of the channel bit generating PLL based on a random signal so as to deal with a variation in the phase in the header area because wobbling detection prevents the oscillating frequency of the channel bit clock generating PLL from running away and because control is performed so as to place the oscillating frequency close to the channel bit clock frequency.

Each header area of the rewritable information recording medium allows a VFO pattern of a fixed period to be introduced to facilitate the locking of the PLL and comprises a header mark signal and the like.

By varying the header area with the types of information recording media, it is possible to easily identify the media. Further, since the reproduction-exclusive medium has header areas different from those of the recordable medium, the protecting capability of a copyright protection system is improved.

5] Description of Technical Characteristics Common to Embodiments of Rewritable Information Recording Medium according to Present Invention

5-1) Description of Zone Structure

The rewritable information recording medium according to the present invention has a zone structure as shown in FIG. 25.

In the present invention, the rewritable information recording medium has:

Reproduction line speed: 5.6 m/s
Channel length: 0.086 μm
Track pitch: 0.34 μm
Channel frequency: 64.8 MHz
Recorded data (RF signal): (1,7)RLL
Wobble carrier frequency: about 700 kHz (93T/Wobble)
Modulation phase difference [deg]: ±90.0
Segment/track: 12 to 29 segments
Zone: About 18 zones.

5-2) Description of Recording Form for Address Information according to Embodiments of Present Invention

In the present invention, address information is prerecorded on the recording type information recording medium using wobble modulation. As a wobble modulating system, a phase modulation of ±90° (180° ) is used, and an NRZ (Non Return to Zero) method is also employed. Further, an L/G (Land and Groove) recording method is used for the rewritable information recording medium. A major characteristic of the embodiments of the present invention is that the wobble modulating system is employed with the L/G recording method. A specific description will be given with reference to FIG. 26. In the embodiments of the present invention, 1 address bit (also referred to as an address symbol) area 511 is expressed using 8 or 12 wobbles. The frequency, the amplitude, and the phase are the same everywhere within the 1 address bit area 511. If consecutive address bits have the same value, the phase remains unchanged a boundary (denoted by a "hatched triangle" in FIG. 26) of the 1 address bit area 511. If the address bit is reversed, the wobble pattern is reversed (the phase is shifted through 180° ).

5-3)Description of L/G Recording Method and Mixture of Undefined Bits Caused by Wobble Modulation

As information indicating addresses on the information recording medium 221, the rewritable information recording medium according to the present invention has three types of address information, that is, zone number information that is zone identification information, segment number information that is segment address information, and track number information that is track address information. The segment number means a number within a round, and the track number is a number within a zone. If the zone structure shown in FIG. 25 is employed, adjacent tracks have the same value for the zone identification information and the segment address information. However, the adjacent tracks have difference values for the track address information.

It is assumed that as shown in FIG. 27A, "... 0110 ..." is recorded in a groove area 501 as track address information, whereas "... 0010 ..." is recorded in a groove area 502 as track address information. In this case, a land area 504 sandwiched between adjacent groove areas of "1" and "0" has a periodically varying land width. Accordingly, wobble-based address bits are undefined. The reason will be described below in brief. A laser beam reflected by the disk is detected by a photo detector PD composed of four photo detecting cells Sa, Sb, Sc, and Sd such as those shown in FIG. 27. If detection outputs from the respective detecting sections are denoted by A to D, a wobble address signal is generated as a difference signal "A+B-(C+D)". Accordingly, as shown in FIG. 27B, in the land area 504, the amplitude of the wobble address signal is indefinite or decreases, thus preventing the address bits from being defined.

In the present invention, this area is called an "indefinite bit area 504". When a condensed spot passes through the indefinite bit area 504, the land width varies periodically. Consequently, the total quantity of light reflected by this area and returning to it after passing through an objective (not shown) varies periodically. Since recording marks are formed in the indefinite area 504 in the land, reproduction signals from the recording marks are periodically varied by the above effect. This disadvantageously degrades a reproduction signal detection characteristic (degrade the rate of errors in reproduction signals).

5-4) Description of Contents of Gray Codes and Special Track Codes (according to Present Invention) Employed for Embodiments of Present Invention

In order to reduce the incidence of the indefinite bit 504 area, the present invention improves already known "gray codes" or the previously described gray codes and use special track codes newly proposed by the present invention (this constitutes an inventive point) [this corresponds to Inventive Point (M)].

FIG. 28 shows the gray codes. The gray codes are characterized in that "only 1 bit changes" every time a decimal value changes by "1" (in a reflected binary manner).

FIG. 29 shows the special track codes newly proposed by the present invention. The special track codes are characterized in that "only 1 bit changes" every time the decimal value changes by "2" (track numbers m and m+2 has a reflected binary relationship) and that only the most significant bit changes between 2n and 2n+1 (n is an integral value), while the other lower bits are the same. The special track codes according to the present invention are not limited to the above embodiment. The scope of the embodiments of the present invention is met by setting codes characterized in that "only 1 bit changes" every time the decimal value changes by "2" (the track numbers m and m+2 has a reflected binary relationship) and that the address bit varies with a particular relationship maintained between 2n and 2n+1.

6] Description of Embodiment of Wobble Address Format Arrangement

6-1) Description of Embodiment of Segment Format

FIG. 30 shows a recording format for rewritable data to be recorded on the rewritable information recording medium. FIG. 30A shows the same contents as those of FIG. 24A, previously described. In the embodiment of the present invention, rewritable data is rewritten for each segment. FIGS. 30B to 30D show the structure of rewritable data in a rewritable unit. Data that is rewritable on the information recording medium is rewritten using a rewrite unit 531 for the information in a segment #2. The data contents of rewritable data 525 in the segment #2 have the same format of data structure regardless of the types of media such as the reproduction-exclusive information recording medium (FIG. 24B) and the additionally recordable information recording medium (FIG. 24C). Thus, 9,672 bytes of data can be recorded in this segment. Specifically, the data contents of the rewritable data 525 in the segment #2 are composed of four sector data as shown in FIG. 22. Each sector data is composed of 26 sync frames as shown in FIG. 22 or FIG. 19 (data field structure). As shown in FIG. 30C, in the rewritable unit 531 for the information in the segment #2, 2 bytes are assigned to a copy information area 524 undergoing copy protection, which precedes the rewritable data 525 in the segment #2. In front of the copy information area 524, 3 bytes are set for a presync area 523 indicating an end position of a VFO area. The VFO (Variable Frequency Oscillator) area 522, for which 35 bytes are set, is utilized

for synchronization of the rewritable data 525 during reproduction. A postamble area 526 is placed immediately behind the rewritable data 525 to indicate an end position of the rewritable data 525. Guard areas 521 and 527 are arranged at a leading and trailing ends, respectively of the rewritable unit 531 for the information in the segment #2. The front guard area 521 is 30 bytes + J and the rear guard area 527 is 22 bytes - J. This enables a "random shift" in which the value of "J" is varied to change a write start and end positions of the rewritable unit 531 for the information in the segment #2. A phase change type recording film is characterized in that the characteristics of the recording film are likely to vary significantly at the write start and end positions for the rewritable data. A random shift such as the one described above makes it possible to prevent the degradation of the characteristics of the phase change type recording film.

For a comparison of the physical ranges of the rewritable units, FIG. 30B shows a part 530 of the rewritable unit for the information in the segment #1, while FIG. 30C shows a part 532 of the rewritable unit for the information in a segment #3. The present invention is characterized in that the front guard area 521 and the rear guard area 527 partly overlap each other in overlapping portions 541 and 542 during a rewrite [this corresponds to Inventive Point (G)]. The rewrite with partial overlapping enables the elimination of interlayer crosstalk in a single-side 2-recording-layer recordable information recording medium.

Now, with reference to FIG. 31, description will be given of a recording format used to record address information on the recordable information recording medium according to the present invention by wobble modulation. FIG. 31A corresponds to FIG. 24C or 24D. In FIG. 31, the rewritable information recording medium is described. However, the embodiments of the present invention are not limited to this aspect but are applicable to the additionally recordable information recording medium. That is, it is possible to provide the additionally recordable header areas 452 and 453 instead of the rewritable header areas 462 and 463.

A physical area in which the information in the segment #2 412 is recorded is prerecorded as a wobble address area 551 based on wobble modulation using a phase modulation of 180° as shown in FIG. 31B. The groove area 551 is wobbled as shown in FIG. 26 or 27. In this area, a total of 1,248 periods of wobbles are prerecorded. In the embodiments of the present invention, as shown in FIG. 26, the NRZ method is used to express one address bit using 8 or 12 wobbles. Further, as shown in FIG. 31C, the wobble address area 551 is divided into two areas comprising an area 561 in which a wobble address 1w is placed and an area 562 in which a wobble address 2w is placed (624 periods of wobbles are arranged in each area). Substantially the same address information is recorded in both areas (a modulation information form differs owing to a scramble process). The present invention is thus characterized in that address information is arranged a plurality of times per segment #2 412 [this corresponds to Inventive Point (H)]. Moreover, as shown in FIG. 31B, even/odd track number determination areas 552 and 553 are present in those areas respectively preceding and succeeding the wobble address area 551 in which the information from the rewritable header areas 462 and 463 is recorded.

FIG. 31D shows another embodiment of the present invention. Track address recording areas 571 and 572 are arranged instead of the even/odd track number determination areas 552 and 553. The track address recording areas 571 and 572 will be described later in detail.

8-2) Description of Embodiment in which EDC Is Applied to Each Track Address

FIGS. 32 and 33 show the structure of data in the area 561 in which the wobble address 1w is placed or the area 562 in which the wobble address 2w is placed, as shown in FIG. 31C. Both data structures are described using the address bit expression shown in FIG. 26. In FIGS. 32 and 33, the data is divided into an error correction unit 606 and error detection units 607 and 608. The adverse effect of indefinite bits is thus limited to within the error detection units to ensure that the other data is reliably reproduced. The positions of the indefinite bits can be determined by sensing the even or odd numbers of the tracks. In the example shown in FIG. 32, $0 \le K \le 4$. The gray codes or the special track codes are used for "track number information". The segment number corresponding to segment address information starts with "000001".

In the embodiment shown in FIGS. 32 and 33, one address bit is expressed using 8 wobbles. "(... b)", shown in FIGS. 32 and 33, indicates the data length of each piece of information in address bits. The total value of the data length is 78 address bits, corresponding to 624 wobbles. The data in the wobble address placed areas 561 and 562 is basically composed of address sync information 603 indicating a start position of the wobble address, a track address information recording area 605, and an address information recording area 604 for the addresses other than track addresses. In the embodiments of the present invention, the rewritable information recording medium shown in FIG. 32 has the zone structure. The additionally recordable information recording medium shown in FIG. 33 has a CLV (Constant Linear Velocity) structure.

Therefore, the difference in structure is reflected in the difference in format between FIG. 32 and FIG. 33. In the rewritable information recording medium with the zone structure, the indefinite bits are prevented from being arranged in the vertical direction in the ECC block shown in FIG. 17 (this will be described later in detail) by providing a leading address bit position shift area 601 and a trailing address bit position shift area 602 so as to allow up to 4 address bits to be shifted forward or backward [this corresponds to Inventive Point (P)]. "K" in FIG. 32 has an arbitrary value

ranging from 0 to 4. The value of "K" is set utilizing an output value from the random number generator (not shown) so as to vary between the areas 561 and 562 in which the respective wobble addresses are arranged.

In the rewritable information recording medium shown in FIG. 32, the address information shown below in 1, 2, 3, and 4 is recorded in the areas 561 and 562 in which the respective wobble addresses are arranged.

1. Track address information 605 - Means a track number within a zone. Substantially the same track number is written twice as the track number information A 611 and the track number information B 612. However, because of a data scramble process, described later, the track number information A 611 and the track number information B 612 are recorded in the track address information recording area 605 as different forms of data codes after the scramble [this corresponds to Inventive Point (S)].

2. Segment address information 621 and 633 - Indicates a segment number within a track (within a round in the information recording medium 221). Substantially the same segment number is written twice as the segment address information 621 and the segment address information 622. The first segment address information 621 is utilized as "seed" information for data scrambling and is thus recorded in raw form (not subjected to a code conversion based on scrambling). However, the second segment address information 622 is recorded on the information recording medium 622 in the form of a code converted by a data scramble process [this corresponds to Inventive Point (S)]. The value of the address bit changes at the boundary (shown by the "triangle") of the 1 address bit area 511, shown in FIG. 26. Accordingly, the information reproducing apparatus or information recording and reproducing apparatus applies a PLL (Phased Lock Loop) to the position of the boundary to detect the address bit. Consequently, when the address bit remains at the same value ("0" or "1") for a long period, the phase of the PLL may deviate from the position of the boundary. Thus, data scrambling is applied in order to prevent the address bit from remaining at the same value for a long period [this corresponds to Inventive Point (R)].

However, as previously described, the first segment address information 621 is utilized as "seed" information for data scrambling and is thus recorded in a raw form (not subjected to a code conversion based on scrambling). As shown in FIG. 32, the segment address information 621 has a large data length of 6 bits. The present invention executes a process on the first segment address information 621 to prevent the same value from running for a long period. When the segment number is counted from "0" as the segment address information 621, the pattern "000000", composed of six consecutive "0s", appears in the segment address information 621. To avoid this problem, the present invention is characterized in that the segment number is counted from "000001" [this corresponds to Inventive Point (I)].

The embodiments of the present invention are not limited to the above contents but are characterized in that the method of applying the address number is conditioned. A method alternative to the above embodiment is to, for example, eliminate an address number having n (n is, for example, at least 3 or 4) consecutive "1s" or "0s" in the address number information.

3. Zone identification information 625 and 626 - Indicates a zone number within the information recording medium 221 and contains the value "n" from "Zone (n)", shown in FIG. 25. The same zone number is written twice as the zone identification information 625 and zone identification information 626, both of which are to undergo data scrambling.

4. Recording layer identification information 626 and 627 - whether the reproduction-exclusive type, the additionally recordable type, or the rewritable type, the information recording medium 221 according to the present invention has a "single-side 2-recording-layer" structure which has recording layers A 222 and B 223 and in which data can be reproduced from or recorded on the same side. The recording layer identification information 626 and 627 indicates on which of the recording layers A 222 and B 223 reproduction or recording is now being executed. The same recording layer number is written twice as the recording layer identification information 626 and the recording layer identification information 627.

According to the concept of the present invention, the information in 1, 2, 3, and 4 is recorded. Further, as shown in FIG. 31, the wobble address area 551 is divided into multiple (in the present example, two) areas in each of which the address information is recorded. In this case, information indicating to which of the wobble address placed areas 561 and 562 the address information now being reproduced corresponds is recorded as wobble address number information 623 and 624. Moreover, in the rewritable information recording medium shown in FIG. 32, information indicating whether or not the segment number is the final value within the same track is recorded as intra-track final segment identification information 628 and 629.

As shown in FIG. 33, the additionally recordable information recording medium employs the CLV system as previously described. Consequently, the zone identification information 625 and 626 and the intra-track final segment identification information 628 and 629 are unnecessary. Further, in this case, all the tracks in the information recording medium 221 are denoted by the respective consecutive numbers. Consequently, the data length increases from 12 bits, shown in FIG. 32, to 20 bits, shown in FIG. 33.

In either FIG. 32 or FIG. 33, one error correction unit 606 is constructed in the address information recording area 604 except for the track addresses. In the track address information recording area 605, error detection units 607 and 608 are constructed for the respective pieces of track number information A 611 and B 612. In this manner, the wobble address placed areas 561 and 562 are separated into the error correction unit 606 and the error detection units 607 and 608. Thus, the adverse effect of the mixture of the indefinite bit area 504 such as the one shown in FIG. 27 can be contained in one error detection unit 607 or 608 to prevent the mixture of the indefinite bit area 504 from adversely affecting external data areas. As a result, an error correcting and detecting processes enables information to be very reliably read from the error correction unit 606 and error detection units 607 and 608, which contain no indefinite bits [this corresponds to Inventive Point (N)]. Further, in both figures, 8 bits present in the area from the segment address information 621, located at the head, to the recording layer identification information 626 are considered to be a "seed" information recording area 641 for data scrambling. Data scramble target data 642 is set to be the range from the zone identification information 625 to the track number information B 612 in FIG. 32 or the range from the segment address information 622 to the track number information B612 in FIG. 33. If the segment address information 621 or the wobble address number information 623 is contained in the "seed" information for data scrambling as in the case of the embodiments of the present invention, then within the same track, the "seed" information for scrambling varies with the segments and between the wobble address placed areas 561 and 562. As a result, the recorded codes (converted codes) in the scrambled track number information A 611 and B 612 vary with the segments and between the wobble address placed areas 561 and 562. Thus, the position of the indefinite bit area (504 in FIG. 27) changes to prevent the indefinite bits from being arranged in the vertical direction within the ECC block shown in FIG. 18.

With reference to FIG. 34, description will be given of a process of creating wobble address data according to the embodiments of the present invention. First, in ST01, the various pieces of address information (unscrambled original data) described above are created. Then, in ST02, the gray code converting process or special track code converting process shown in FIG. 28 or 29, respectively, is executed on the track number information A 611 and B 612 [this corresponds to Inventive Point (0)]. Moreover, in ST03, 8 bits are extracted from the various pieces of address information, the 8 bits being present in the area from the segment address information 621, located at the head, to the recording layer identification information 626, the area being contained in the "seed" information recording area 641 for data scrambling. The seed information is then utilized to apply data scrambling to all the target data contained in the range 642 to undergo data scrambling (ST04) [this corresponds to Inventive Points (R) and (O)].

Subsequently, 8-bit ECC (Error Correction Code) information 630 is added to 24 bits present in the area from the segment address information 621 to the intra-track final segment identification information 629 (in FIG. 33, 16 bits present in the area from the segment address information 621 to the recording layer identification information 627), the area being contained in the error correction unit 606. Finally, in ST06, EDC (Error Detection Code) information corresponding to the error detection units 607 and 608 is added [this corresponds to Inventive Point (0)].

Description will be given below of the characteristics of data scrambling and a method of adding EDC (Error Detection Code) information according to the present invention. As shown in FIG. 35, a data sequence obtained by performing a bit-wise "adding operation", "subtracting operation", or "exclusive OR" operation, or their combination on a data array 651 of a gray code sequence or special track code sequence using arbitrary data is characterized by constantly retaining the gray code characteristics or special track code characteristics according to the present invention. A main characteristic of the present invention is that the above characteristic is utilized to execute a data scramble process and a process of adding EDC (Error Detection Code) information using only a bit-wise "adding operation", "subtracting operation", or "exclusive OR" operation, or their combination together with arbitrary data [this corresponds to Inventive Points (N) and (O)].

The scramble circuit 57 (see FIG. 2) can be constructed-using the combination of a shift register circuit and an exclusive OR circuit. The scramble circuit 57 functions as a random number generator for an "M sequence". In the step ST03 in FIG. 34, the scramble circuit 57 uses "seed" data for scrambling to scramble the data (unscrambled data created in the step ST01 in FIG. 34) contained within the range 642 to undergo data scrambling as shown in FIG. 32 or 33 [this corresponds to Inventive Point (Q)].

In the embodiments of the present invention, the "seed" information for scrambling contains the wobble address number information 623 having different values in the area 561 in which the wobble address 1w is placed and in the area 562 in which the wobble address 2w is placed. Accordingly, the pattern can be changed between the two address areas (the area 561 in which the wobble address 1w is placed and the area 562 in which the wobble address 2w is placed) within the same segment [this corresponds to Inventive Point (S)].

Alternatively, the contents of the pattern can be changed by executing, instead of the scramble process, a bit reversal between the track number information A 611 and the track number information B 612 or between the area 561 in which the wobble address 1w is placed and the area 562 in which the wobble address 2w is placed [this corresponds to Inventive Point (S)].

Further, in the above embodiment, the exclusive OR operation is used for the data scramble process. However,

the scope of the present invention includes any method of executing a data scramble process using only a bit-wise "adding operation", "subtracting operation", or "exclusive OR" operation, or their combination together with arbitrary data.

Further, for descrambling, a descramble circuit 58 (see FIG. 3) sequentially descrambles scrambled data using information in the seed information recording area 641 for data scrambling.

In the address information recording area 604 except for the track addresses in FIG. 32 or 33, the value does not change between adjacent tracks. Accordingly, a method of generating an ECC code 630 may comprise using a conventional creation polynomial to execute a division to obtain a remainder as the ECC code 630.

Now, with reference to FIG. 36, description will be given of a method of generating EDC information 613 and 614 indicating track numbers according to the present invention. A main characteristic of the present invention is that the EDC information 613 and 614 indicating track numbers has the gray code characteristics or the special track code characteristics to reduce the incidence of indefinite bits [this corresponds to Inventive Point (N)].

Conventional binary data permit a plurality of bits to change simultaneously upon a progressive increase (every time the number changes by 1). In contrast, the gray codes shown in FIG. 28 permit only 1 bit to change upon a progressive increase (every time the number changes by 1). FIG. 36 shows an example of a method of creating an EDC (Error Detection Code) having the gray code characteristic or the special track code characteristics.

If a remainder polynomial is used to divide a track number and an EDC is added using the remainder value obtained, the plurality of bits in the EDC change when the track number changes by "1". Accordingly, it has been considered to be difficult to add error check codes to the gray codes. In contrast, according to the present invention, if only 1 bit changes in the target data (the track number information A 611 and B 612) to which the EDC information 613 and 614 is added, an "adding process", a "subtracting process", or an "exclusive OR" operation with a particular number, or their combination is performed. The EDC information 613 and 614, the data resulting from the above process, is characterized in that only the bits corresponding to changed bits in the original data. The present invention utilizes this characteristic.

In the embodiment shown in FIG. 36 or FIGS. 32 and 33, the track number information 611 or 612 has 12 bits set using the gray codes or the special track codes. Four bits of error detection information 613 and 614 having the gray code characteristics or special track code characteristics is added to the track number information. Every 4 bits of the 12-bit track number data are added together. Then, the parity (indicating an odd or even number) of the value resulting from the addition corresponds to the error detection code information 613 and 614. For the bits "a11 to a0" constituting the track number information 611 and 612, for example, "a10", "a6", and "a2" are added together to obtain "C2". If the value of "C2" is odd, "b2" located at the corresponding position in the error detection code information 613 and 614 is set to "0". If the value of "C2" is even, "b2" sis set to "1". For example, if only "a5" changes in the adjacent track, only the odd and even relationship of "C1" is reversed. As a result, only "b1" changes and the error detection code information 613 and 614 meets the gray code characteristics or the special track code characteristics.

Description will be given below of a method of avoiding the vertical arrangement of indefinite bits in an ECC block. Problems will be shown which may occur if the track number information A 611 and B 612 in FIG. 32 does not undergo data scrambling and if the leading and trailing address bit position shift areas 601 and 602 are not provided. In this case, within the same segment, the track number information A 611 and the track number information B 612, thus the indefinite bit areas 504 in FIG. 27, appear side by side in a radial direction. As shown in FIG. 27, the land width or groove width varies within the indefinité bit area 504. Consequently, the level of reproduction signals from rewritable recording marks recorded on the indefinite bit area varies to degrade the rate of errors in the rewritable information. Areas with degraded error rates are arranged in a line in the vertical direction within the ECC block shown in FIG. 18.

A problem with the ECC block structure shown in FIG. 18 and using product codes [this corresponds to Inventive Point (B)], is that its capability of correcting the errors arranged in a line in the vertical direction is degraded. The point of the present invention to solve this problem is that the indefinite bit positions that are likely to suffer errors are shifted to improve the error correcting capability of the ECC block structure shown in FIG. 18 and using product codes [this corresponds to Inventive Point (Q)].

In the present invention, as described above, (a) the leading and trailing address bit position shift areas 601 and 602 are provided to allow indefinite bit positions to be shifted [this corresponds to Inventive Point (P)]. Further, (b) the track number information A 611 and B 612 is subjected to data scrambling.

However, the present invention is not limited to the above embodiment. To shift indefinite bits, it is possible to use, for example, a method of circularly shifting higher bits of the C track number information 611 and 612 every time the segment and the wobble address placed areas 561 and 562 change.

7] Description of First Embodiment of Method of Setting Track Addresses in Recordable Information Recording Medium according to Present Invention [a method of improving the method of setting gray codes to enable address detections

even with indefinite bits]

(All indefinite bits are contained in the track address information on the lands) [the contents of Inventive Point (U)]

In the prior art, the addresses in the land/groove recording tracks are formed of embossed prepits as in the case of DVD-RAMs. Further, a method has been proposed which comprises embedding address information utilizing the wobbling of the groove tracks. A major problem with this method is the formation of addresses in the land tracks. With one proposed method, groove wobbling is executed to separately arrange groove wobbling and land wobbling. The land wobbling is obtained by wobbling grooves adjacent to each land on both sides. However, land addresses are realized by using a configuration that makes it seem as if land wobbling was executed.

However, this method requires a double or larger amount of track address areas and is wasteful. An efficient arrangement can be carried out if a set of address information can be used both as groove address information and as land address information. To achieve this, the gray codes may be used as track address data.

FIG. 43 shows the relationship between a track form and wobble detection signals from a land which relationship is observed when groove wobbles are subjected to phase modulation using track address data.

As address data, a wobble signal (..1X0) is detected in the Land-n sandwiched between address data (..100..) on Groove-n and address data (..110..) on Groove-n+1. In this case, the portion X is sandwiched between (0) of the Groove-n and (1) of the Groove-n+1. The wobble detection signal is at a center level and has an amplitude of 0. In an actual system, an amplitude may be generated by the offset of a read beam from a.track or unbalance in a detector. Consequently, the detected signal is likely to be closer to (1) or (0). It is contemplated that on the basis of the fact that the detection level thus decreases in the land area sandwiched between different groove address data, this part may be checked against the positions of the address data to detect a land address signal. However, this method is appropriate if the wobble detection signal.has a high C/N but is not reliable if there is a loud noise.

Thus, as a method of reading address data from a wobble detection signal in a land track, it has been desired to be able to define correct land address data even though the land wobble detection data sandwiched between different opposite groove wobble data is indefinite (may be determined to be "0" or "1").

Thus, the following system is proposed which is configured to subject groove track addresses to a wobble modulation using gray code data and to easily determine whether a land track corresponds to an odd-land or an even-land by adding special marks or adding special identification marks through wobble modulation.

If the land track can be determined to be an odd-land or an even-land, the land address data can be easily defined on the basis of the nature of the gray codes. The reason will be described with reference to FIG. 44.

In each step, only 1 bit of the gray code is changed as shown in FIG. 28. When the groove tracks are addressed using the gray codes, the wobble of the land formed of groove wobbles adjacent to the land on both sides is detected as an indefinite code.

Specifically, when address data such as those shown in FIG. 44 are arranged in the groove tracks, only 1 bit of a wobble detection signal from the land track sandwiched between the groove tracks is "0", "1", or "indefinite". The other bits are detected to have the same values as those of wobble signals from the adjacent grooves. (n) or (n+1) is detected in a wobble detection signal from Even-Land(n) in FIG. 44. Likewise, (n+1) or (n+2) is detected in Odd-Land (n+1).

Here, the land track is predetermined to be an odd-land or an even-land, and n is an even number. Then, for Odd-Land(n+1), if (n+1) is detected, that data is an address value. If (n+2) is detected, (detected value - 1) is an address value. Similarly, for Even-Land(n), if (n) is detected, that data is an address value. If (n+1) is detected, (detected value - 1) is an address value.

As described above, provided that the land track is determined to an odd-track or an even-track, the correct address value can be easily defined in spite of the presence of an indefinite bit in the wobble detection value from the land track. For the groove tracks, wobble detections signals correspond directly to track addresses.

FIG. 45 shows the specific contents of detections obtained if gray codes for 4-bit track addresses are arranged. If Groove-Track G-(n) has gray code address data (0100) and Groove-Track G-(n+1) has gray code address data (1100), then for Even-Land L-(n), (1100) or (0100) is detected as a wobble signal. However, on the basis of the description in FIG. 44, since this is an even-land, (0100) is defined to be the correct address value.

Moreover, even if detected values are not corrected using "0" or "1" as described in FIG. 4, the land track is considered to have two address values provided that it has been determined to be an odd-land or an even-land. Regardless of whether (1100) or (0100) is detected in the Even-Land L-(n) in FIG. 45, this code is not detected in the other even-lands. Thus, the detected value can be used to define address data.

The above contents also apply to the special track codes, shown in FIG. 29.

8] Description of Embodiment of Method of Setting Information for Determination of Even/Odd Track Number [this corresponds to the contents of Inventive Point (T)]

FIG. 46 shows an example of a proposed addressing format used if both groove and land tracks are utilized as recording and reproducing tracks in the rewritable information recording medium. In FIG. 72, a wobble address synchronous pattern is placed instead of the header area shown in FIG. 24 and added to each segment block. The zone number (Zn), track number (TR-N), and segment number (Sn) shown in FIG. 25 are embedded in data areas using wobble modulation.

To determine whether the land has an odd number or an even number as shown in FIGS. 44 and 45, the header area of the land is marked with a prepit. For the groove wobble addressing system according to the present invention, the determination of an odd land/even land is important to the detection of the address of the land. Various methods may be used for the identification mark system.

An embodiment is shown in FIG. 37. In the embodiment shown in FIG. 37, a part of the groove area 502 is severed to produce a groove severed area 508. If a reproducing condensed spot is tracing the land areas 503 and 504, it is possible to determine whether an even-track or odd-track on the land is being traced, by sensing the direction in which a track difference signal changes rapidly.

For the additionally recordable information recording medium, used for the write once type information recording medium, it is important that a recorded data stream is as similar to that in the reproduction-exclusive information recording medium as possible. The wobble addressing format of groove tracks shown in FIG. 46 or 37 can be utilized as it is.

9] Description of Second Embodiment of Method of Setting Track Addresses in Recordable Information Recording Medium according to Present Invention [indefinite bits are provided only in the lands but a track address defined area is provided in each land] [this corresponds to the contents of Inventive Point (V)]

9-1) Description of Method of Setting Track Address Information in Rewritable Information Recording Medium according to Present Invention

FIG. 38 shows a method of setting values for the track number information A 611 and B 612 in the embodiment shown in FIG. 32. The values shown in FIG. 38 indicate raw information present before a special track code conversion ST02 and a scramble process ST4 such as those shown in FIG. 34 is executed. As shown in FIG. 38, track numbers are set for the groove areas zigzag with respect to the track number information A 611 and B 612. Where the same track number is set for adjacent groove areas on both sides, a similar track number is set for the land area. Where different track numbers are set for the adjacent groove areas on both sides, the track number is not defined. However, the method shown in FIG. 45 can be used to predictively determine the track number. The characteristics described below can be extracted from the information shown in FIG. 38.

1. On a groove, the smaller of values A and B corresponds to the track number.
2. On a land, the track number A is defined for an even track, whereas the track number B is defined for an odd track.
3. On the land, the track number B is defined for the even track, whereas the track number is indefinite 'for the odd track. However, the method shown in FIG. 45 can be used to predictively determine the track number.

   Further, the characteristic described below is exhibited in connection with the special track codes according to the present invention shown in FIG. 29.

4. On the groove, for an even-track, all the bits of the value other than the most significant bit are the same between the two values after a special track code conversion. For an odd-track, the lower bits vary between the two values after the special track code conversion.

9-2) Description of Method of Defining Track Addresses according to Present Invention

The track address can be defined utilizing the characteristics listed above in 1 to 4.

First, description will be given of a method of defining addresses in the groove portions using the system shown in FIGS. 29, 32, and 38.

A control section 43 reads information from the wobble address placed areas A 561 and B 562. If neither of the data reproduced from the areas A and B has any errors, the control section 43 carries out a descramble process to simultaneously execute the inverse of a special track code conversion on the codes of the track numbers from the areas A and B. Moreover, the control section 43 selects the smaller of the values in the track number information A and B and stores it as, for example, Ts.

Further; after executing the descramble process, the control section 43 determines, in a special track code

state, whether all the bits other than the most significant bit are the same between A and B. The control section 43 further determines whether the track numbers are even or odd. If the bits are the same between A and B, the control section 43 selects the track number code A. If the bits are not the same between A and B, the control section 43 selects the track number code B. Then, the control section 43 executes the inverse of a special track code conversion on the selected code and stores the converted code as, for example, Tc.

The control section 43 compares the stored Ts and Tc with each other. If Ts and Tc are the same, that value is defined as the track number. If Ts and Tc are not the same and information is read from the wobble address placed areas A 561 and B 562 to find that the data reproduced from the area A or B has an error, the control section 43 shifts to reproduction from the next wobble address placed areas A 561 and B 562.

Now, description will be given of a method of defining addresses in the land portions using the system shown in FIGS. 29, 32, 37, 38, and 45.

The control section 43 reads even/odd track number information from the header area 462 of the land portion and stores the read information. Then, the control section 43 reads information from the wobble address placed areas 561 and 562 to determine whether or not each of the data reproduced from the areas A and B has any error.

If only one of the reproduced data has an error, then for an even-track, the control section 43 determines whether or hot the track number code A has an error. For an odd-track, the control section 43 determines whether or not the track number code B has an error. If the results of these determinations are "NO", the control section 43 executes a descramble process on the truck number codes.

After the descramble process, the control section uses the method shown in FIG. 105 to predictively determine the track number B for an even-track or the track number A for an odd-track. The control section then stores the result of the determination as, for example, Tp. Further, after the descramble process, the control section executes the inverse of a special track code conversion on the track number A for the even track or on the track number B for the odd-track (the defined track number in FIG. 67). The control section then stores the result of the process as, for example, Tr,

The control section then compares the stored Tp and Tr with each other. If the results are the same, that value is defined as the track number. If Ts and Tc are not the same and information is read from the wobble address placed areas A 561 and B 562 to find that both data reproduced from the areas A and B have an error, the control section 43 shifts to reproduction from the next wobble address placed areas A 561 and B 562.

10] Description of Third Embodiment of Method of Setting Track Addresses in Recordable Information Recording Medium

[the groove width is locally changed to locate indefinite bits also in the grooves] [this corresponds to Inventive Point (W)]

10-1) Method of Producing Information Recording Medium by Changing Width of Grooves without Changing Width of Adjacent Lands

In the embodiment shown in the figures ending with FIG. 77, description has been given of the method of executing wobble modulation using the fixed groove width to bury address information. In this case, the track width may change in a part of the land portion and the address data in that part may be indefinite (the level of the wobble signal may decrease. Although the data can be detected utilizing the place where the decrease in level is occurring, the reliability may be degraded if much noise or the like is generated).

FIG. 47 shows the relationship between Groove(n+1) and Land(n+1) and Groove(n+2). When the track Groove(n+1) undergoes wobble modulation, the address data (..100x2..) is recorded. Here, the part (x1) is formed by an amplitude modulation that changes the groove width so that the Land(n) is "1" and the Land(n+1) is "0". Similarly, in the area (x2) of the Groove(n+2), the groove is formed by an amplitude modulation that changes the groove width so that the Land(n+1) is "0" and the Land(n+2) is "1". When the system that thus partly changes the groove width is introduced, the wobble modulation enables requested land data to be correctly detected even if different address data are obtained from the land tracks between which the groove track is sandwiched. FIG. 48 shows an example of the addressing format of a land/groove system-based rewritable information recording medium into which such a technique to partly change the groove width is introduced.

The addressing format in FIG. 48, a technique based on groove wobbling but which partly changes the groove width is introduced to arrange each groove track address area and each land track address area at separate positions. G synchronous signals (G-S) are arranged to identify the groove track address positions, and address data on the groove tracks is recorded. Then, signals (L-S) indicating the land address areas are arranged and land address data is recorded. In this case, if the opposite lands have different address data, the groove width is changed and recorded as if the land tracks had undergone wobble modulation. This process enables the correct detection signals to be obtained if address information is detected for recording in or reproduction from land tracks. In FIG. 48, the groove tracking address data and the land tracking address data are arranged at separate positions. However, the technique to change

the groove width may be used to form both land and groove address data by the same groove wobbling modulation.

FIG. 49 shows an embodiment of this technique. The same groove wobble can be allowed to mean both land and groove address data by making it possible to identify an odd or even land number, as previously described. The groove width modulation can be utilized to identify an odd number or an even number. Specifically, this system places "0" for the odd-land and "1" for the even-land, at the bit following the track number in FIG. 45. Since the track numbers of the groove tracks have been defined, the redundancy bit following the track number may be neglected when detected. For the land tracks, whether the land number is odd or even may be determined depending on whether the bit detected after the track number is "0" or "1". As a result, for the land tracks, the track number is defined on the basis of a data array including the odd/even track identification data. Consequently, groove/land address data can be detected without any special odd/even track identification marks. Moreover, track width changed areas generated by the gray codes only in the land tracks are also generated in the groove tracks. The same technique is thus used to configure both groove and land detecting systems. This enables the system balance to be optimized.

In the above description, the G synchronous signals (G-S) and the signals (L-S), indicating the land address areas, are arranged. However, the present invention is not limited to this aspect. For example, instead of arranging the G synchronous signals (G-S) and the signals (L-S), indicating the land address areas, land and groove address data may be arranged in the pre-positioned areas of the track number information A 611 and B 612 as in the case of the embodiment shown in FIG. 32. Specifically, the operations described below may be performed.

**(*)** The groove width is set to be the same everywhere in the areas indicated by the track number information A611 and the EDC information 613 of the track number A to define the groove track address information (the land width is locally changed to allow indefinite bits to be arranged in the lands).

**(*)** The groove width is set to be the same everywhere in the areas indicated by the track number information B612 and the EDC information 614 of the track number B to define the land track address information (the groove width is locally changed to allow indefinite bits to be arranged in the grooves). At the same time, the operation described below is performed

**(*)** The same track number information is recorded both as the track number information A611 and as the track number information B612. In this case, the operations described below are performed.

  **(**)** If a groove is being traced, the track number information A611 for which the track number has been defined is reproduced and the method shown in FIG. 49 is used'to predictively determine the track number for the track number information B612.

  **(**)** If a land is being traced, the track number information B612 for which the track number has been defined is reproduced and the method shown in FIG. 49 is used to predictively determine the track number for the track number information A611.

In this manner, it is possible to set, within the same track, a part of the groove which contains no indefinite bits and which allows the track address information to be defined for the groove and a part of the groove which contains indefinite bits but which allows the track address to be predictively determined using the technique shown in FIG. 49. In this case, at the same time, the following parts are set within the same track: a part of the land which contains no indefinite bits and which allows the track address information to be defined for the land and a part of the land which contains indefinite bits but which allows the track address to be predictively determined using the technique shown in FIG. 49. In this case, similarly to the previously described procedure, a method of defining addresses is executed as follows:

1. Error detection using the EDC information 613 and 614 in the part which contains no indefinite bits and which allows the track address information to be defined (if no errors are detected, the process proceeds to a step 2 and subsequent steps. If any error is detected, the process proceeds to reproduction of wobble signals from the wobble address placed areas 561 and 562).
2. Predictive determination of the track number for the part which contains indefinite bits and which allows the track address to be predictively determined.
3. Descramble process
4. Inverse conversion process on the gray codes
5. Comparison of the result of extraction of the track number for the part which allows the track address information to be defined with the result of predictive determination of the track number for the part which allows the track address to be predictively determined.

(If the track numbers are the same, the track address is defined. If the track numbers are not the same, the process shifts to reproduction of wobble signals from the wobble address placed areas 561 and 562).

FIG. 39 shows a method of locally changing the groove width without changing the land width in order to form indefinite bits in the groove areas. Although not shown in the method shown in FIG. 39A, the width of the land areas 504 and 504 can be kept at a fixed value by changing the light exposure, between positions α and β, of a condensed spot 791 used by a master recording apparatus for the information recording medium 221 to form the groove area 502, to change the groove width, and adjusting the amount of the change.

With the method shown in FIG. 39B, the master recording apparatus uses two spots 702 and 703 as condensed spots for forming the groove area. The master recording apparatus changes the relative positions of the spots between positions γ and δ.

12-2) Description of Method of Setting Track Address Information in Rewritable Information Recording Medium according to Present Invention

The introduction of the technique to partly change the groove width eliminates the need to provide the odd/even number land identification marks, shown in FIG. 46, in the addressing format of the land/groove recording and generating track system, which thus becomes more similar to the addressing structure of the other information recording media. FIG. 50 shows an embodiment.

12-3) Description of Format of Additionally Recordable Information Recording Medium according to Present Invention

For the additionally recordable information recording medium, used for the write once type information recording medium, it is important that a recorded data stream is as similar to that in the reproduction-exclusive information recording medium as possible. The wobble addressing format of groove tracks shown in FIG. 50 can be utilized as it is. However, since the odd/even number identification determination is unnecessary, the track width need not be changed. Accordingly, the corresponding part is removed and dummy codes are filled into this part. This enables the construction of the same addressing format as that of the rewritable land/groove track system.

11] Description of Fourth Embodiment of Method of Setting Track Addresses in Recordable Information Recording Medium according to Present Invention

[the wobble amplitude of the groove is locally changed to allow indefinite bits to be located in the groove] [this corresponds to the contents of Inventive Point (W)]

According to another embodiment of the method of locally changing the groove width to distributively arrange indefinite bits within the groove area as shown in FIG. 39, the wobble amplitude in the groove area 502 is changed as shown in FIG. 40. An indefinite bit area 710 in the groove area 502 has straight wall surfaces, which hinder wobble detection signals from being. obtained. However, at positions ε and η in the land areas 503 and 507 adjacent to the groove area 502, one of the walls is wobbled, thus allowing wobble signals to be obtained. Compared to the method shown in FIGS. 39 and 27, the groove width varies insignificantly within the indefinite bit area. Accordingly, the level of reproduction signals from the recording marks recorded on the indefinite bit area varies insignificantly. This is effective in suppressing the degradation of the rate of errors in rewritable information. If this method is used, the format can have exactly the same structure as that of the form shown in FIG. 47 or 50.

12] Description of Fifth Embodiment of Recordable Information Recording Medium according to Present Invention

[this corresponds to the contents of Inventive Point (X)]

12-1) General Description of System Placing Track Address in Header Area between Segments

As an addressing system for the information recording medium, the groove wobbling system gives a large number of advantages. However, if both land and groove tracks are utilized as recording tracks, it is difficult to embed address data in the land tracks as described at the beginning. The technique of the present invention has been devised as a solution to this problem. However, it is unavoidable that the track width varies, locally though. In particular, when the track width is reduced to improve the recording density, the characteristics of a recording signal vary between an area with a small track width and an area with a large track width. This results in varying data reliability. Thus, the present invention utilizes the gray codes or the like to minimize the area in which the track width varies. Nevertheless, a local variation may occur, so that countermeasures are desirably provided. In the configuration shown in FIG. 48 as a data structure indicating the basic configuration of the present invention, a plurality of sectors are formed into a segment block, and a plurality of segment blocks are aggregated together to constitute an error correction data block. If the header area 441 is added to the recorded data in each segment data block, the header area is present for each segment. This corresponds to multiple writes of information. That is, no problems occur even if the reliability is degraded

compared to the main data. Thus, as an addressing layout structure for the land-groove track system, address data is composed of the combination of a track number (T*), a zone number (Z*), and a segment number (S*). The track number, data changed by the track width, is placed in the header area.

12-2) Description of Track Address Recording Format in Rewritable Information Recording Medium according to Present Invention

FIG. 51 shows an embodiment of an address data layout structure according to the present invention as address data for the land/groove recording and reproducing track system, used for the rewritable information recording medium. The zone number and the segment number have the same data between opposite tracks. Accordingly, the gray codes need not be utilized and the track width is not changed whatever codes are used. Thus, by placing only the track number in the header area using codes such as the gray codes which can minimize the number of bits having data varying between the opposite tracks, it is possible to accomplish recording and reproduction without making recording and reproduction signals and address information signals unreliable.

12-3) Description of Format for Additionally Recordable Information Recording Medium according to Present Invention

As in the case of the other inventions, groove wobble addressing data is utilized in the write once type information recording medium as it is.

13] Description of Information Reproducing Apparatus or Information Recording and Reproducing Apparatus according to Present Invention

FIGS. 60 and 61 show the internal structure of an information reproducing apparatus or information recording and reproducing apparatus according to the embodiments of the present invention. In FIG. 60, data is loaded into an interface section 142. The loaded data is guided to a data adding section 168, where data processing such as that shown in FIG. 10 is started. A data ID generating section 165 outputs and provides a data ID to a data adding section 168. A CPR_MAI data generating section 167 outputs and provides data on copy protect to the data adding section 165. Further, a preset data generating section 166 outputs and provides preset data to the data adding section 165. The data outputted by the data adding section 168 is arranged by a data layout partial exchanging section 163. The data then has its main data section scrambled by a scramble circuit 157. Then, an ECC encoding circuit 161 adds POs and PIs to an output from the scramble circuit 157 and interleaves the POs as shown in FIG. 18. The resulting ECC block is inputted to a modulating circuit 151 to become a modulated signal. At this time, a modulation code for a modulating conversion table 153 is selected depending on the input data. A data synthesizing section 144 ads synchronous codes to modulated data from the modulating circuit 151 as shown in FIG. 19. A synchronous code selecting section 146 has selected the synchronous codes from a synchronous code selection table recording section 147. During the selection, a DSV value calculating section 148 controls the selection of the synchronous codes so that runs of "0s" and "1s" are within predetermined ranges in the area in which the synchronous code and data are consecutively arranged. The data synthesizing section 144 provides recording signals to an information recording and reproducing section 141. A control section 143 controls all the other blocks.

FIG. 61 shows a reproducing system. A signal outputted by the information recording and reproducing section 141 is inputted to a wobble signal demodulating circuit 150, a synchronous code position extracting section 145, and a demodulating circuit 152. A wobble signal demodulated by the wobble signal demodulating circuit 150 is used as a reference signal for, for example, a spindle motor rotation control circuit 160. Synchronous codes (SYNC) extracted by the synchronous code extracting section 145 control timings for the demodulating circuit 152. The demodulating circuit 152 demodulates a modulated signal using a conversion table recorded in a demodulating conversion table recording section 154. The demodulated signal is inputted to an ECC decoding circuit 162. The ECC decoding section 162 processes an ECC block such as the one shown in FIG. 18. That is, each PO is set to its original state, and this PO (16 bytes) and the PI (10 bytes) are used to execute an error correcting process. Then, a descramble circuit 159 descrambles the main data section. Then, for rows in which the left and right blocks have been exchanged with each other, the data layout partial exchanging section 164 returns these blocks to their original positions. In this state, a main data extracting section 173 can extract the demodulated main data. The data is then outputted via the interface 142. Moreover, an output from the data layout partial exchanging section 164 is supplied to a data ID extracting section 171. An extracted data ID is inputted to the control section 143 as recognition data and timing data. The data ID is partly descrambled by a descramble circuit 158. Further, an error checking section 172 checks the data for errors. If the ID is not correct, the control section 143 loads data again.

As described above, in the system according to the present invention:

<the main data has.the segment-based structure>

Specifically, the present invention provides an information recording medium from and on which information can be reproduced or recorded using a focused light, characterized in that data that can be or is recorded on the information recording medium has a first data unit (ECC block), the first data unit being composed of second data units (segments), the second data unit being composed of third data units (sector), the third data unit being composed of fourth data units (sync data), and that data errors can be detected or corrected within the first data unit, or an information reproducing apparatus that reproduces the data from the information recording medium, or an information recording and reproducing apparatus that records the data on the information recording medium.

<Effects> Since the ECC block is divided into a plurality of segments, the segments each composed of a plurality of sectors can be separately arranged in the information recording medium. As a result, the structure of the reproduction-exclusive information recording medium can be optimized in accordance with the contents. That is, 1A] for data contents that can be freely duplicated any number of times, the data is recorded by consecutively joining the segments together (arranging them close to one another). 1B] for important data contents restricted in terms of copying, the segments are arranged away from one another on the information recording medium so that "identification information on the reproduction-exclusive information recording medium", "copy control information", "encryption key related information", "address information", and the like can be recorded in the gap between the segments. This serves to protect the data recorded on the information recording medium and ensures the increased speed of accesses. Further, 2 the data structure is ensured to be compatible with all of the reproduction-exclusive information recording medium, the additionally recordable information recording medium, and the rewritable information recording medium. Consequently, a processing circuit and control software in the reproducing apparatus or recording and reproducing apparatus can be used for a plurality of purposes and simplified. 2A] If the reproduction-exclusive information recording medium has the structure described above in [1A], an additional writing process or a rewriting process in segments can be executed on the additionally recordable information recording medium or rewritable information recording medium, respectively, by dividing data of the structure described above in [1A] at the boundaries between the segments and placing particular information between the divided data. 2B] If the reproduction-exclusive information recording medium has the structure described above in [1B], an additional writing process or a rewriting process in segments can be executed on the additionally recordable information recording medium or rewritable information recording medium, respectively, by allowing the data inserted between the segments (into the gaps) of data of the structure described above in [1B] to distinguish the reproduction-exclusive information recording medium, the additionally recordable information recording medium, and the rewritable information recording medium from one another.

Furthermore, in the present invention, <the track address is recorded using the gray codes or is placed in the gap between the segments>.

Specifically, the present invention can provide an information recording medium from and on which information can be reproduced and recorded using a focused light, characterized in that data that can be recorded on or reproduced from the information recording medium has a first data unit (ECC block), the first data unit being composed of second data units (segments), the second data unit being composed of third data units (sectors), the third data unit being composed of fourth data units (sync data), that data errors can be detected or corrected within the first data unit, that at least any of zone identification information, segment address information, and track address information is prerecorded on the information recording medium, that the zone identification or the segment address information is recorded by wobble modulation, and that the track address information is recorded using a particular format, or an information reproducing apparatus that reproduces the data from the information recording medium, or an information.

<Effects> 1. Since the zone identification information and the segment address information are recorded by wobble modulation, additional writing data or rewriting data (recording marks) can be recorded, in an overlapping manner, in the area in which the zone identification information and the segment address information are recorded. Therefore, the recording capacity can be increased compared to conventional DVD-RAM disks in which prepit addresses are formed and which prevent recording of additional writing data or rewriting data (recording marks) at the positions of the prepit addresses. 2. If the zone structure is employed, wobble modulation information in which the zone identification information and the segment address information are recorded has exactly the same form between adjacent tracks. Track address information having different forms between the adjacent tracks is recorded using a particular format (recorded using the gray codes or placed in the gap between the segments). The track address information can thus be recorded in lands and grooves. Therefore, the present invention can improve the recording capacity compared to conventional DVD-RW disks (rewritable information recording media) for groove recording.

Further, the present invention can <add an EDC to each track address by an addition, a subtraction, or an exclusive OR, or their combination>. Specifically, the present invention can provide an information recording medium from and on which information can be reproduced and recorded using a focused light and on which at least any of zone identification information, segment address information, and track address information is prerecorded, characterized in that error detection codes are added to the track address information by at least one of an adding process, a subtracting process, and an exclusive OR operation process or a combination of at least two of these processes, or an information reproducing apparatus that reproduces the data from the information recording medium, or an information.

<Effects> The error detection codes added to the track address information having gray code or modified gray code characteristics by at least one of the adding process, the subtracting process, and the exclusive OR operation process or a combination of at least two of these processes similarly retain the gray code or modified gray code characteristics.

1. Since the error detection codes are added to the track address information, the accuracy with which the track address information is reproduced is drastically improved. 2. Since the error detection codes have the gray code characteristics, the land portions contain few indefinite bits. This allows the track address information in the land portions including the error detection code areas to be more accurately reproduced or determined.

Now, with reference to Tables 1 and 2, inserted before Brief Description of the Drawings, a general description will be given of the information recording medium according to the present invention and the reproducing apparatus and method and information recording apparatus and method for the information recording medium.

With reference to Table 1, description will be given of combinatory effects produced by combining the points of the present invention together.

Note] In the tables, "circles" denote the contents of inventive points that principally help produce original effects. "Triangles" denote the contents of inventive points which relate to the contents of the original effects but which are additional and not necessarily essential.

Description of Effects with Respective Effect Numbers Corresponding to Table 1

<An increased capacity is ensured to deal with high quality images and accesses to the high quality videos are made more reliable>

(1) If instead of conventional SD (Standard Definition) videos, HD (High Definition) videos are recorded on the information recording medium using a file or folder separating technique, it is essential to increase the recording capacity of the information recording medium because the HD videos require a high resolution. The L/G recording enables the recording capacity to be increased compared to the groove recording. Further, no recording marks can be formed on the prepit addresses. Accordingly, the wobble modulation allows address information to be recorded more efficiently than the use of the prepit addresses. Therefore, the recording capacity can be maximized by the "L/G recording + wobble modulation". Further, in this case, a track pitch is dense. Consequently, the capability of detecting addresses must be further improved to make accesses more reliable. Since a problem with the "L/G recording + wobble modulation" is the generation of indefinite bits, the gray codes or the special track codes are employed to reduce the incidence of indefinite bits. Further, a bit-wise addition, subtraction, or exclusive OR operation is performed to carry out addition of error detection codes and a scramble process while maintaining the gray code characteristics or the special track code characteristics. This enables a drastic increase in the detection accuracy of addresses.

(2) To deal with higher-quality videos recorded on the information recording medium, it is necessary to improve the quality of sub-picture. However, when instead of a conventional 2-bit expression, a 4-bit expression is employed for the sub-pictures, a larger amount of data must be recoded. It is thus necessary to increase the capacity of the information recording medium on which the sub-pictures are to be recorded. The L/G recording enables the recording capacity to be increased compared to the groove recording. Further, no recording marks can be formed on the prepit addresses. Accordingly, the wobble modulation allows address information to be recorded more efficiently than the use of the prepit addresses. Therefore, the recording capacity can be maximized by the "L/G recording + wobble modulation". Further, in this case, the track pitch is dense. Consequently, the capability of detecting addresses must be further improved to make accesses more reliable. Since a problem with the "L/G recording + wobble modulation" is the generation of indefinite bits, the gray codes or the special track codes are employed to reduce the incidence of indefinite bits. Further, a bit-wise addition, subtraction, or exclusive OR operation is performed to carry out addition of error detection codes and a scramble process while maintaining the gray code characteristics or the special track code characteristics. This enables a drastic increase in the detection accuracy of addresses.

<Zone division is efficiently accomplished to increase the recording efficiency and an increased capacity is ensured to deal with high quality images>

(3) If instead of conventional SD videos, HD videos are recorded on the information recording medium using the file or folder separating technique, it is essential to increase the recording capacity of the information recording medium because the HD videos require a high resolution. The L/G recording enables the recording capacity to be increased compared to the groove recording. Further, no recording marks can be formed on the prepit addresses. Accordingly, the wobble modulation allows address information to be recorded more efficiently than the use of the prepit addresses. Therefore, the recording capacity can be maximized by the "L/G recording + wobble modulation". The L/G recording uses the zone structure shown in FIG. 25. However, the recording efficiency is very low when the

zones are arranged so that one round is equal to an integral multiple of one ECC block. On the other hand, the recording efficiency is very high when one ECC block is divided into a plurality of (in the embodiments of the present invention, eight) segments and when the zones are arranged so that one round of the information recording medium is equal to an integral multiple of one segment, as in the present invention.

(4) To deal with the higher-quality video recorded on the information recording medium, it is necessary to improve the quality of the sub-picture. However, when instead of the conventional 2-bit expression, the 4-bit expression is employed for the sub-pictures, a larger amount of data must be recoded. It is thus necessary to increase the capacity of the information recording medium on which the sub-pictures are to be recorded. The L/G recording enables the recording capacity to be increased compared to the groove recording. Further, no recording marks can be formed on the prepit addresses. Accordingly, the wobble modulation allows address information to be recorded more efficiently than the use of the prepit addresses. Therefore, the recording capacity can be maximized by the "L/G recording + wobble modulation". The L/G recording uses the zone structure shown in FIG. 25. However, the recording efficiency is very low when the zones are arranged so that one round is equal to an integral multiple of one ECC block. On the other hand, the recording efficiency is very high when one ECC block is divided into a plurality of (in the embodiments of the present invention, eight) segments and when the zones are arranged so that one round of the information recording medium is equal to an integral multiple of one segment, as in the present invention.

<High-quality videos are protected, the medium type is identified, and the access speed is ensured>

(4) If instead of conventional SD videos, HD videos are recorded on the information recording medium using the file or folder separating technique, the HD videos require a high resolution and the protection of the HD videos from unfair copying is desirably enhanced. By dividing the ECC block into a plurality of segments, using two types of recording formats in the reproduction-exclusive information recording medium, and providing the header between the segments for high-quality videos to be protected from unfair copying as in the present invention, it is possible not only to ensure format compatibility between the reproduction-exclusive information recording medium and the additionally recordable information recording medium and the rewritable information recording medium but also to facilitate the identification of the medium type. Moreover, in the additionally recordable information recording medium and the rewritable information recording medium, address information is recorded in each segment a plurality of times as a part of the identification information. Consequently, a secondary effect is simultaneously produced, that is, the access speed is improved.

(6) To deal with the higher-quality video recorded on the information recording medium, it is necessary to improve the quality of the sub-picture. For high-quality sub-picture for which the 4-bit expression is employed instead of the conventional 2-bit expression, the protection of the HD video from unfair copying is desirably enhanced. By dividing the ECC block into a plurality of segments, using two types of recording formats in the reproduction-exclusive information recording medium, and providing the header between the segments for high-quality videos to be protected from unfair copying as in the present invention, it is possible not only to ensure format compatibility between the reproduction-exclusive information recording medium and the additionally recordable information recording medium and the rewritable information recording medium but also to facilitate the identification of the medium type. Moreover, in the additionally recordable information recording medium and the rewritable information recording medium, address information is recorded in each segment a plurality of times as a part of the identification information. Consequently, a secondary effect is simultaneously produced, that is, the access speed is improved.

<A surface scratch is allowed to extend up to the same length as that in the prior art even though the recording density is increased to deal with high-quality videos>

(7) If instead of conventional SD videos, HD videos are recorded on the information recording medium using the file or folder separating technique, it is essential to increase the recording capacity of the information recording medium because the HD videos require a high resolution. The increased recording density relatively increases the extent of the adverse effect, on recorded data, of a scratch of the same length on the surface of the information recording medium. In the present invention, compared to the conventional DVD, in which one ECC block is composed of 16 sectors, one ECC block is composed of a double number of, that is, 32 sectors to allow a surface scratch to extend up to the same length as that in the prior art even though the recording density is increased to deal with high-quality videos. Moreover, one ECC block is composed of two smaller ECC blocks and one sector is distributively arranged in two ECC blocks. This allows the data in the same sector to be substantially interleaved. Therefore, the adverse effect of a longer scratch or a burst error can be suppressed.

(8) To deal with the higher-quality video recorded on the information recording medium, it is necessary to improve the quality of the sub-picture. However, when instead of the conventional 2-bit expression, the 4-bit expression is employed for the sub-pictures, a larger amount of data must be recoded. It is thus necessary to increase the capacity of the information recording medium on which the sub-pictures are to be recorded. The increased recording density relatively increases the extent of the adverse effect, on recorded data, of a scratch of the same length on the surface of the information recording medium. In the present invention, compared to the conventional DVD, in which one ECC block is composed of 16 sectors, one ECC block is composed of a double number of, that is, 32 sectors to allow a

surface scratch to extend up to the same length as that in the prior art even though the recording density is increased to deal with high-quality videos. Moreover, one ECC block is composed of two smaller ECC blocks and one sector is distributively arranged in two ECC blocks. This allows the data in the same sector to be substantially interleaved. Therefore, the adverse effect of a longer scratch or a burst error can be suppressed.

(9) If instead of conventional SD videos, HD videos are recorded on the information recording medium using the file or folder separating technique, it is essential to increase the recording capacity of the information recording medium because the HD videos require a high resolution. The increased recording density relatively increases the extent of the adverse effect, on recorded data, of a scratch of the same length on the surface of the information recording medium. In the present invention, compared to the conventional DVD, in which one ECC block is composed of 16 sectors, one ECC block is composed of a double number of, that is, 32 sectors to allow a surface scratch to extend up to the same length as that in the prior art even though the recording density is increased to deal with high-quality videos. Moreover, one ECC block is composed of two smaller ECC blocks, and in the present invention, PO data belonging to different smaller ECC blocks are inserted for the respective sectors. Accordingly, the PO data from the smaller ECC blocks are interleaved (distributively arranged) in every other sector. This makes the PO data more reliable even with a scratch, thus enabling an accurate error correcting process.

(10) To deal with the higher-quality videos recorded on the information recording medium, it is' necessary to improve the quality of the sub-picture. However, when instead of the conventional 2-bit expression, the 4-bit expression is employed for the sub-pictures, a larger amount of data must be recoded. It is thus necessary to increase the capacity of the information recording medium on which the sub-pictures are to be recorded. The increased recording density relatively increases the extent of the adverse effect, on recorded data, of a scratch of the same length on the surface of the information recording medium. In the present invention, compared to the conventional DVD, in which one ECC block is composed of 16 sectors, one ECC block is composed of a double number of, that is, 32 sectors to allow a surface scratch to extend up to the same length as that in the prior art even though the recording density is increased to deal with high-quality videos. Moreover, one ECC block is composed of two smaller ECC blocks, and in the present invention, PO data belonging to different smaller ECC blocks are inserted for the respective sectors. Accordingly, the PO data from the smaller ECC blocks are interleaved (distributively arranged) in every other sector. This makes the PO data more reliable even with scratches, thus enabling an accurate error correcting process.

<A perfect compatibility is ensured between the reproduction-exclusive information recording medium and the additionally recordable information recording medium and an additional writing process can be executed using a small unit>

(11) A problem with the conventional DVD-R or DVD-RW is that an additional writing and rewriting cannot be executed using a small unit. When a restricted overwrite process is executed to force such an additional writing or rewriting, already recorded information may be destroyed. A perfect compatibility can be ensured between the reproduction-exclusive information recording medium and the additionally recordable information recording medium by allowing plural types of recording formats to be set for the reproduction-exclusive information recording medium so that the reproduction-exclusive information recording medium has a recording structure in which the header is provided between the segments into which the ECC block is divided, as in the present invention. Moreover, an additional writing or a rewriting can be started in the middle of the header. This prevents the additional writing or rewriting process from destroying the information already recorded in the segments. Further, during an additional writing or rewriting, guard areas are recorded in the header so as to partly overlap each other. This prevents the presence of a gap area in the header which contains no recording marks. It is thus possible to eliminate the adverse effect of the crosstalk between two layers caused by the gap area and to prevent interlayer crosstalk in single-side two recording layers.

<Defined address information is more frequently placed to ensure the access speed>

(12) The embodiments of the present invention can predictively determine indefinite bits utilizing the even/odd number identification information for the track number. However, this information is used only for predictive determinations but not for definitions. In contrast, track information can be very accurately detected in parts which contain no indefinite bits but to which error detection codes are added. Thus, in the present invention, indefinite bits are arranged in the groove areas and thus distributively arranged both in the land areas and in the groove areas. This enables the formation, in the land areas, of parts which contain no indefinite bits but to which error detection codes are added. However, since the indefinite bits are distributively arranged both in the land areas and in the groove areas, the frequency relatively decreases with which the track number information 611 and 612 on tracks containing no indefinite bits is placed. In contrast, in the present invention, address information is arranged a plurality of times within each segment to increase the frequency of parts which contain no indefinite bits but to which error detection codes are added. This allows address information to be more frequently reproduced and ensures a high access speed.

<The wobble addresses are more accurately read >

(13) As shown in FIG. 26, the accuracy with which wobble addresses are read is increased by allowing the wobbles to be more frequently reversed, at the boundaries (marked with "triangles") between 1 address bit areas 511. Thus, the wobbles are more frequently reversed at the boundaries (marked with "triangles") between 1 address bit

areas 511 by removing "000000" from a group of values that can be had by the segment address information 621, shown in FIGS. 32 and 33, and applying data scrambling (642). On this occasion, if "0" consecutively appears for a long period within the seed information 641 for scrambling, the wobble reversal frequency is likely to increase when the data scrambling is applied. Therefore, the wobble reversal frequency is increased when the data scrambling is applied, by removing "000000" from the group of values that can be had by the segment address information 621, to allow "1" to appear more frequently within the seed information.

<The track number is more accurately reproduced from the land by ensuring that the track number can be reproduced from the land>

(14) The embodiments of the present invention can predictively determine indefinite bits utilizing the even/odd number identification information for the track number. However, this information is used only for predictive determinations but not for definitions. In contrast, track information can be very accurately detected in parts which contain no indefinite bits but to which error detection codes are added. Thus, in the present invention, indefinite bits are arranged in the groove areas and thus distributively arranged both in the land areas and in the groove areas. This enables the formation, in the land areas, of parts which contain no indefinite bits but to which error detection codes are added. As a result, the track number can be accurately read from the land to ensure the stability and high speed of accesses to the land portion.

Now, with reference to Table 2, description will be given of the correspondences between various combined configurations and the effect numbers.

[Description of Effects with Respective Effect Numbers Corresponding to Table 2]

<A very easy method can be used to distributively arrange indefinite bits in the groove and land areas>

The embodiments of the present invention can distributively arrange indefinite bits in the groove and land areas using a very easy method of employing a wobble phase modulation of ±90° to modulate the light exposure of the condensed spots 701 to 703 shown in FIG. 39 and used to form the groove areas and to vary the relative positions of the two condensed spots. Thus, the embodiments of the present invention can be implemented using a conventional master recording apparatus for producing information recording media. Since the embodiments of the present invention can be implemented using the existing apparatus, inexpensive information recording media can be manufactured without the need to introduce new facilities.

<The accuracy (reliability) with which wobble address information is reproduced can be sharply increased>

(16) The embodiments of the present invention can carry out both generation of EDC codes and a data scramble process using only a bit-wise "adding operation", "subtracting operation", or "exclusive OR" operation, or their combination together with arbitrary data. Consequently, the very easy method can be used to drastically increase the accuracy (reliability) with which wobble address information is reproduced (the EDC-based error sensing and the scrambling increase the incidence of the wobble reversal position, allowing a reproducing system to easily apply a PLL). Further, only a small amount of additional circuits are required to carry out this method. Therefore, an inexpensive information reproducing apparatus or information recording and reproducing apparatus can be provided.

<Indefinite bits are prevented from being arranged in a line in the vertical direction within each ECC block, to ensure the error correcting capability>

(17) Pieces of information are very regularly arranged in the data layout in the wobble address placed areas 561 and 562, shown in FIG. 31C, and in the track number information 611 and 612, shown in FIGS. 32 and 33. Thus, disadvantageously, indefinite bits are arranged in a line in the vertical direction within the ECC block shown in FIG. 18 to significantly degrade the error correcting capability. The present invention uses various methods to shift the arrangement of the indefinite bits to prevent them from being arranged in a line in the vertical direction within the ECC block. This enables the error correcting capability to be appropriately provided within the ECC block. It is thus possible to reduce the rate of errors in information reproduced from the recording marks recorded on the information recording medium, thus enabling accurate reproductions.

<The reliability of reproduction of wobble address information can be improved very easily and inexpensively>

(18) Data scrambling can be applied using a very simple circuit such as the one shown in FIG. 48. Further, the reliability of reproduction of wobble address information can be improved by allowing the wobbles to be more frequently reversed at the boundaries between the address bit areas, to facilitate the detection of the positions of the boundaries between the address bit areas. Moreover, the circuit shown in FIG. 48 can be produced very inexpensively. Therefore, an inexpensive information reproducing apparatus or information recording and reproducing apparatus can be provided.

(19) The contents of the pattern are changed between two address areas to allow the wobbles to be more frequently reversed at the boundaries between the address bit areas, to facilitate the detection of the positions of the boundaries between the address bit areas. This makes it possible to improve the reliability of reproduction of wobble address information.

<The even/odd identification information for the track number can be placed so as to be accurately detected and without affecting the recording marks>

(20) The even/odd identification information for the track number is recorded on the basis of a change in physical shape such as the one shown in FIG. 37 or 54 instead of the data structure of wobble modulation. Consequently, the even/odd identification information for the track number can be accurately detected. Further, the even/odd identification information for the track number is placed in the header area between the segments. This prevents recorded information from being affected by the recording mark recorded in each segment. Furthermore, this information can be utilized to determine the type of the information recording medium, that is, the reproduction-exclusive type, the additionally recordable type, or the rewritable type. It is thus possible to easily sense unfair copying of high-quality video or sub-picture information desirably prevented from being unfairly copied.

<Indefinite bits can be predictively determined accurately>

(21) The even/odd identification information for the track number is recorded on the basis of a change in physical shape such as the one shown in FIG. 37 or 54 instead of the data structure of wobble modulation. Consequently, the even/odd identification information for the track number can be accurately detected. Thus, indefinite bits can be predictively determined using as a reference the even/odd identification information for the track number, which can be accurately determined. This enables relatively accurate predictive determinations.

<The address numbers can be accurately defined on the land areas without providing indefinite bits in the groove areas>

(22) The embodiments of the present invention can predictively determine indefinite bits utilizing the even/odd number identification information for the track number. However, this information is used only for predictive determinations but not for definitions. In contrast, track information can be very accurately detected in parts which contain no indefinite bits but to which error detection codes are added. As shown in FIG. 38, the present invention uses the L/G recording method to progressively set the track number information zigzag. This makes it possible to avoid providing indefinite bits in the groove areas, while setting parts which contain no indefinite bits but to which error detection codes are added to allow the address numbers to be accurately defined. It is thus possible not only to accurately define the track numbers on the land areas but also to ensure a relatively high access speed (because of the quicker definition of the address numbers).

<The address numbers can be defined easily and quickly both on the lands and on the grooves>

(23) As shown in FIGS. 48 to 50, 32, and 33, address defined and predictively determined areas are predetermined both for the lands and for the grooves. Accordingly, the address defined areas and the address predicted areas can be immediately determined to define and predict the address number information. It is thus possible not only to easily implement the method of reproducing address information but also to quickly define the address numbers. Therefore, an access process can be relatively quickly executed.

<Reliability of reproduction of the recording marks from each segment>

(24) In the present invention, each ECC block is divided into a plurality of segments, and the header is placed between the segments. As shown in FIG. 51, track address information is placed in the header area. As a result, even if address information is recorded by wobble modulation for the L/G recording, indefinite bits can be prevented from being mixed into the segment area. Consequently, high-quality reproduction signals are obtained from the recording marks in the segment area. Therefore, reproductions from the recording marks can be made reliable.

As described above, the present invention provides an information recording medium which enables "high definition" main video and high-quality sub-picture to be displayed and which has an increased capacity, the information recording medium ensuring a high format compatibility, improving the reliability of an additional writing or rewriting process on PC data and of reproduction of address information, allowing a reference clock to be more accurately extracted from wobble signals, ensuring quick accesses, and enabling expansion to a single-side 2-recording-layer structure. The present invention also provides an information reproducing apparatus that can stably reproduce data from the information recording medium or an information recording and reproducing apparatus that can stably record data on the information recording medium.

Table 1 Table illustrating correspondences between various combined configurations and effect numbers (I)

| Combined effect number | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| File or folder separation between SD/HD | ○ | | ○ | | ○ | | ○ | | ○ | | △ | △ | △ | △ |
| 4 bits expression and compression rule for sub-picture information | | ○ | | ○ | | ○ | | ○ | | ○ | △ | △ | △ | △ |
| A) Plural types of recording formats can be set for reproduction-exclusive information recording medium | | | | | ○ | ○ | | | | | ○ | | | |
| B) ECC block structure using product codes | | | | | ○ | ○ | ○ | ○ | ○ | ○ | | | | |
| C) Distributively arrange data from sector in plurality of smaller ECC blocks | | | | | | | ○ | ○ | | | | | | |
| D) Insert different PO group data for respective sectors | | | | | | | | | ○ | ○ | | | | |
| E) Structure in which ECC block is divided into segments | | | ○ | ○ | ○ | ○ | △ | △ | △ | △ | ○ | △ | △ | △ |
| F) Structure in which header is placed between segments | | | △ | △ | ○ | ○ | | | | | ○ | | | |
| G) Guard areas are recorded in partly overlapping manner | | | | | | | | | | | ○ | | | |
| H) Arrange address information/segment a plurality of times | | | | | ○ | ○ | | | | | | ○ | | |
| I) Set particular conditions for method of applying address numbers | | | | | | | | | | | | | ○ | |
| J) L/G recording + wobble modulation | ○ | ○ | ○ | ○ | | | | | | | | | | ○ |
| K) Distributively arrange indefinite bits also in groove areas | | | | | | | | | | | | ○ | | ○ |

(Continued)

Table 1 Table illustrating correspondences between various combined configurations and effect numbers (I)

| Combined effect number | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| L) Distributively arrange indefinite bits in Lands and Grooves | | | | | | | | | | | | ○ | | |
| M) Wobble phase modulation of ±90° | | | | | | | | | | | | | | |
| N) Employ gray codes or special track codes | ○ | ○ | | | | | | | | | | | | |
| O) Add EDCs to track addresses | ○ | ○ | | | | | | | | | | △ | | |
| P) Scramble gray and special track codes | △ | △ | | | | | | | | | | | △ | |
| Q) Rearrange indefinite bit positions so as to be misaligned | | | | | | | | | | | | | | |
| R) Scramble address information | △ | △ | | | | | | | | | | | ○ | |
| S) Change contents of pattern between two address areas | | | | | | | | | | | | | | |
| T) Place even/odd track number identification information | | | | | | | | | | | | △ | | |
| U) Predictively determine indefinite bits using even/odd number identification information | | | | | | | | | | | | △ | | |
| V) Progressively set track number information zigzag | | | | | | | | | | | | | | |
| W) Predetermine address defined and predictively determined areas | | | | | | | | | | | | | | |
| X) Place track address in header area | | | | | | | | | | | | | | |

Table 2 Table illustrating correspondences between various combined configurations and effect numbers (II)

| Combined effect number | 15 | 16 | 17 | 18 | 19 | 20 | 21 | 22 | 23 | 24 |
|---|---|---|---|---|---|---|---|---|---|---|
| File or folder separation between SD/HD | △ | △ | △ | △ | △ | △ | △ | △ | △ | △ |
| 4 bits expression and compression rule for sub-picture information | △ | △ | △ | △ | △ | △ | △ | △ | △ | △ |
| A) Plural types of recording formats can be set for reproduction-exclusive information recording medium | | | | | | △ | | | | △ |
| B) ECC block structure using product codes | | | ○ | △ | △ | | | | | |
| C) Distributively arrange data from sector in plurality of smaller ECC blocks | | | △ | △ | △ | | | | | |
| D) Insert different PO group data for respective sectors | | | | | | | | | | |
| E) Structure in which ECC block is divided into segments | △ | △ | △ | △ | △ | ○ | | △ | △ | △ |
| F) Structure in which header is placed between segments | | | | | | ○ | | | | |
| G) Guard areas are recorded in partly overlapping manner | | | | | | | | | | |
| H) Arrange address information/segment a plurality of times | | | | | | | | △ | | |
| I) Set particular conditions for method of applying address numbers | | | | | | | | | | |
| J) L/G recording + wobble modulation | ○ | | | | | | | ○ | | ○ |
| K) Distributively arrange indefinite bits also in groove areas | △ | | | | | | | | ○ | |

(Continued)

Table 2 Table illustrating correspondences between various combined configurations and effect numbers (I)

| Combined effect number | 15 | 16 | 17 | 18 | 19 | 20 | 21 | 22 | 23 | 24 |
|---|---|---|---|---|---|---|---|---|---|---|
| L) Distributively arrange indefinite bits in Lands and Grooves | ○ | | | | | | | | ○ | |
| M) Wobble phase modulation of $\pm 90^\circ$ | ○ | | | | | | | | | |
| N) Employ gray codes or special track codes | | ○ | | | | | | △ | | |
| O) Add EDCs to track addresses | | ○ | | | | | | ○ | | |
| P) Scramble gray and special track codes | | ○ | | △ | | | | | | |
| Q) Rearrange indefinite bit positions so as to be misaligned | | | ○ | △ | △ | | | | | |
| R) Scramble address information | | | △ | ○ | | | | | | |
| S) Change contents of pattern between two address areas | | | △ | | ○ | | | | | |
| T) Place even/odd track number identification information | | | | | | ○ | ○ | | | |
| U) Predictively determine indefinite bits using even/odd number identification information | | | | | | | ○ | | | |
| V) Progressively set track number information zigzag | | | | | | | | ○ | | |
| W) Predetermine address defined and predictively determined areas | | | | | | | | | ○ | |
| X) Place track address in header area | | | | | | | | | | |

## Claims

1. An information storage medium having tracks **characterized in that** information is recorded, the tracks being formed as a groove and a land,
wherein the groove has a synchronous structure in which wobbles are formed on both walls of the groove and synchronized with each other, and the land has an asynchronous structure in which wobbles formed on both walls of the land are a synchronized with each other.

2. The information storage medium according to claim 1, **characterized in that** the groove includes pairs of odd regions and even regions arranged at regular intervals, a wobble address is recorded on one of the odd region and the even region, and a wobble address is recorded on the even region of a groove which is formed adjacent to another groove having an odd region in which a wobble address is recorded, a land being interposed between said groove and said another groove.

3. The information storage medium according to claim 1, **characterized in that** one of two lands adjacent to both sides of the groove in a wobble address region has the synchronous structure.

4. An information recording and reproducing apparatus which records information on an information storage medium by forming a recording mark, the information storage medium having a data area to record information and a management area to manage the information recorded on the data area and including a groove and a land formed spirally as information recording tracks, the apparatus **characterized by** comprising:

   a first additionally writing means for recording information in the groove in the data area of the information storage medium, and deleting the information on the management area and additionally writing information to the groove without overwriting the groove when a rewrite instruction or a delete instruction is given;
   a second additionally writing means for recording information in the land in the data area after information is additionally written to the whole groove by the first additionally writing means, and deleting the information on the management area and additionally writing information to the land when a rewrite instruction or a delete instruction is given; and
   an overwriting means for overwriting the groove or the land recorded with the information to which the rewrite instruction or the delete instruction is given, after the information is additionally written to the whole land by the second additionally writing means.

5. An information recording/reproducing apparatus which records information on an information storage medium by forming a recording mark, the information storage medium having a data area to record information and a management area to manage the information recorded on the data area and including a groove and a land formed spirally as information recording tracks, the apparatus **characterized by** comprising:

   a first additionally writing means for recording information in the groove in the data area of the information storage medium, and deleting the information on the management area and additionally writing information to the groove without overwriting the groove when a rewrite instruction or a delete instruction is given;
   a first overwriting means for overwriting the groove recorded with the information to which the rewrite instruction or the delete instruction is given, after the information is additionally written to the whole groove by the first additionally writing means;
   a second additionally writing means for recording information in the land in the data area after information is recorded on the whole groove by the first overwriting means, and deleting the information on the management area and additionally writing information to the land without overwriting the land when a rewrite instruction or a delete instruction is given; and
   a second overwriting means for overwriting the land recorded with the information to which the rewrite instruction or the delete instruction is given, after the information is additionally written to the whole land by the second additionally writing means.

6. The information recording and reproducing apparatus according to one of claims 4 and 5, **characterized by** further comprising a means for determining that an address of the land is j+i, when a last address of the groove is j and an address obtained by tracing the land is i.

7. An information recording method in an information recording/reproducing apparatus which records information on an information storage medium by forming a recording mark, the information storage medium having a data area

to record information and a management area to manage the information recorded on the data area and including a groove and a land formed spirally as information recording tracks, the method **characterized by** comprising:

recording information in the groove in the data area of the information storage medium, and deleting the information on the management area and additionally writing information to the groove without overwriting the groove when a rewrite instruction or a delete instruction is given;
recording information in the land in the data area after information is additionally written to the whole groove, and deleting the information on the management area and additionally writing information to the land when a rewrite instruction or a delete instruction is given; and
overwriting the groove or the land recorded with the information to which the rewrite instruction or the delete instruction is given, after the information is additionally written to the whole land by the second additionally writing means.

**8.** An information recording medium from and on which information can be reproduced or recorded using a focused light,
**characterized in that** data which can be recorded or is recorded on the information recording medium has a first data unit (ECC block),
the first data block being composed of second data units (segments),
the second data unit being composed of third data units (sector),
the third data unit being composed of fourth data units (sync data), and
wherein data errors can be detected or corrected within the first data unit.

**9.** An information recording medium from and on which information can be reproduced and recorded using a focused light,
**characterized in that** data that can be recorded on or reproduced from the information recording medium has a first data unit (ECC block),
the first data unit being composed of second data units (segments),
the second data unit being composed of third data units (sector),
the third data unit being composed of fourth data units (sync data), and
wherein data errors can be detected or corrected within the first data unit,
at least any of zone identification information, segment address information, and track address information is prerecorded on the information recording medium,
the zone identification information or the segment address information is recorded by wobble modulation, and the track address information is recorded using a particular format.

**10.** An information recording medium from and on which information can be reproduced and recorded using a focused light and on which at least any of zone identification information, segment address information, and track address information is prerecorded,
**characterized in that** error detection codes are added to the track address information by at least one of an adding process, a subtracting process, and an exclusive OR operation process or a combination of at least two of these processes.

**11.** An information recording apparatus according to one of claims 8 to 10 having means for recording the data on the information recording medium.

**12.** An information recording apparatus according to one of claims 8 to 10 having means for reproducing the data recorded on the information recording medium.

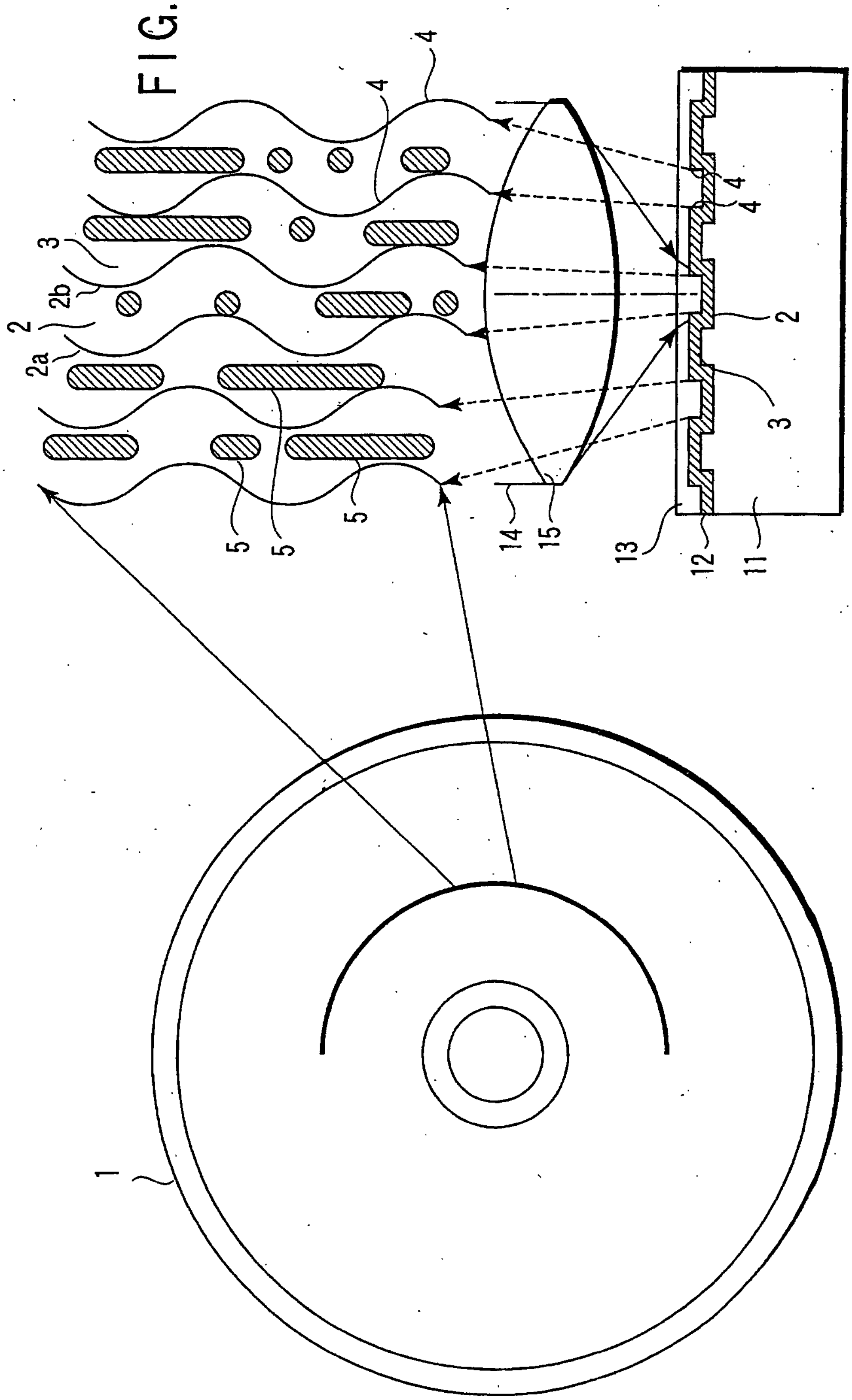


FIG. 1A

FIG. 1B

FIG. 1C

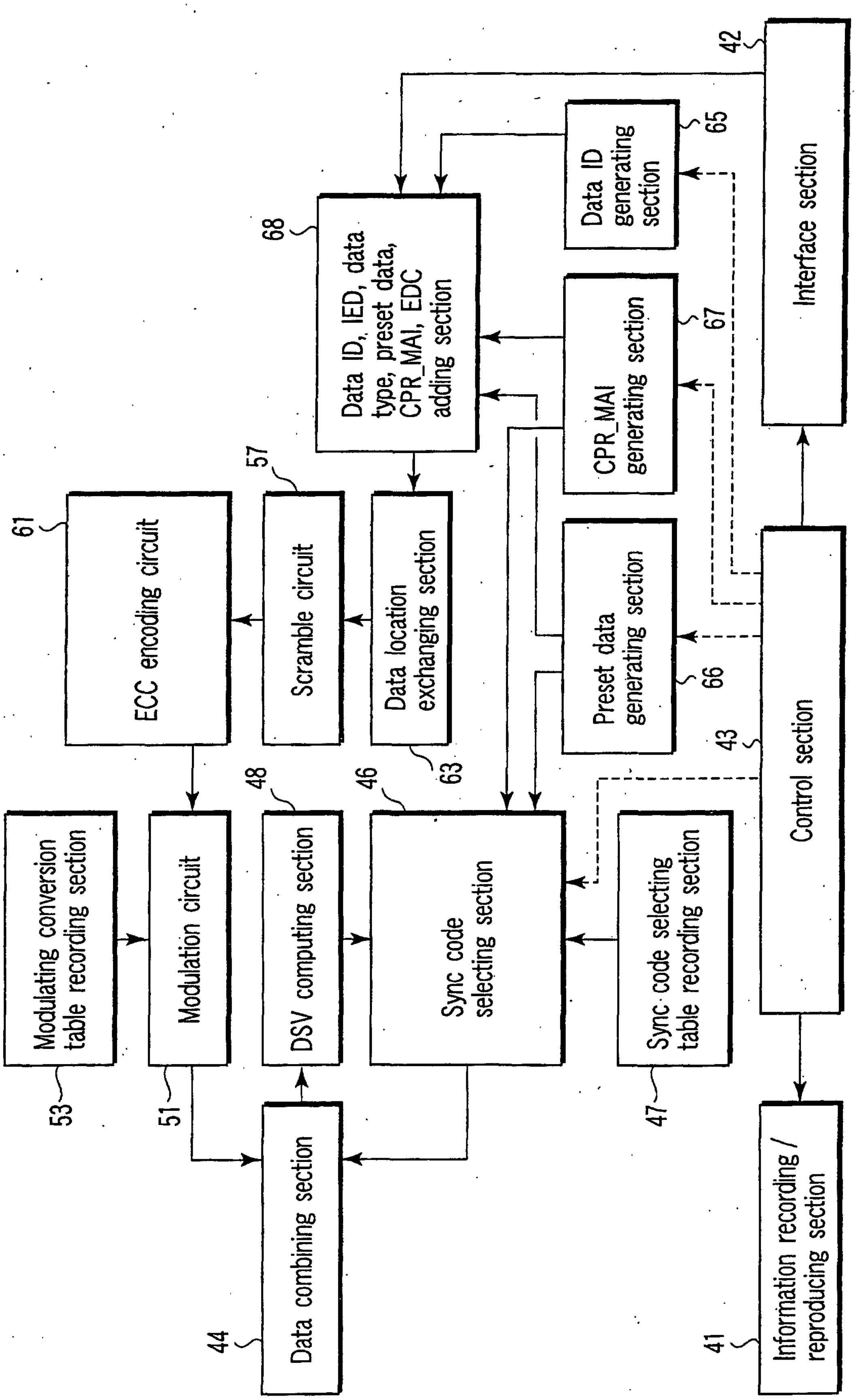

Interface section
42
Data ID generating section
65
Data ID, IED, data type, preset data, CPR_MAI, EDC adding section
68
CPR_MAI generating section
67
Preset data generating section
66
Control section
43
Data location exchanging section
63
Scramble circuit
57
ECC encoding circuit
61
Sync code selecting section
46
DSV computing section
48
Modulation circuit
51
Modulating conversion table recording section
53
Sync code selecting table recording section
47
Data combining section
44
Information recording / reproducing section
41


FIG. 2

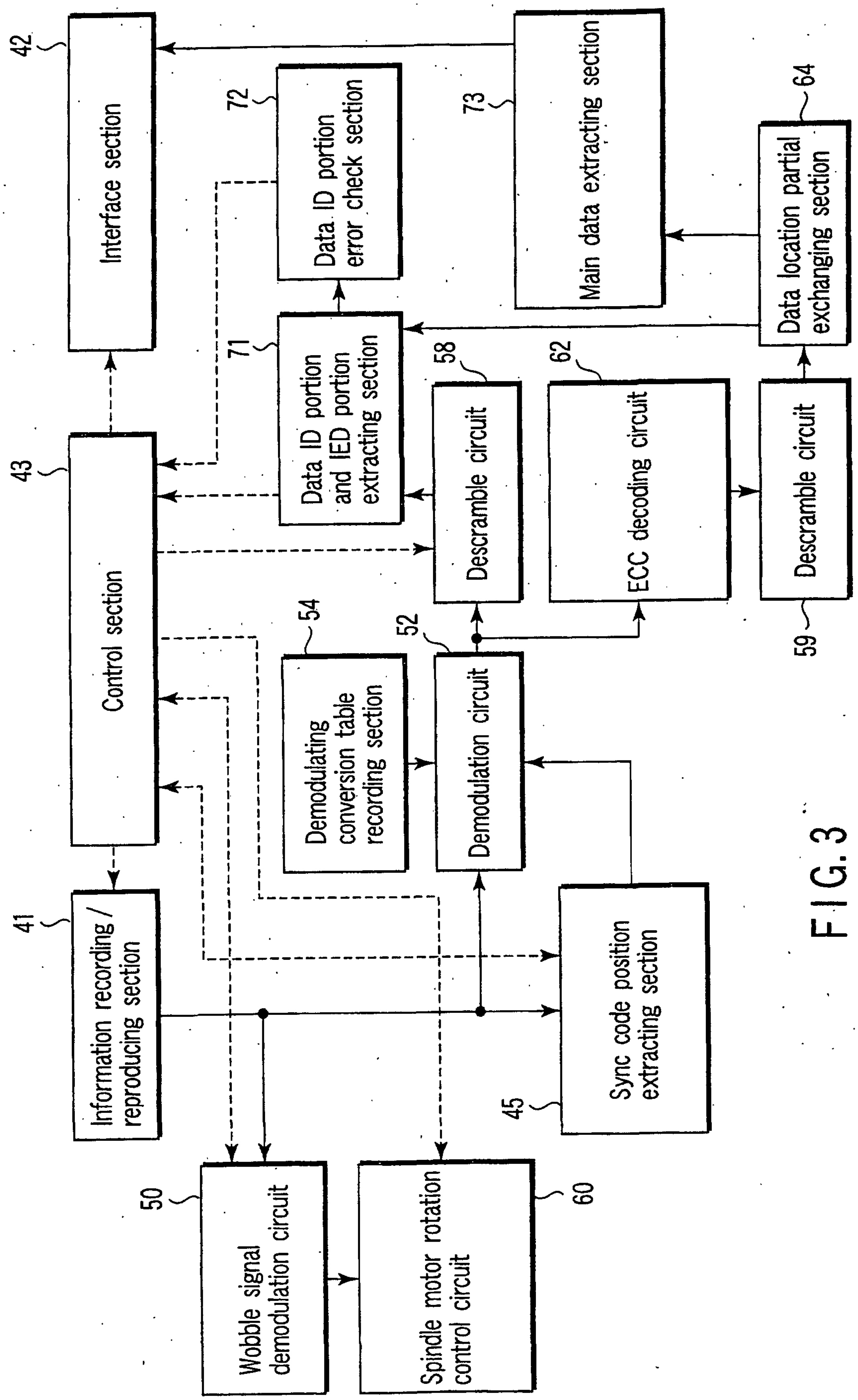

42
Interface section
72
Data ID portion error check section
73
Main data extracting section
64
Data location partial exchanging section
71
Data ID portion and IED portion extracting section
58
Descramble circuit
62
ECC decoding circuit
Descramble circuit
59
43
Control section
54
Demodulating conversion table recording section
52
Demodulation circuit
41
Information recording / reproducing section
45
Sync code position extracting section
50
Wobble signal demodulation circuit
60
Spindle motor rotation control circuit


FIG. 3

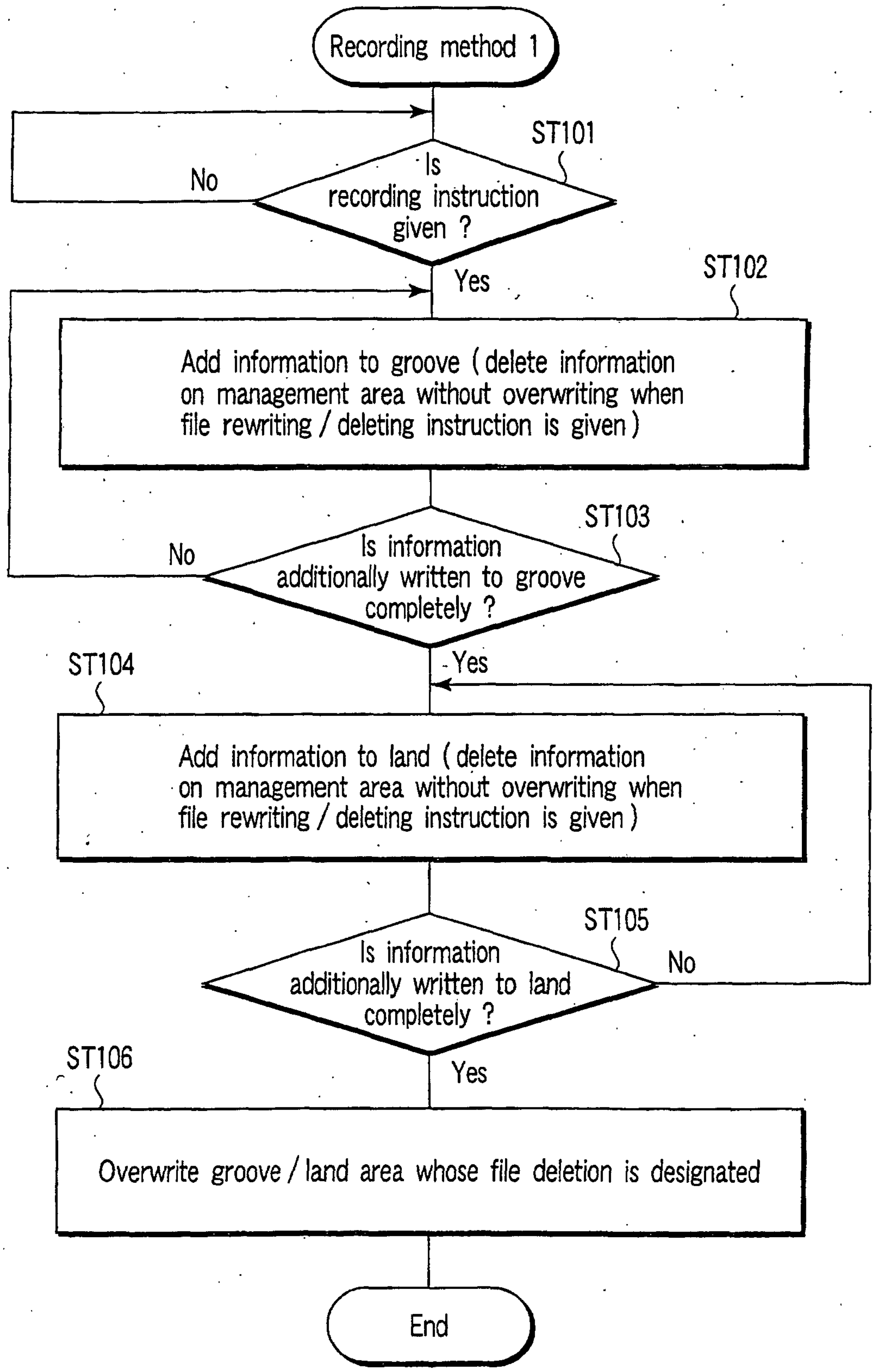
Recording method 1
ST101
Is recording instruction given ?
No
Yes
ST102
Add information to groove ( delete information on management area without overwriting when file rewriting / deleting instruction is given )
ST103
Is information additionally written to groove completely ?
No
Yes
ST104
Add information to land ( delete information on management area without overwriting when file rewriting / deleting instruction is given )
ST105
Is information additionally written to land completely ?
No
Yes
ST106
Overwrite groove / land area whose file deletion is designated
End

FIG. 4

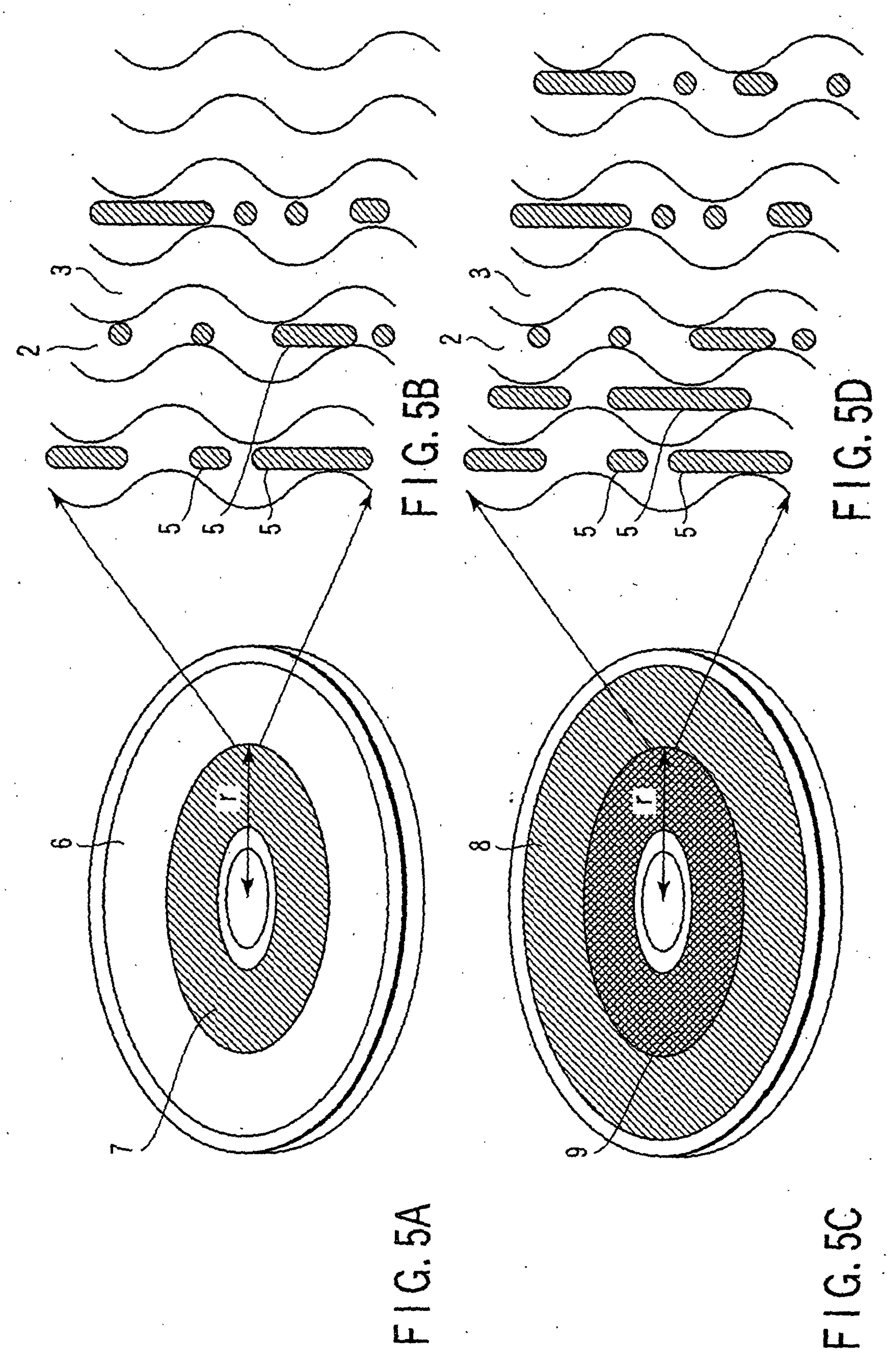
FIG. 5A
FIG. 5B
FIG. 5C
FIG. 5D
2
3
5
6
7
8
9
r

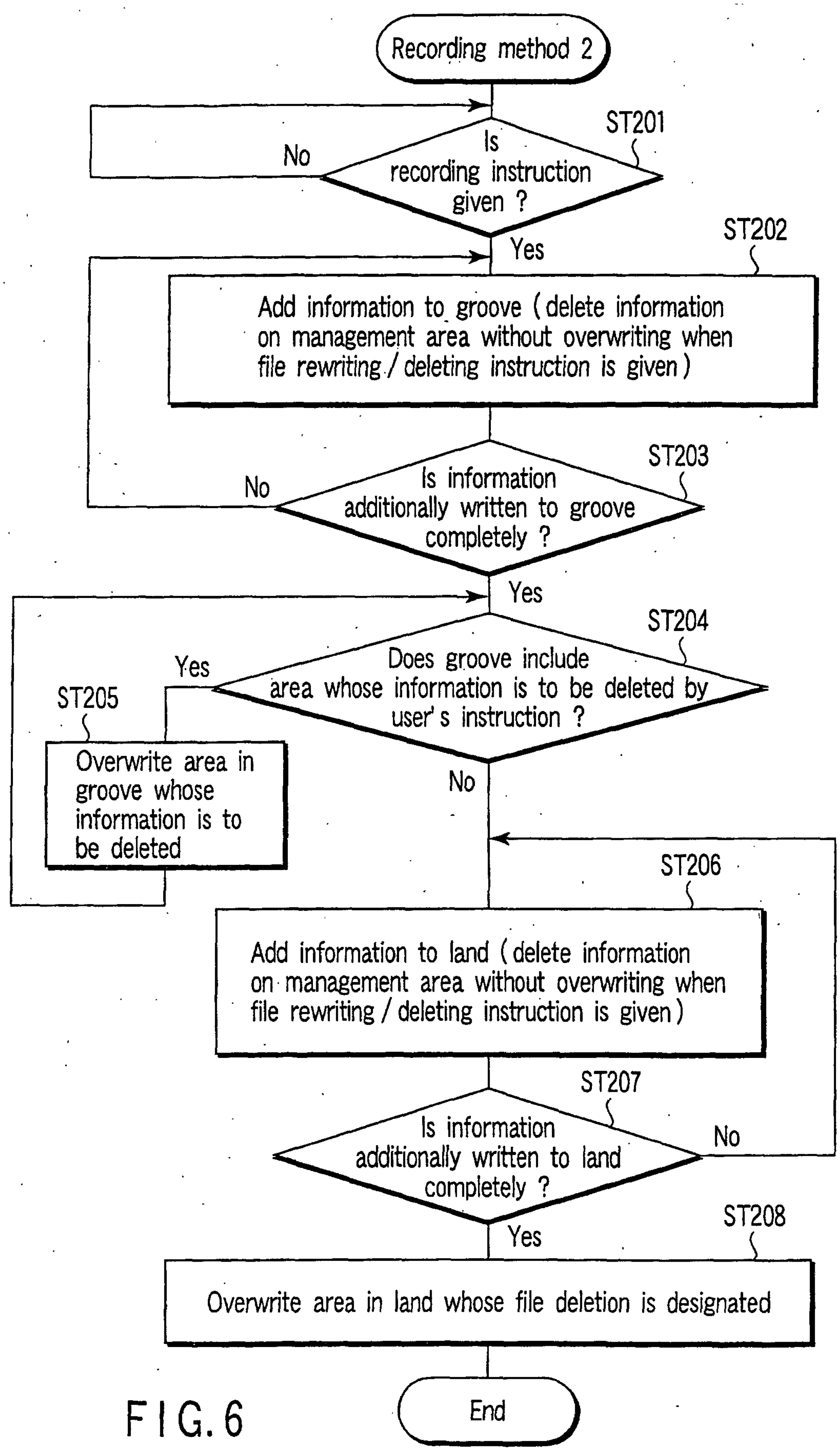
Recording method 2
ST201
Is recording instruction given ?
No
Yes
ST202
Add information to groove (delete information on management area without overwriting when file rewriting / deleting instruction is given)
ST203
Is information additionally written to groove completely ?
No
Yes
ST204
Does groove include area whose information is to be deleted by user's instruction ?
Yes
ST205
Overwrite area in groove whose information is to be deleted
No
ST206
Add information to land (delete information on management area without overwriting when file rewriting / deleting instruction is given)
ST207
Is information additionally written to land completely ?
No
Yes
ST208
Overwrite area in land whose file deletion is designated
End

FIG. 6

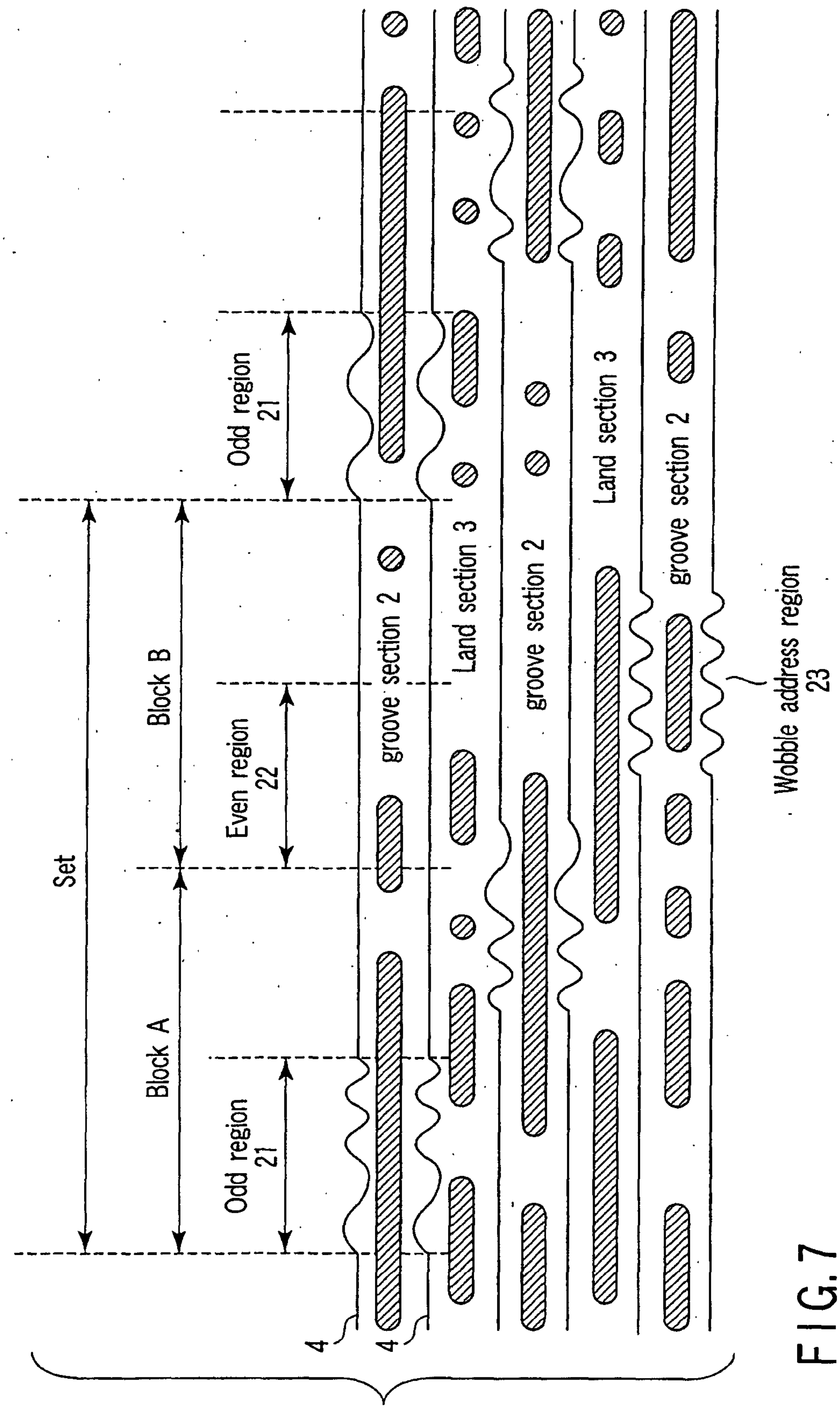
Set
Block A
Block B
Odd region
21
Even region
22
Odd region
21
4
4
groove section 2
Land section 3
groove section 2
Land section 3
groove section 2
Land section 3
groove section 2
Wobble address region
23

FIG. 7

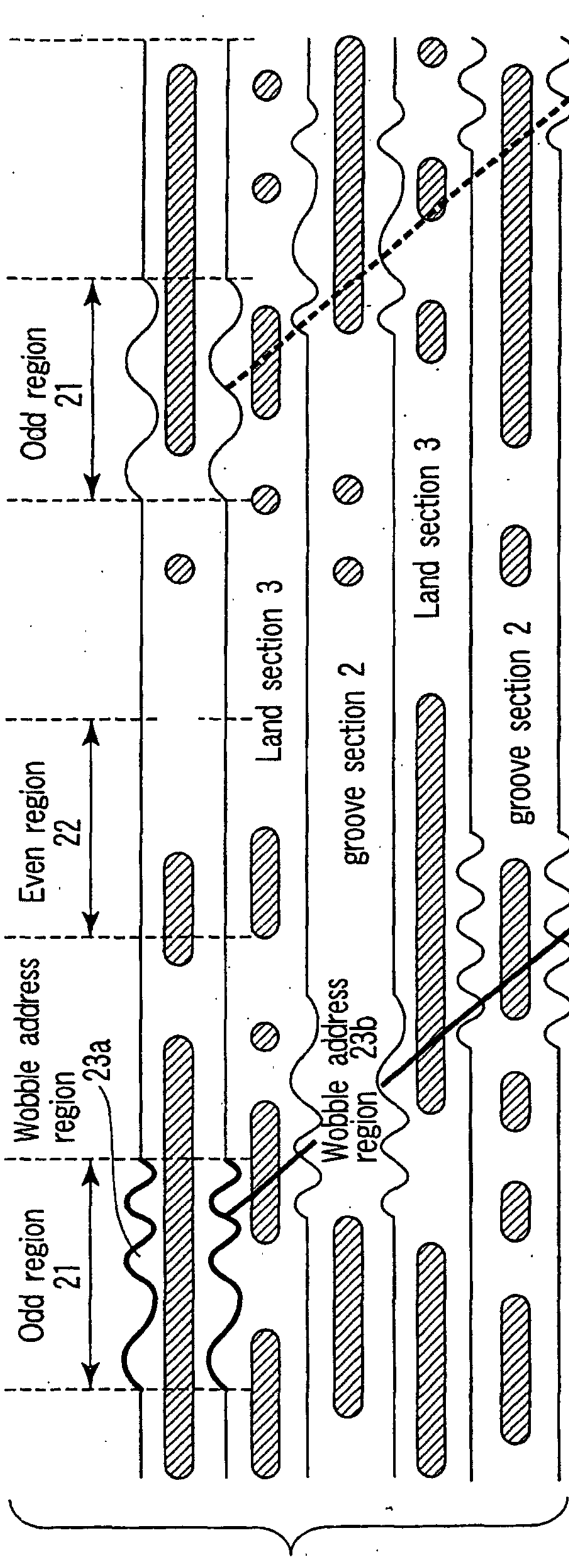
Odd region
21
Wobble address
region
23a
Even region
22
Wobble address
region
23b
Land section 3
groove section 2
Land section 3
groove section 2
Odd region
21
Land section 3

F I G. 8A

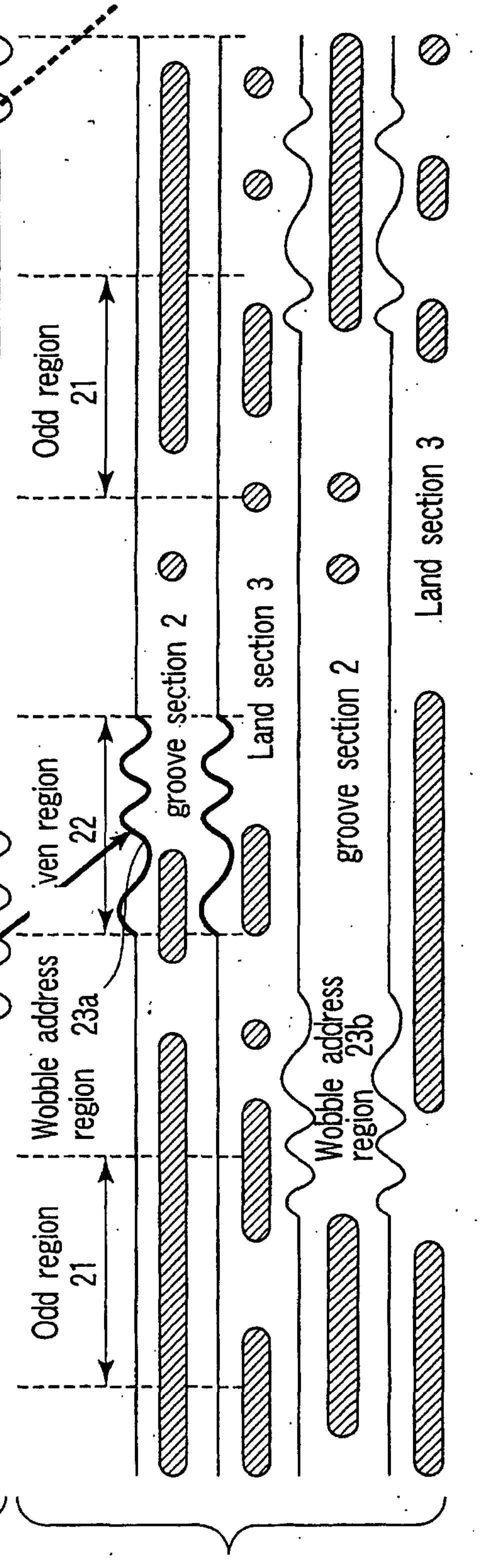
Odd region
21
Wobble address
region
23a
ven region
22
Wobble address
region
23b
groove section 2
Land section 3
groove section 2
Land section 3
Odd region
21
Land section 3

F I G. 8B

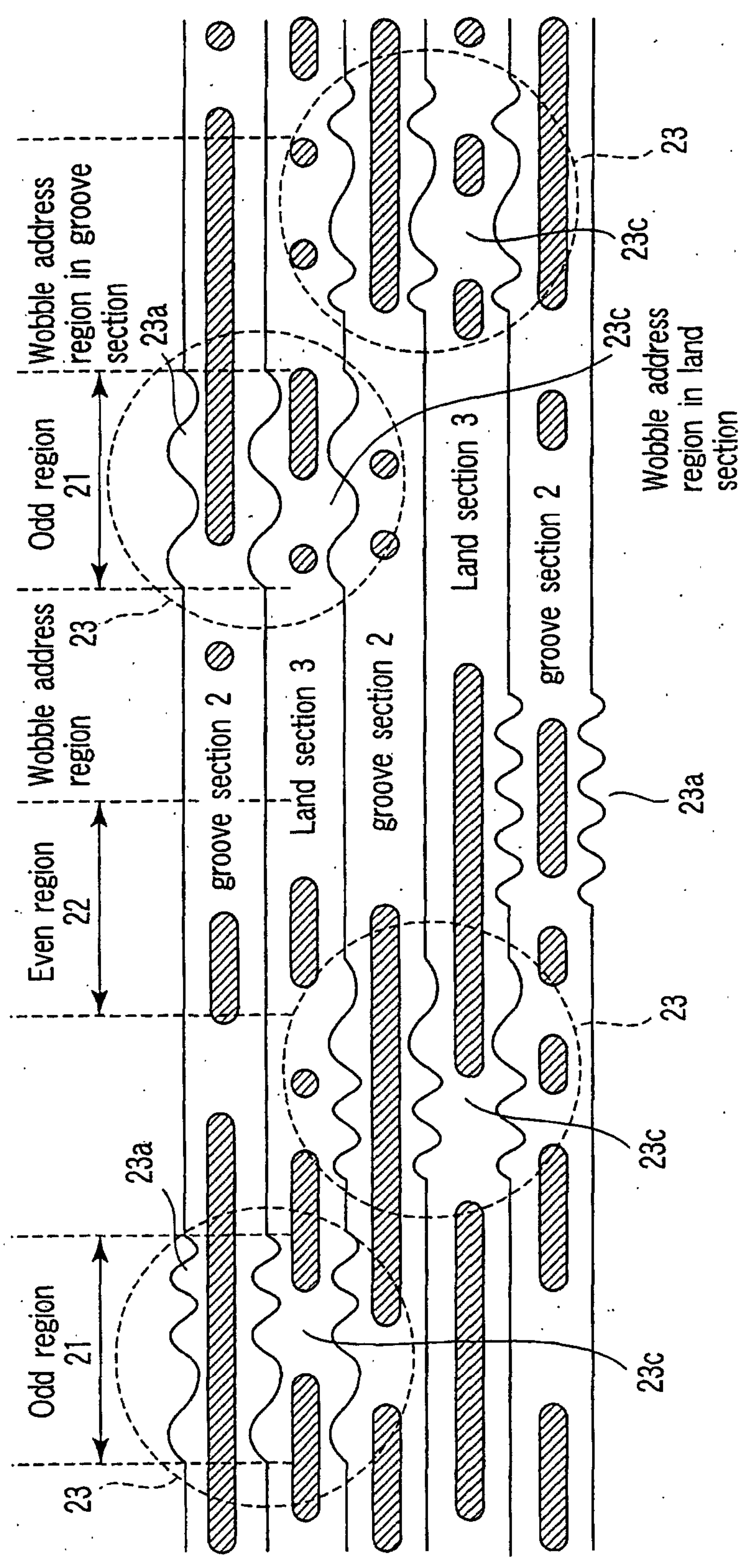

Wobble address region in groove section
23a
Odd region 21
23
Wobble address region
Even region 22
Odd region 21
23a
23
groove section 2
Land section 3
groove section 2
Land section 3
groove section 2
23c
23c
Wobble address region in land section
23
23c
23a
23
23c


FIG. 9

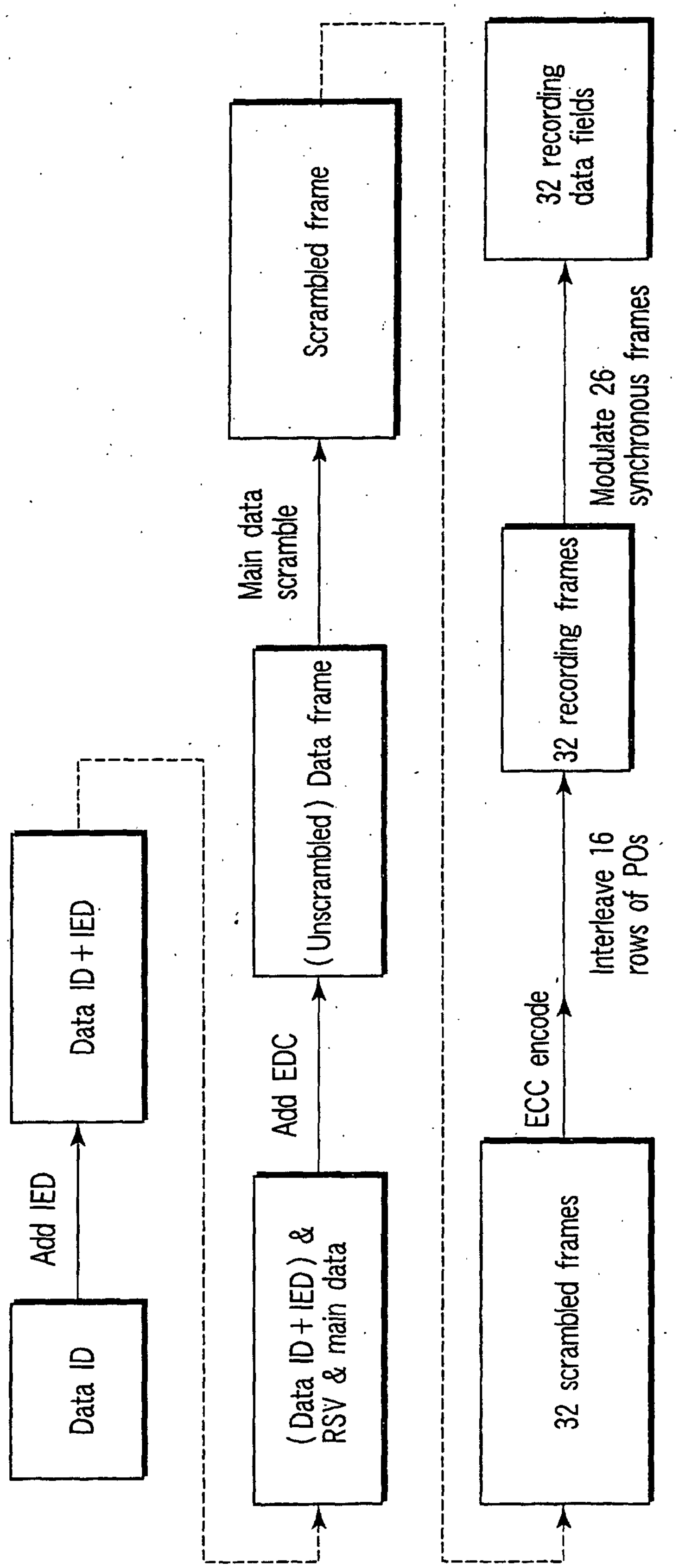
Data ID
Add IED
Data ID + IED
(Data ID + IED) & RSV & main data
Add EDC
(Unscrambled) Data frame
Main data scramble
Scrambled frame
32 scrambled frames
ECC encode
Interleave 16 rows of POs
32 recording frames
Modulate 26 synchronous frames
32 recording data fields

FIG. 10

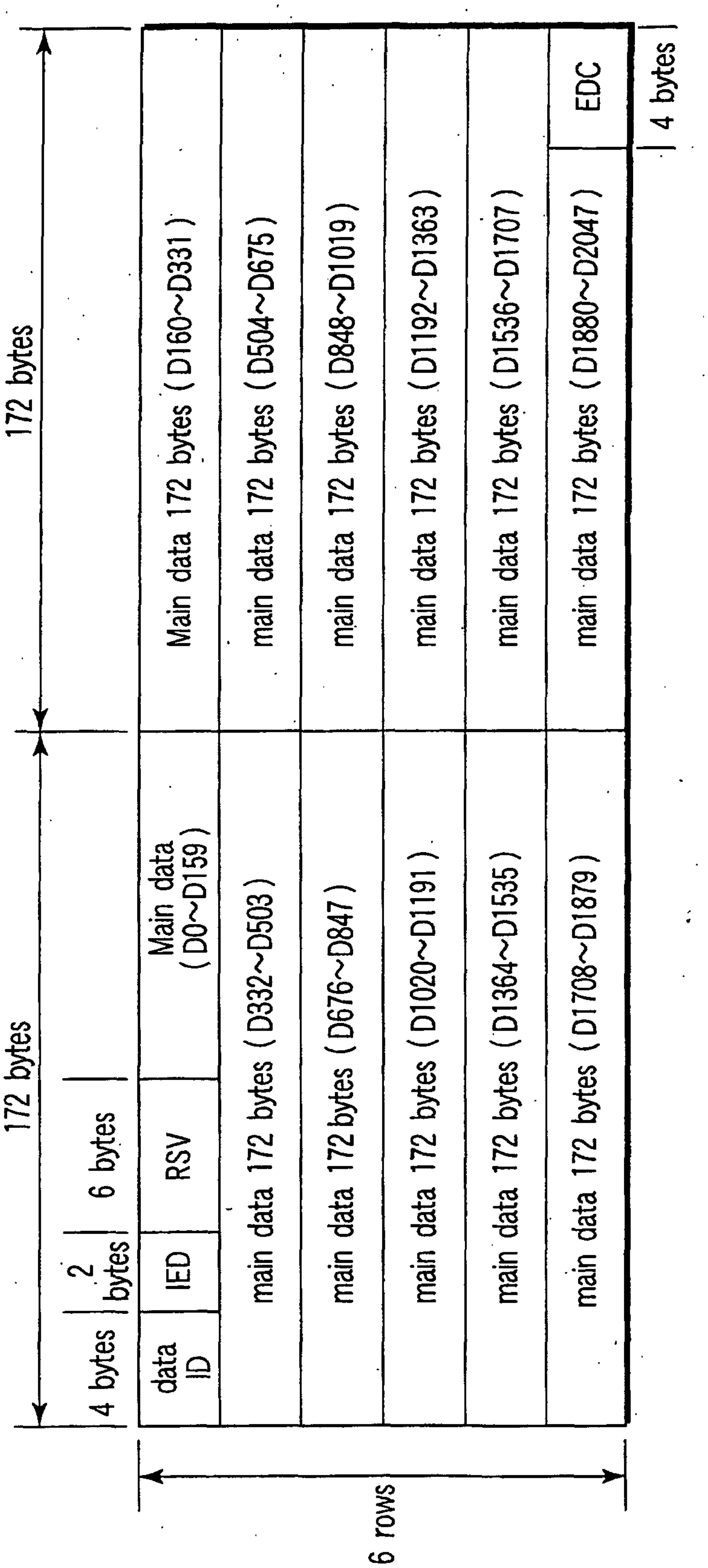
172 bytes
172 bytes
4 bytes
2 bytes
6 bytes
data ID
IED
RSV
Main data (D0~D159)
Main data 172 bytes (D160~D331)
main data 172 bytes (D332~D503)
main data 172 bytes (D504~D675)
main data 172 bytes (D676~D847)
main data 172 bytes (D848~D1019)
main data 172 bytes (D1020~D1191)
main data 172 bytes (D1192~D1363)
main data 172 bytes (D1364~D1535)
main data 172 bytes (D1536~D1707)
main data 172 bytes (D1708~D1879)
main data 172 bytes (D1880~D2047)
EDC
4 bytes
6 rows

FIG. 11

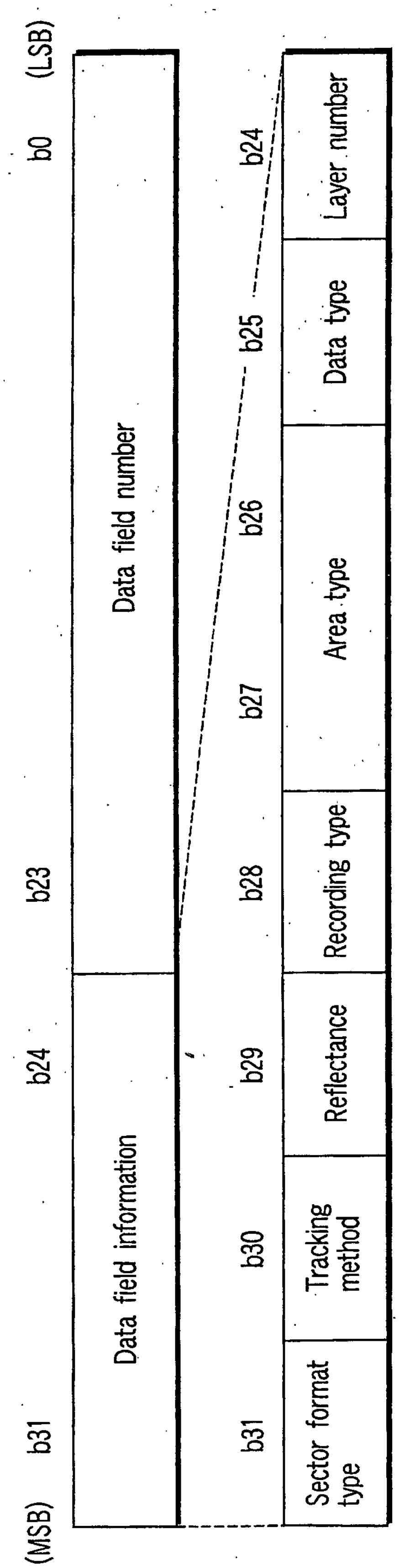
(MSB) b31
b24
b23
b0 (LSB)
Data field information
Data field number
b31
b30
b29
b28
b27
b26
b25
b24
Sector format type
Tracking method
Reflectance
Recording type
Area type
Data type
Layer number

FIG. 12

| Area | Contents |
|---|---|
| Embossed data zone | Sector number |
| Defect management area | Sector number |
| Disk identification zone | Sector number |
| Block used in data area | LSN + 031000h |
| Block unused in data area | One of state 1 : first 3 bits are 0 and number is subsequently incremented, state 2 : between 00 0000h and 00 00Hh, and state 3 : Unrecorded |

FIG. 13

| Area | | Contents |
|---|---|---|
| Embossed data zone | | Reserved |
| Rewritable data zone | Lead-in area, lead-out area | Reserved |
| | Data area | 0b : General data<br>1b : Real-time data |

FIG. 14

| Initial preset number | Initial preset value | Initial preset number | Initial preset value |
|---|---|---|---|
| 0h | 0001h | 8h | 0010h |
| 1h | 5500h | 9h | 5000h |
| 2h | 0002h | 0Ah | 0020h |
| 3h | 2A00h | 0Bh | 2001h |
| 4h | 0004h | 0Ch | 0040h |
| 5h | 5400h | 0Dh | 4002h |
| 6h | 0008h | 0Eh | 0080h |
| 7h | 2800h | 0Fh | 0005h |

Initial value in shift register

FIG. 15A

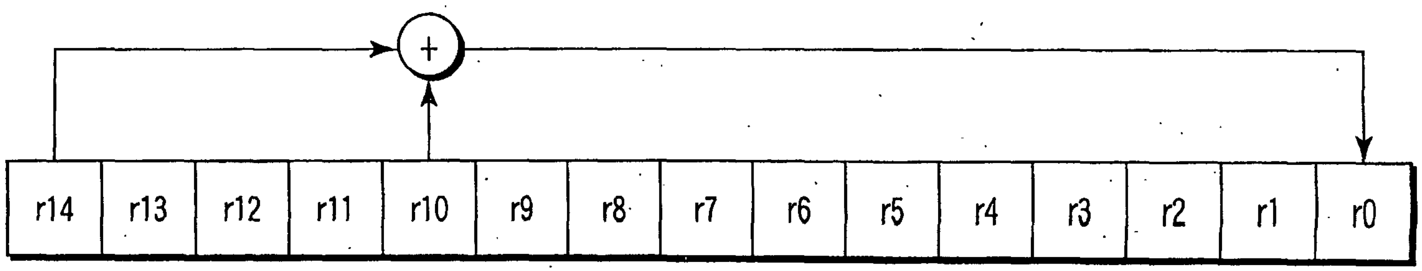


Feedback shift register

FIG. 15B

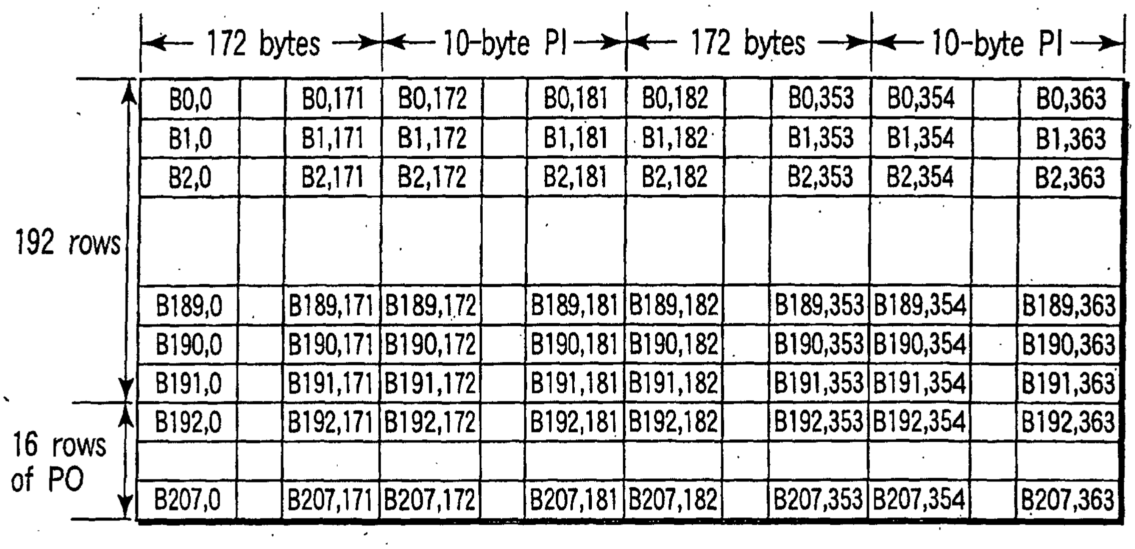
172 bytes
10-byte PI
172 bytes
10-byte PI
192 rows
16 rows of PO
B0,0 B0,171 B0,172 B0,181 B0,182 B0,353 B0,354 B0,363
B1,0 B1,171 B1,172 B1,181 B1,182 B1,353 B1,354 B1,363
B2,0 B2,171 B2,172 B2,181 B2,182 B2,353 B2,354 B2,363
B189,0 B189,171 B189,172 B189,181 B189,182 B189,353 B189,354 B189,363
B190,0 B190,171 B190,172 B190,181 B190,182 B190,353 B190,354 B190,363
B191,0 B191,171 B191,172 B191,181 B191,182 B191,353 B191,354 B191,363
B192,0 B192,171 B192,172 B192,181 B192,182 B192,353 B192,354 B192,363
B207,0 B207,171 B207,172 B207,181 B207,182 B207,353 B207,354 B207,363

FIG. 16

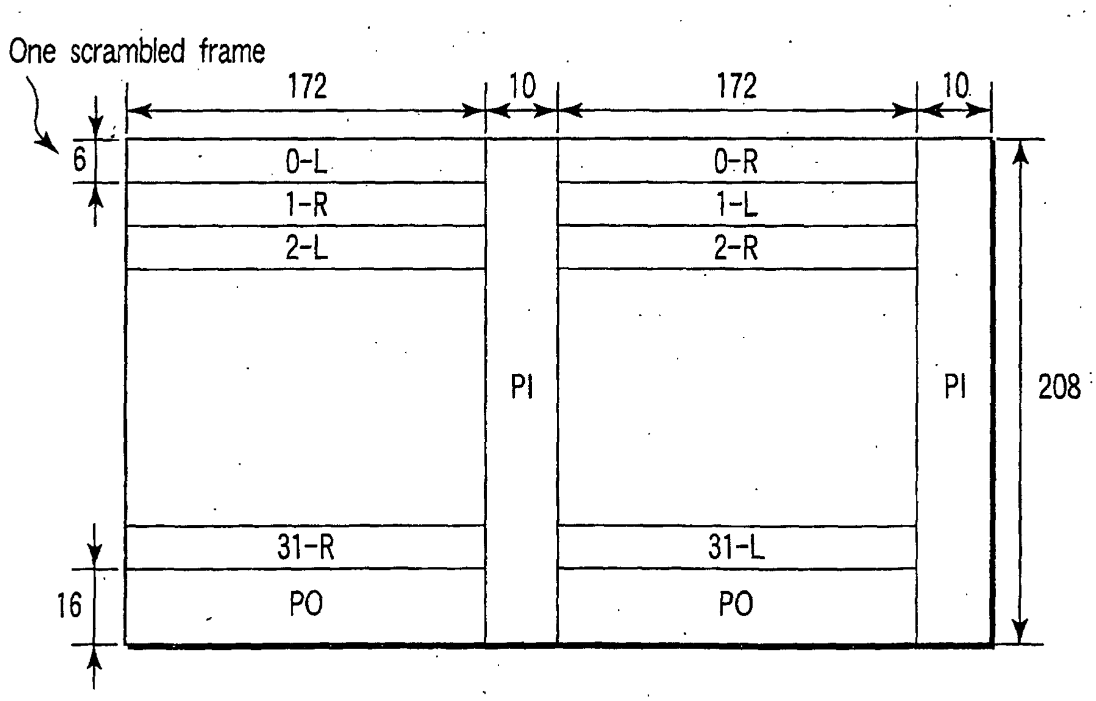
One scrambled frame
172
10
172
10
6
0-L
0-R
1-R
1-L
2-L
2-R
PI
PI
208
31-R
31-L
16
PO
PO

FIG. 17

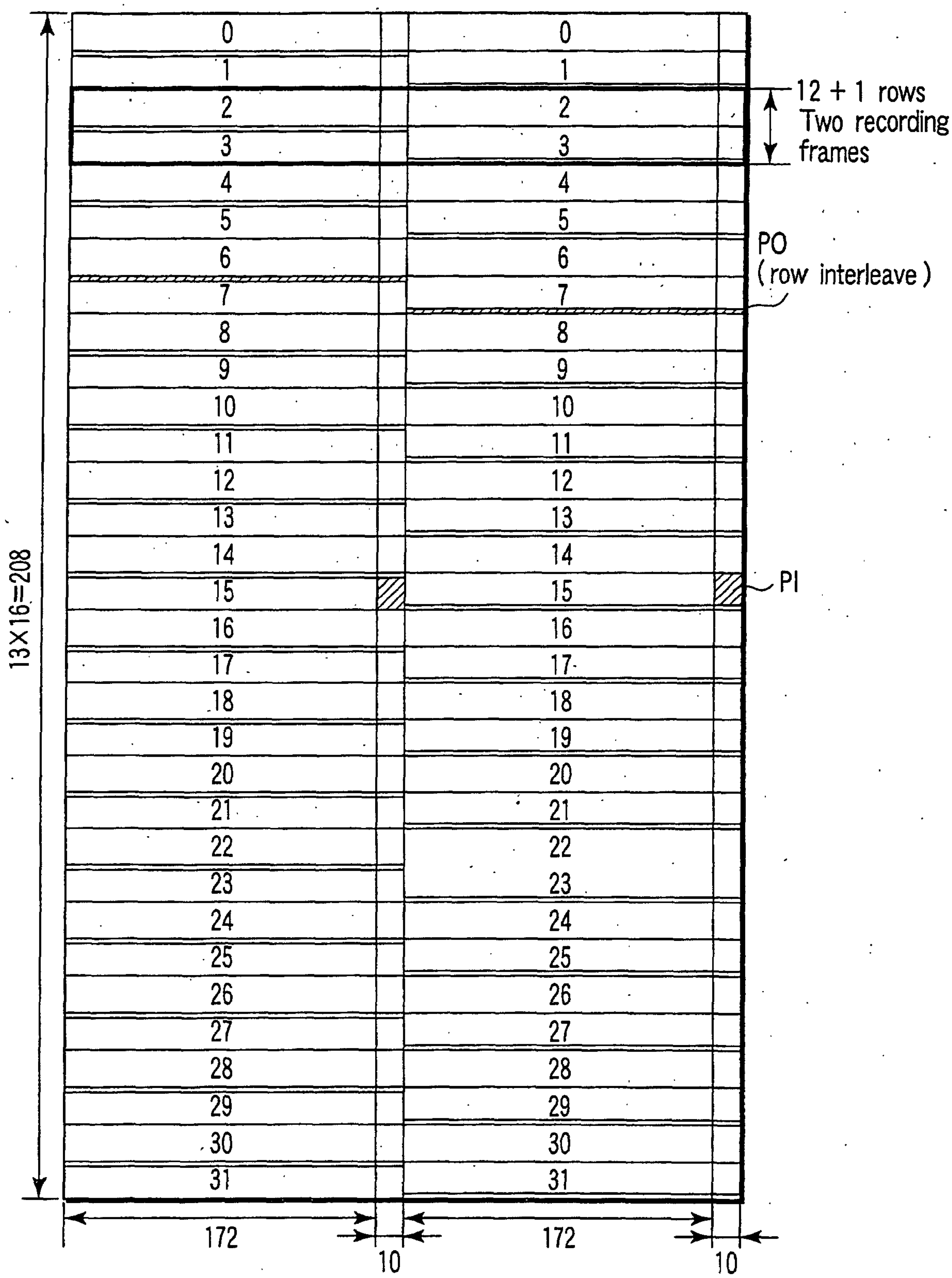

0
1
2
3
4
5
6
7
8
9
10
11
12
13
14
15
16
17
18
19
20
21
22
23
24
25
26
27
28
29
30
31
12 + 1 rows
Two recording frames
PO (row interleave)
PI
13X16=208
172
10
172
10


FIG. 18

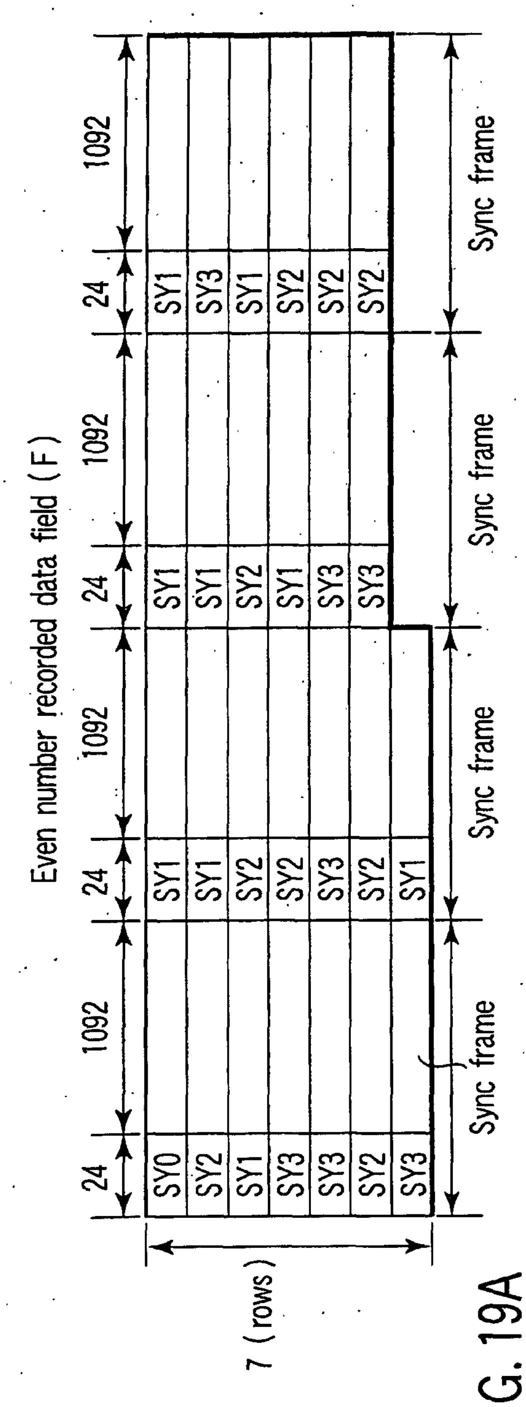


FIG. 19A

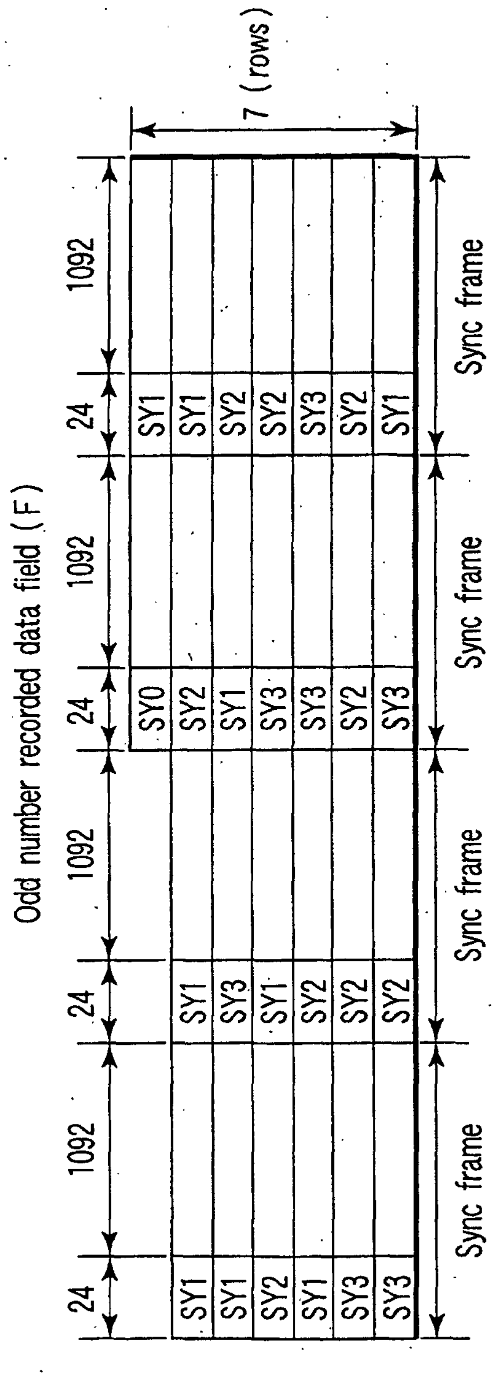


FIG. 19B

State 0

| | | (MSB) First SYNC code (LSB) | | | | | (MSB) Second SYNC code (LSB) | | | |
|---|---|---|---|---|---|---|---|---|---|---|
| SY0 | = | 000010 | 101000 | 000000 | 001001 | / | 000010 | 001000 | 000000 | 001001 |
| SY1 | = | 100001 | 001000 | 000000 | 001001 | / | 100010 | 101000 | 000000 | 001001 |
| SY2 | = | 100100 | 001000 | 000000 | 001001 | / | 101000 | 101000 | 000000 | 001001 |
| SY3 | = | 101000 | 001000 | 000000 | 001001 | / | 101010 | 001000 | 000000 | 001001 |

State 1

| | | (MSB) First SYNC code (LSB) | | | | | (MSB) Second SYNC code (LSB) | | | |
|---|---|---|---|---|---|---|---|---|---|---|
| SY0 | = | 000100 | 101000 | 000000 | 001001 | / | 000100 | 001000 | 000000 | 001001 |
| SY1 | = | 001001 | 001000 | 000000 | 001001 | / | 001010 | 101000 | 000000 | 001001 |
| SY2 | = | 010000 | 101000 | 000000 | 001001 | / | 010000 | 001000 | 000000 | 001001 |
| SY3 | = | 010100 | 001000 | 000000 | 001001 | / | 010101 | 001000 | 000000 | 001001 |

Sync code

FIG. 20

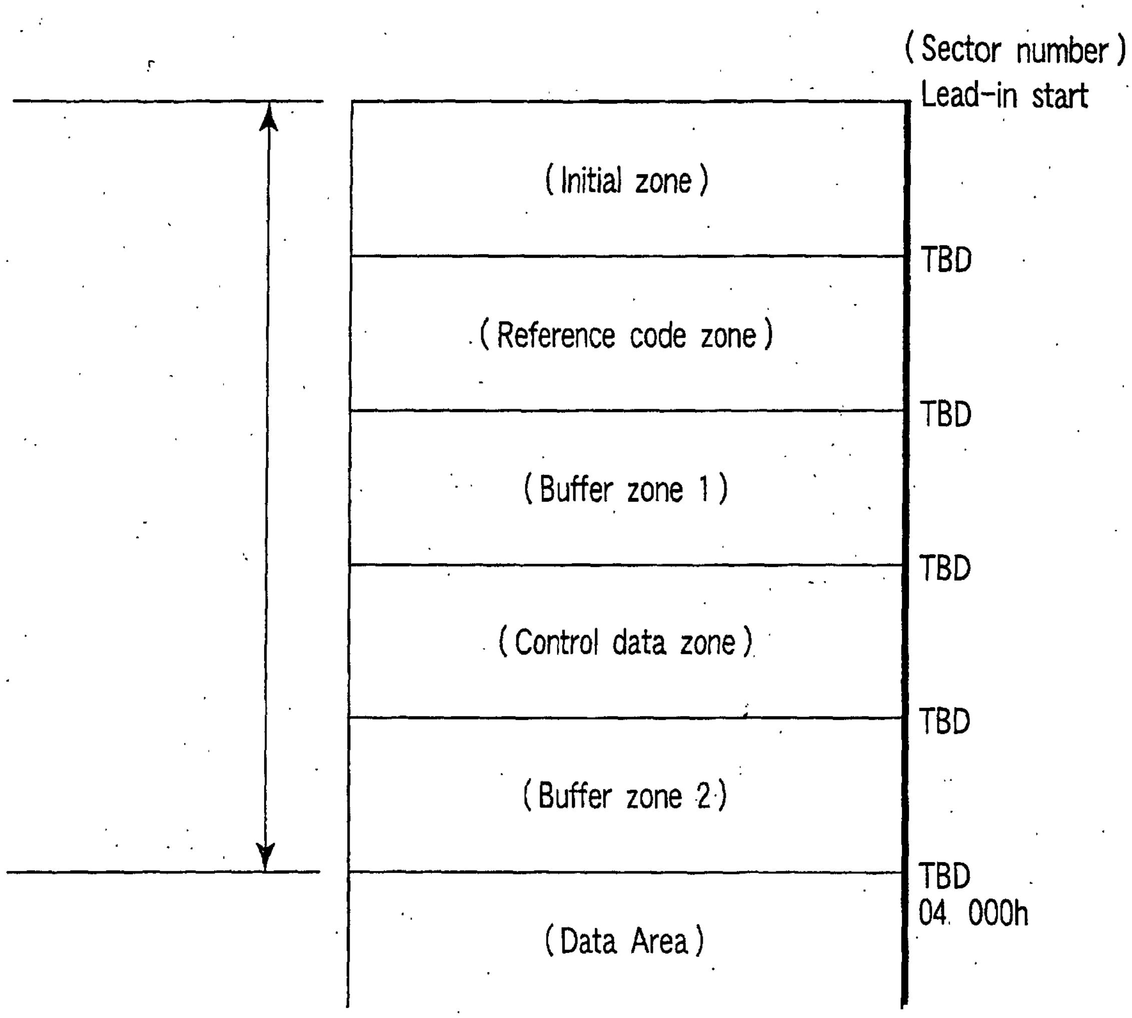
(Sector number)
Lead-in start
(Initial zone)
TBD
(Reference code zone)
TBD
(Buffer zone 1)
TBD
(Control data zone)
TBD
(Buffer zone 2)
TBD
04 000h
(Data Area)

FIG. 21

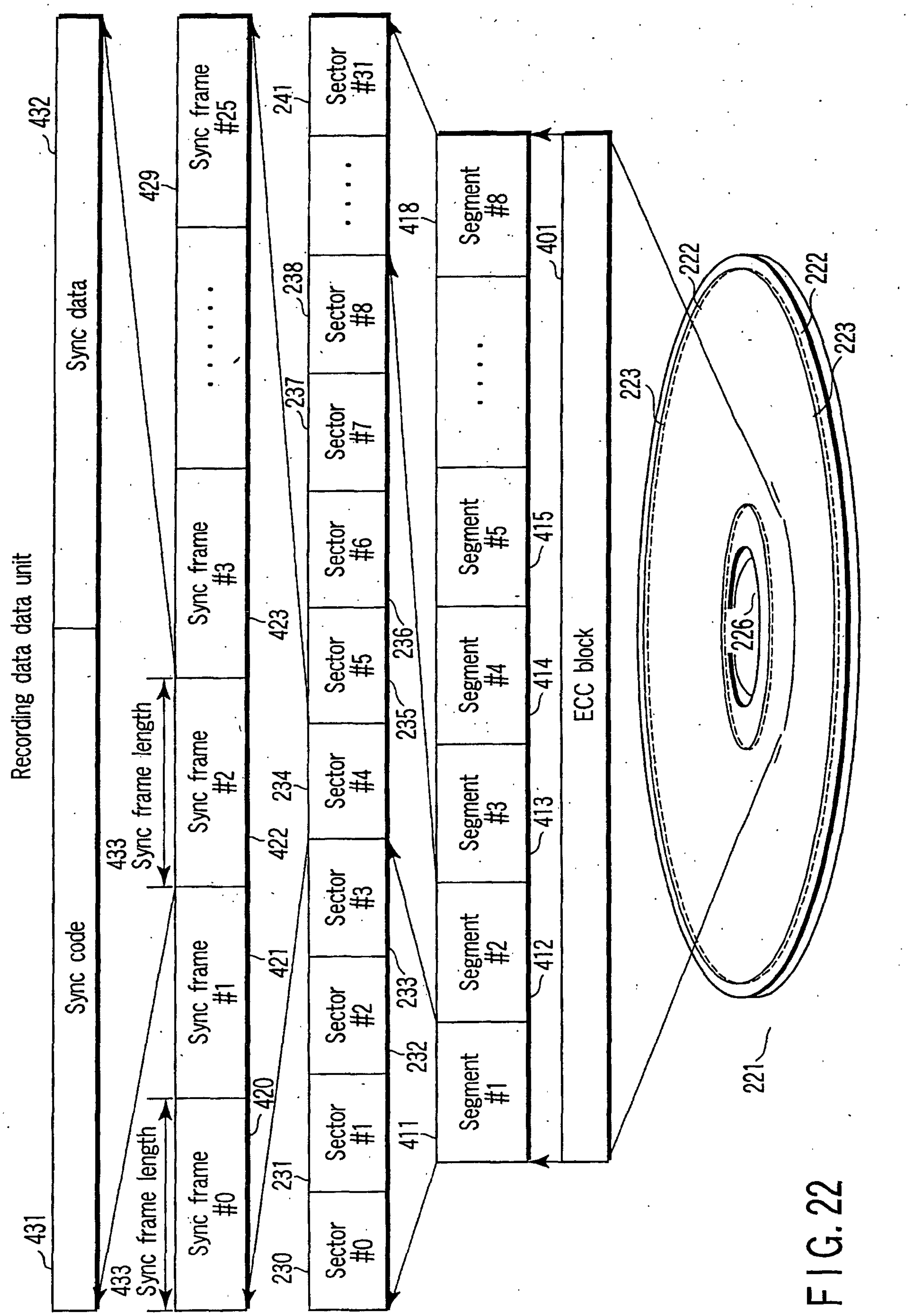
Recording data data unit
431
Sync code
Sync data
432
433
Sync frame length
Sync frame #0
Sync frame #1
Sync frame #2
Sync frame #3
Sync frame #25
420
421
422
423
429
Sector #0
Sector #1
Sector #2
Sector #3
Sector #4
Sector #5
Sector #6
Sector #7
Sector #8
Sector #31
230
231
232
233
234
235
236
237
238
241
Segment #1
Segment #2
Segment #3
Segment #4
Segment #5
Segment #8
411
412
413
414
415
418
401
ECC block
221
222
223
226

FIG. 22

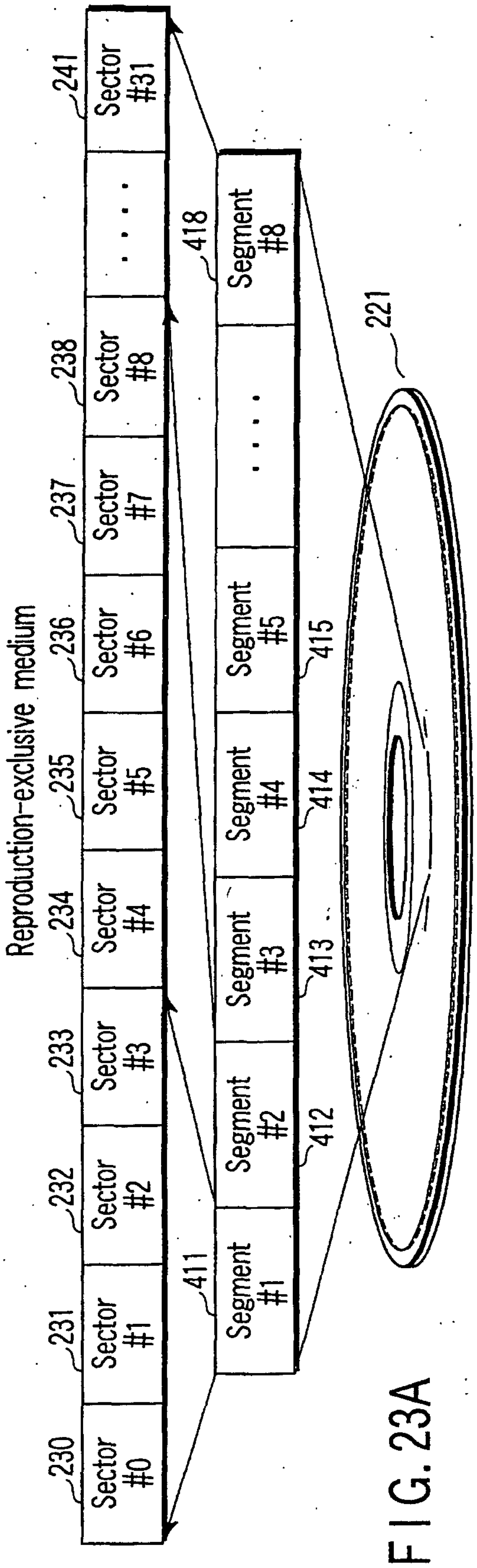


FIG. 23A

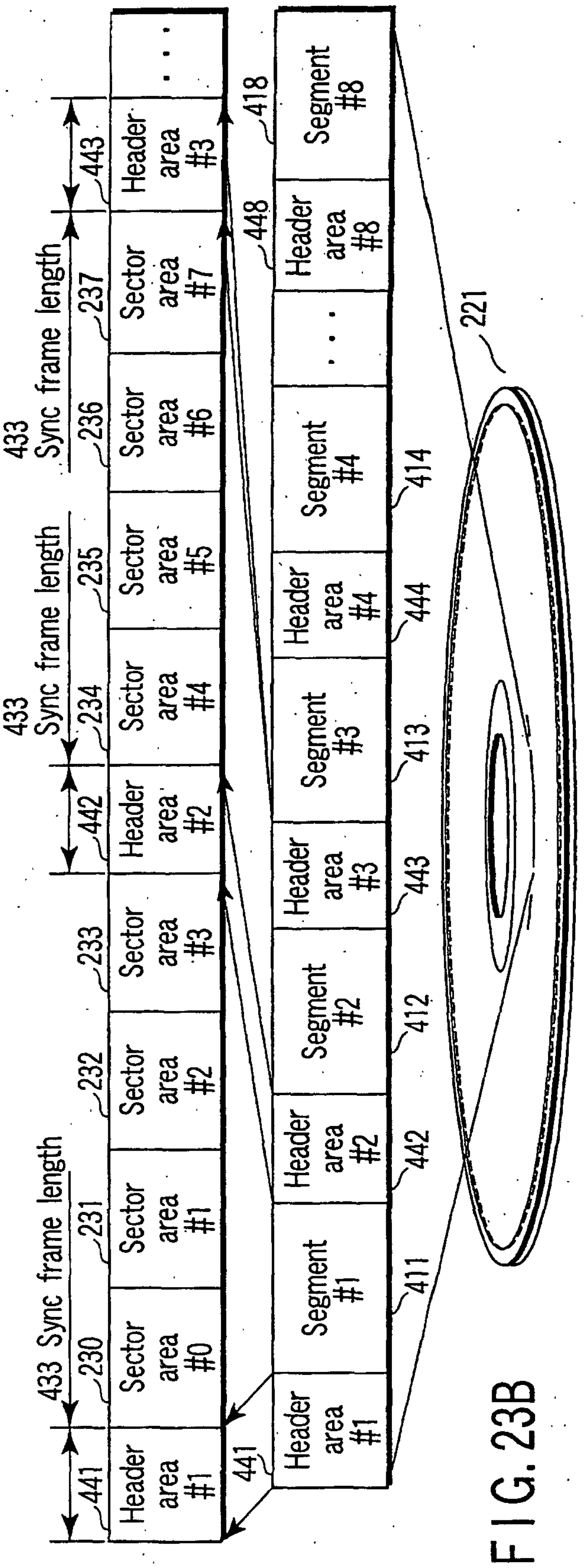


FIG. 23B

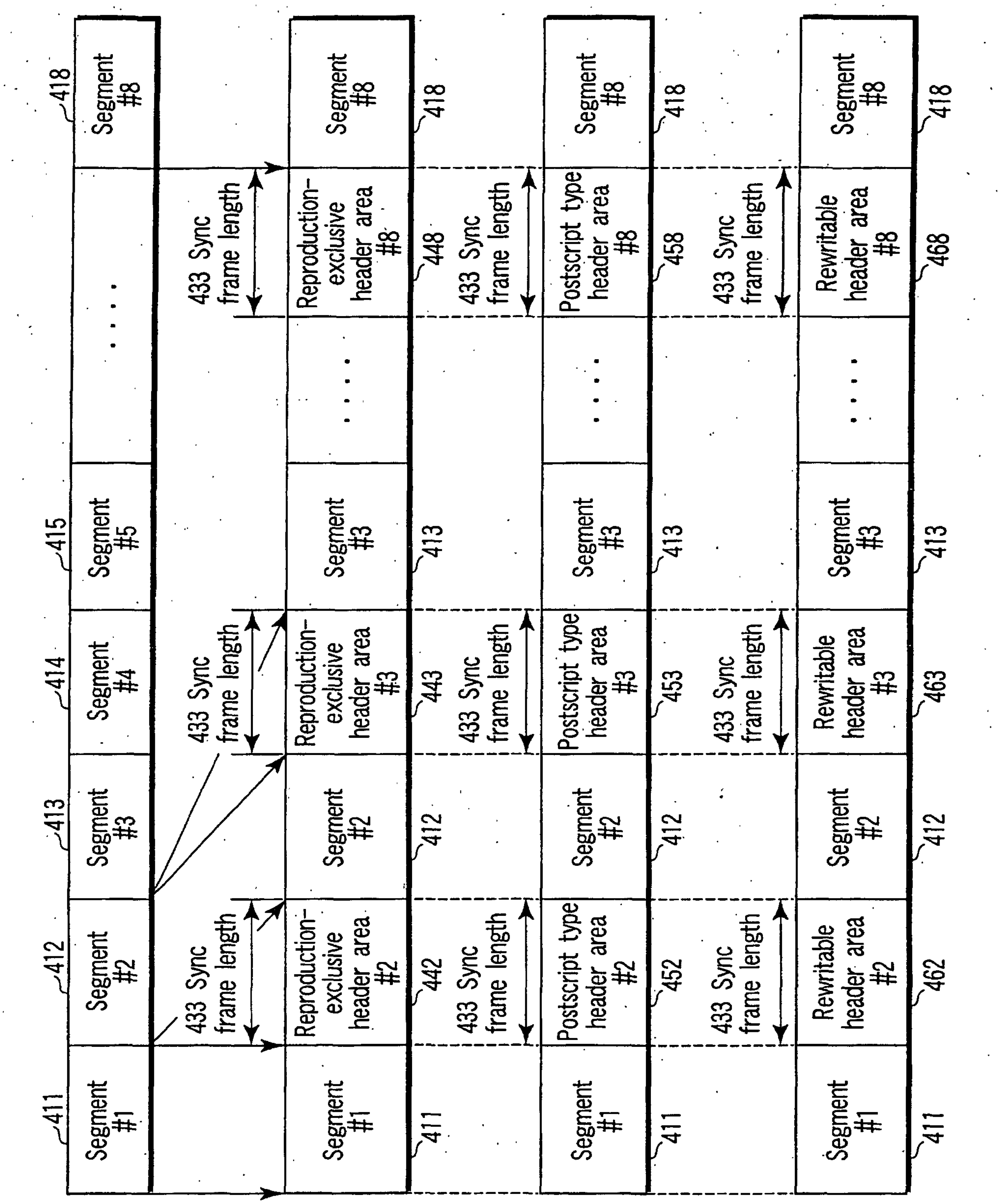


FIG. 24A

FIG. 24B

FIG. 24C

FIG. 24D

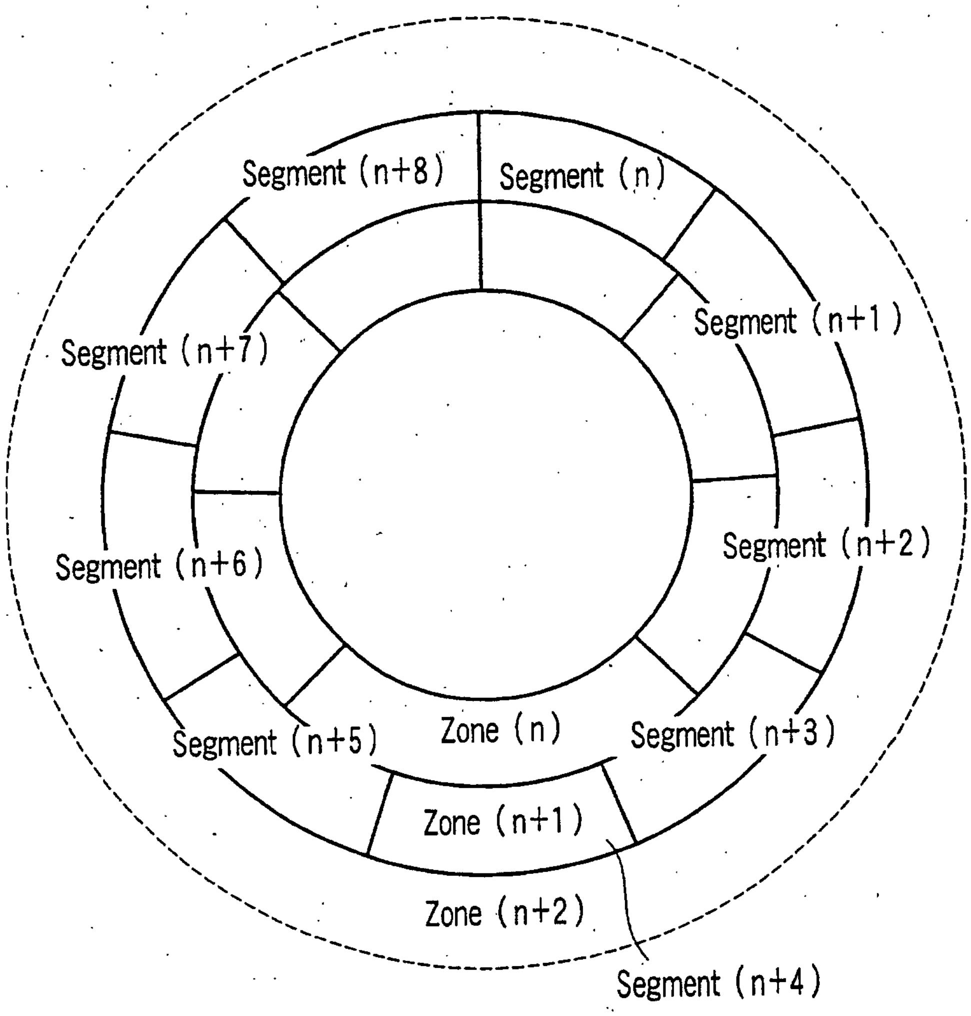
Segment (n+8)
Segment (n)
Segment (n+1)
Segment (n+7)
Segment (n+2)
Segment (n+6)
Segment (n+5)
Zone (n)
Segment (n+3)
Zone (n+1)
Zone (n+2)
Segment (n+4)

FIG. 25

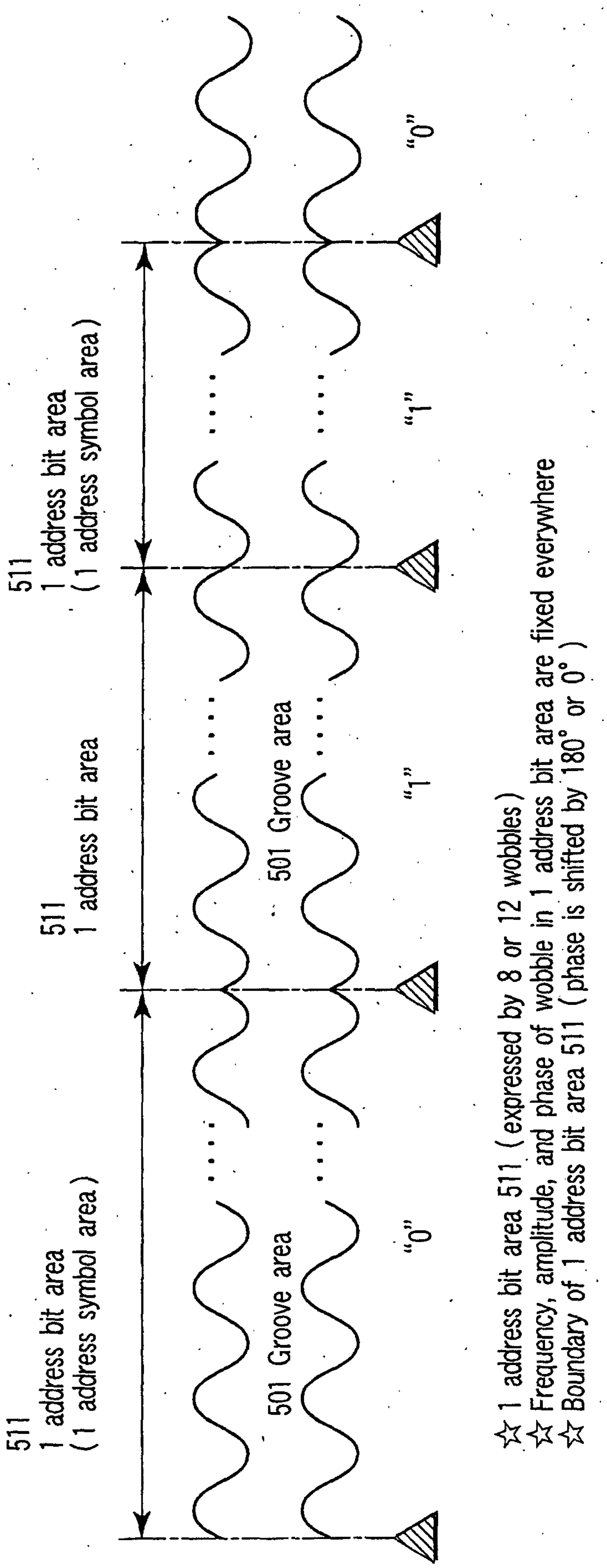
511
1 address bit area
( 1 address symbol area )
511
1 address bit area
511
1 address bit area
( 1 address symbol area )
501 Groove area
501 Groove area
"0"
"1"
"1"
"0"
☆ 1 address bit area 511 ( expressed by 8 or 12 wobbles )
☆ Frequency, amplitude, and phase of wobble in 1 address bit area are fixed everywhere
☆ Boundary of 1 address bit area 511 ( phase is shifted by 180° or 0° )

FIG. 26

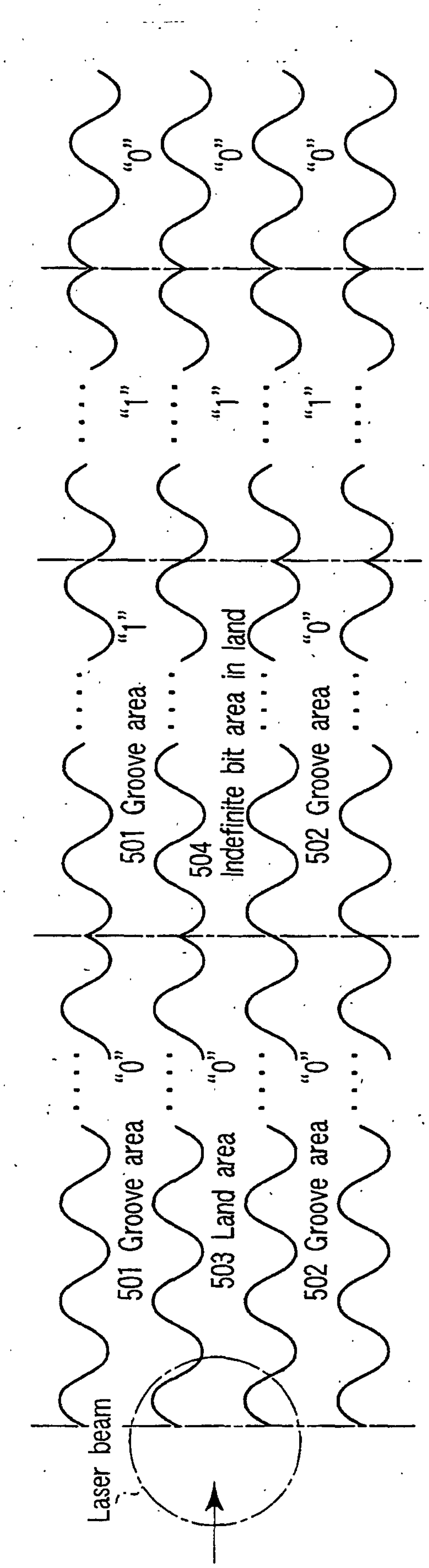


FIG. 27A

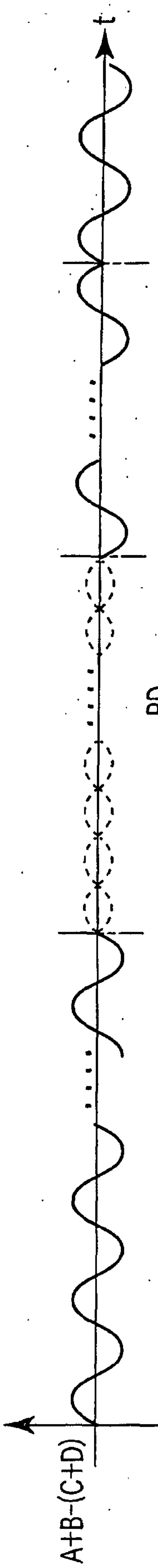


FIG. 27B

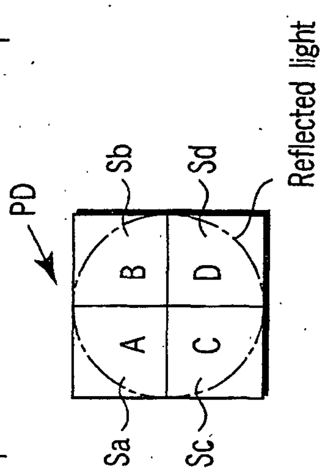


FIG. 27C

| Decimal number | Conventional binary notation | Gray code notation |
|---|---|---|
| 0 | 0000 | 0000 |
| 1 | 0001 | 0001 |
| 2 | 0010 | 0011 |
| 3 | 0011 | 0010 |
| 4 | 0100 | 0110 |
| 5 | 0101 | 0111 |
| 6 | 0110 | 0101 |
| 7 | 0111 | 0100 |
| 8 | 1000 | 1100 |
| 9 | 1001 | 1101 |
| 10 | 1010 | 1111 |
| 11 | 1011 | 1110 |
| 12 | 1100 | 1010 |
| 13 | 1101 | 1011 |
| 14 | 1110 | 1001 |
| 15 | 1111 | 1000 |

FIG. 28

| Decimal number | Conventional binary notation | Special track code | Decimal number | Conventional binary notation | Special track code |
|---|---|---|---|---|---|
| 0 | 00000 | 00 ··· 00000 | 1 | 00001 | 10 ··· 00000 |
| 2 | 00010 | 00 ··· 00001 | 3 | 00011 | 10 ··· 00001 |
| 4 | 00100 | 00 ··· 00011 | 5 | 00101 | 10 ··· 00011 |
| 6 | 00110 | 00 ··· 00010 | 7 | 00111 | 10 ··· 00010 |
| 8 | 01000 | 00 ··· 00110 | 9 | 01001 | 10 ··· 00110 |
| 10 | 01010 | 00 ··· 00111 | 11 | 01011 | 10 ··· 00111 |
| 12 | 01100 | 00 ··· 00101 | 13 | 01101 | 10 ··· 00101 |
| 14 | 01110 | 00 ··· 00100 | 15 | 01111 | 10 ··· 00100 |
| 16 | 10000 | 00 ··· 01100 | 17 | 10001 | 10 ··· 01100 |
| 18 | 10010 | 00 ··· 01101 | 19 | 10011 | 10 ··· 01101 |
| 20 | 10100 | 00 ··· 01111 | 21 | 10101 | 10 ··· 01111 |
| 22 | 10110 | 00 ··· 01110 | 23 | 10111 | 10 ··· 01110 |
| 24 | 11000 | 00 ··· 01010 | 25 | 11001 | 10 ··· 01010 |
| 26 | 11010 | 00 ··· 01011 | 27 | 11011 | 10 ··· 01011 |
| 28 | 11100 | 00 ··· 01001 | 29 | 11101 | 10 ··· 01001 |
| 30 | 11110 | 00 ··· 01000 | 31 | 11111 | 10 ··· 01000 |

FIG. 29

Note ] "2n" and "2n+1" differ only in most significant bit. All other lower bits are the same.

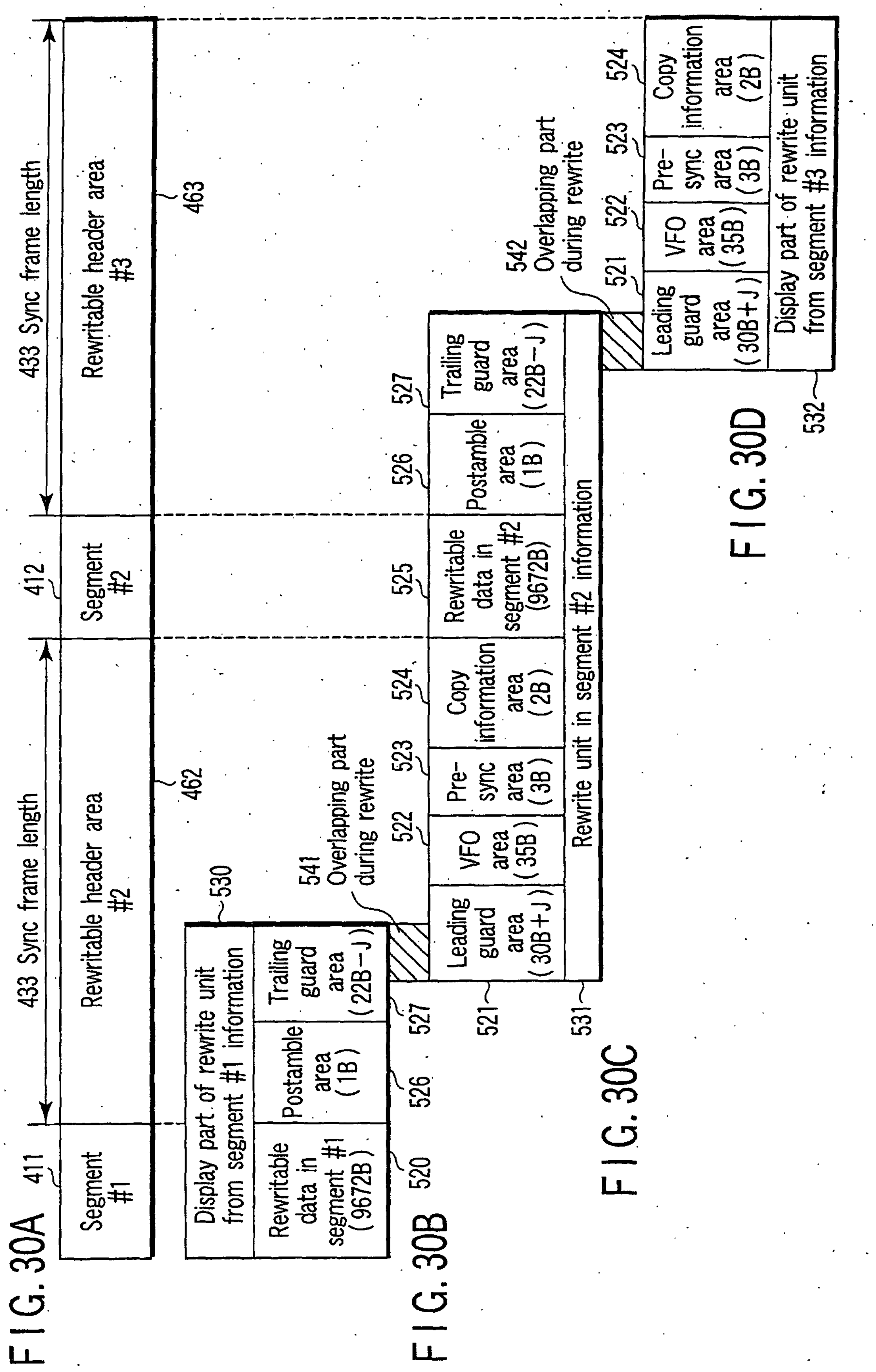

FIG. 30A
Segment #1
411
433 Sync frame length
Rewritable header area #2
462
Segment #2
412
433 Sync frame length
Rewritable header area #3
463
FIG. 30B
Display part of rewrite unit from segment #1 information
530
Rewritable data in segment #1 (9672B)
Postamble area (1B)
Trailing guard area (22B−J)
520
526
527
541 Overlapping part during rewrite
FIG. 30C
Leading guard area (30B+J)
VFO area (35B)
Pre-sync area (3B)
Copy information area (2B)
Rewritable data in segment #2 (9672B)
Postamble area (1B)
Trailing guard area (22B−J)
521
522
523
524
525
526
527
Rewrite unit in segment #2 information
531
542 Overlapping part during rewrite
FIG. 30D
Leading guard area (30B+J)
VFO area (35B)
Pre-sync area (3B)
Copy information area (2B)
521
522
523
524
Display part of rewrite unit from segment #3 information
532

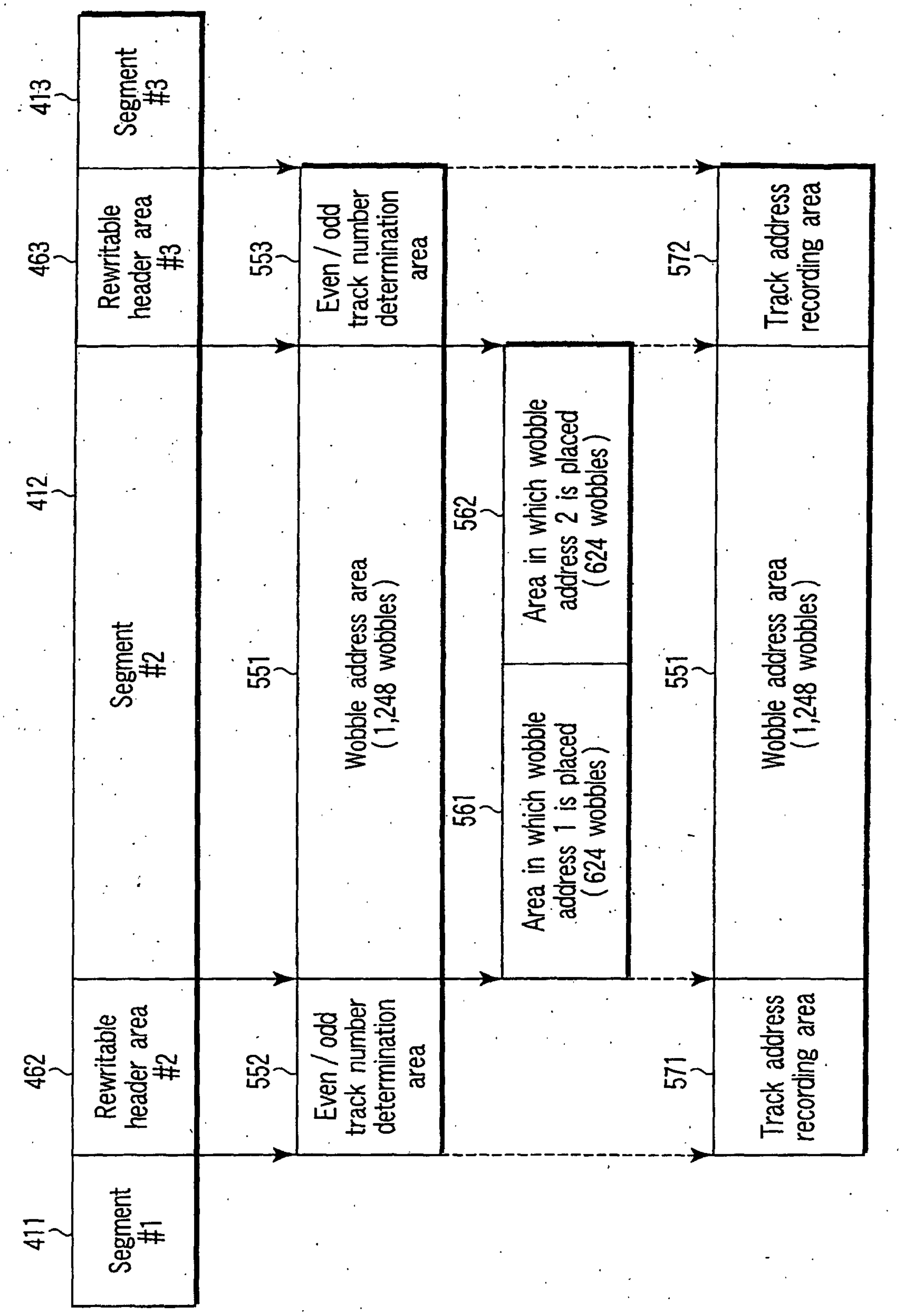


FIG. 31A

FIG. 31B

FIG. 31C

FIG. 31D

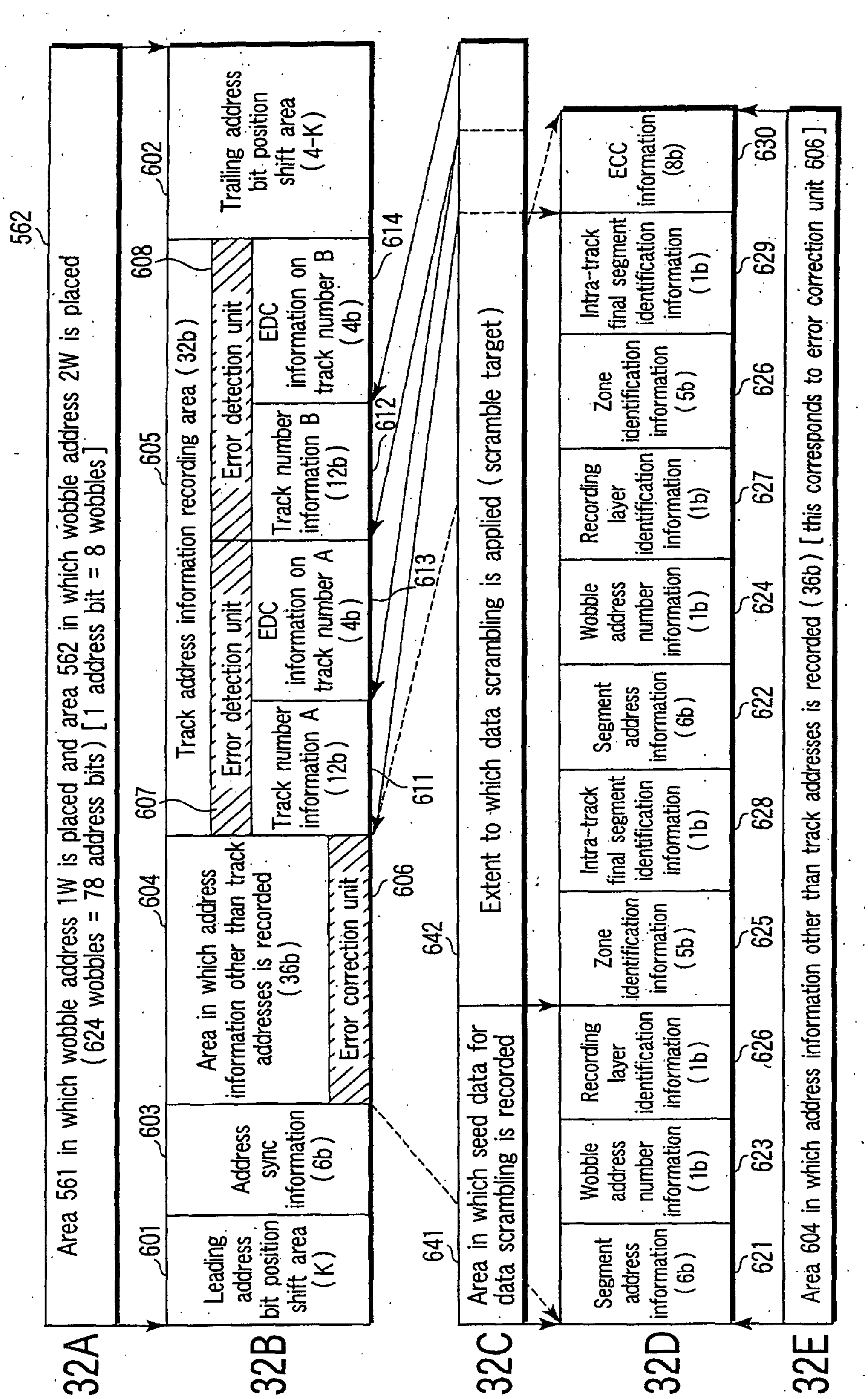


FIG. 32A

FIG. 32B

FIG. 32C

FIG. 32D

FIG. 32E

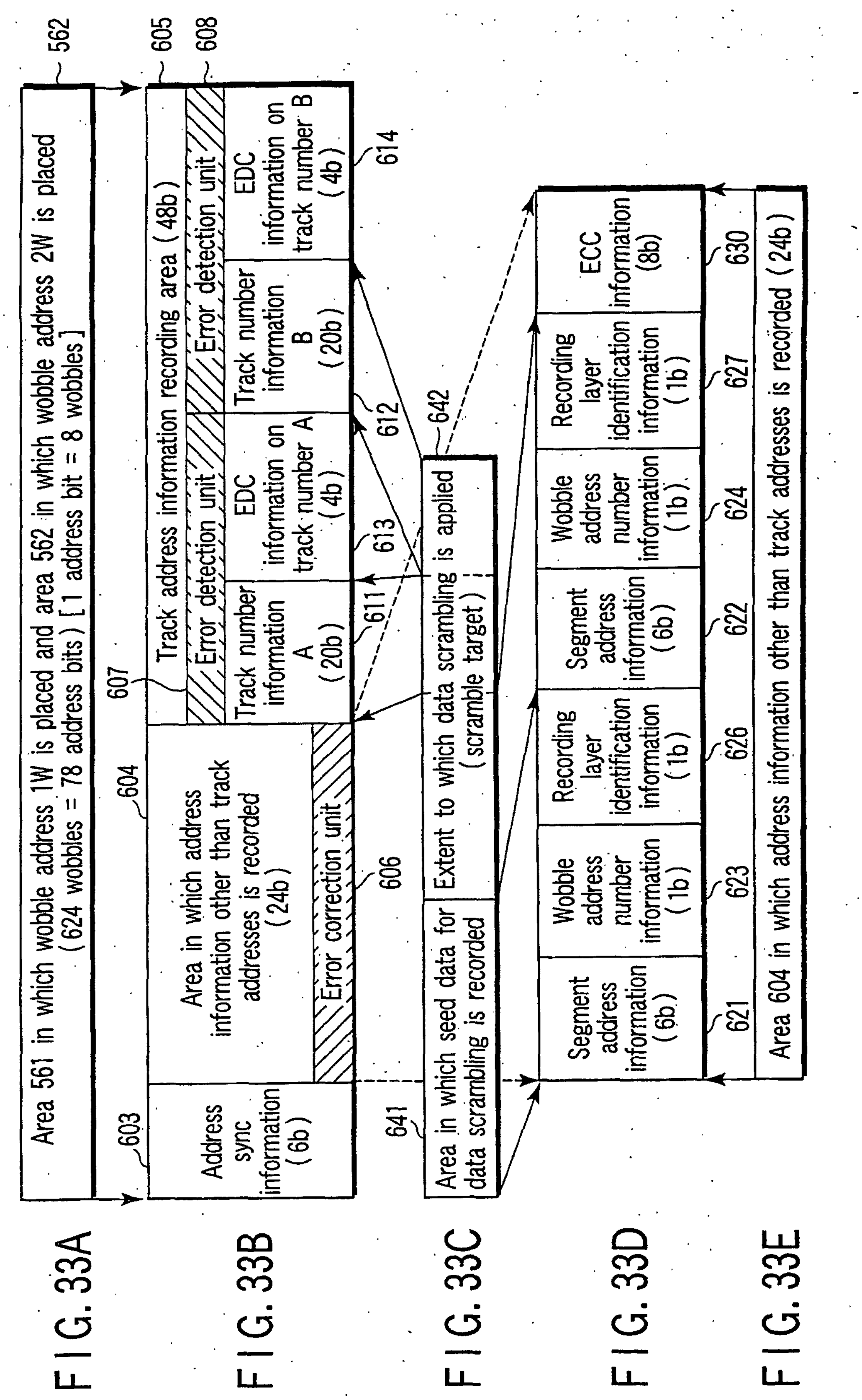
F I G. 33A
F I G. 33B
F I G. 33C
F I G. 33D
F I G. 33E
Area 561 in which wobble address 1W is placed and area 562 in which wobble address 2W is placed (624 wobbles = 78 address bits) [1 address bit = 8 wobbles]
562
603
604
605
606
607
608
Address sync information (6b)
Area in which address information other than track addresses is recorded (24b)
Error correction unit
Track address information recording area (48b)
Error detection unit
Error detection unit
Track number information A (20b)
EDC information on track number A (4b)
Track number information B (20b)
EDC information on track number B (4b)
611
612
613
614
641
642
Area in which seed data for data scrambling is recorded
Extent to which data scrambling is applied (scramble target)
Segment address information (6b)
Wobble address number information (1b)
Recording layer identification information (1b)
Segment address information (6b)
Wobble address number information (1b)
Recording layer identification information (1b)
ECC information (8b)
621
623
626
622
624
627
630
Area 604 in which address information other than track addresses is recorded (24b)

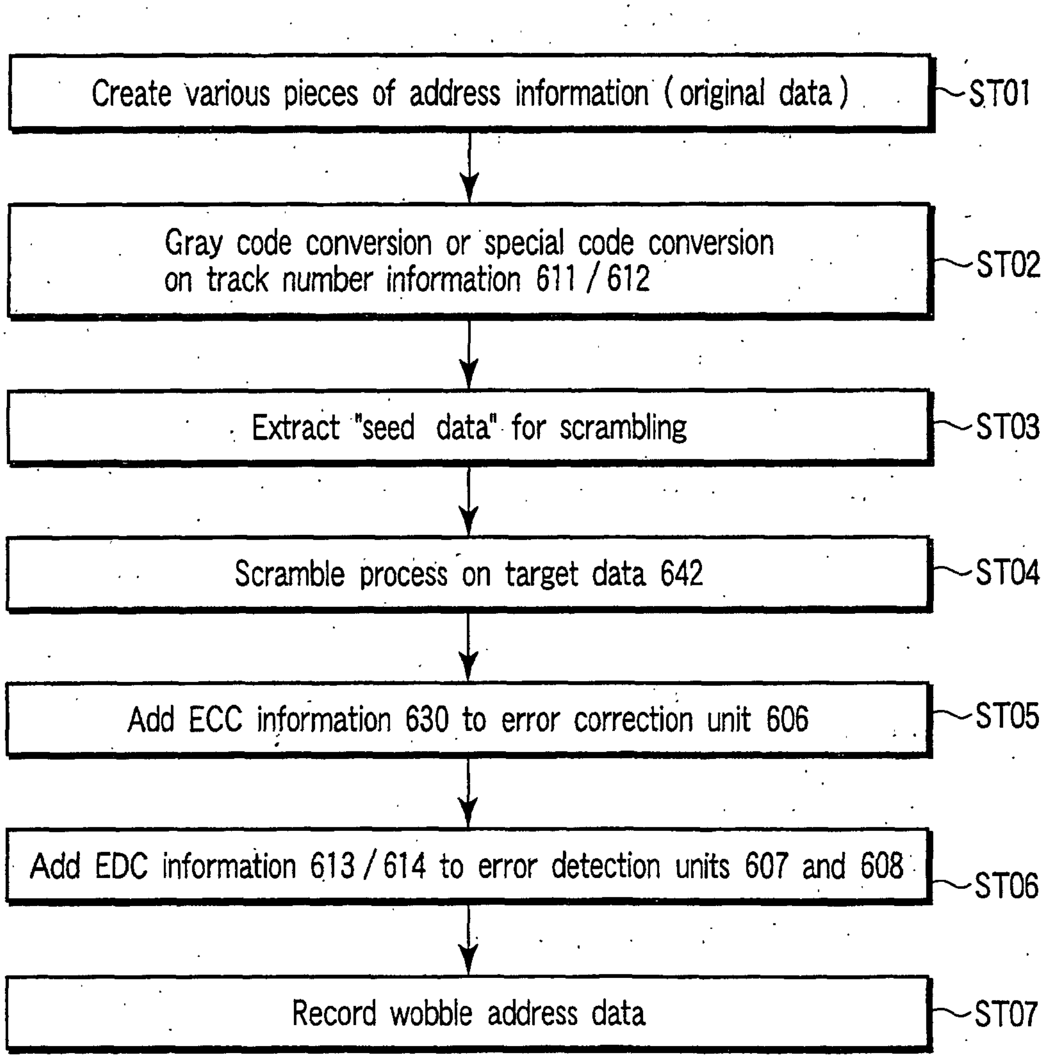
Create various pieces of address information (original data)
ST01
Gray code conversion or special code conversion on track number information 611 / 612
ST02
Extract "seed data" for scrambling
ST03
Scramble process on target data 642
ST04
Add ECC information 630 to error correction unit 606
ST05
Add EDC information 613 / 614 to error detection units 607 and 608
ST06
Record wobble address data
ST07

FIG. 34

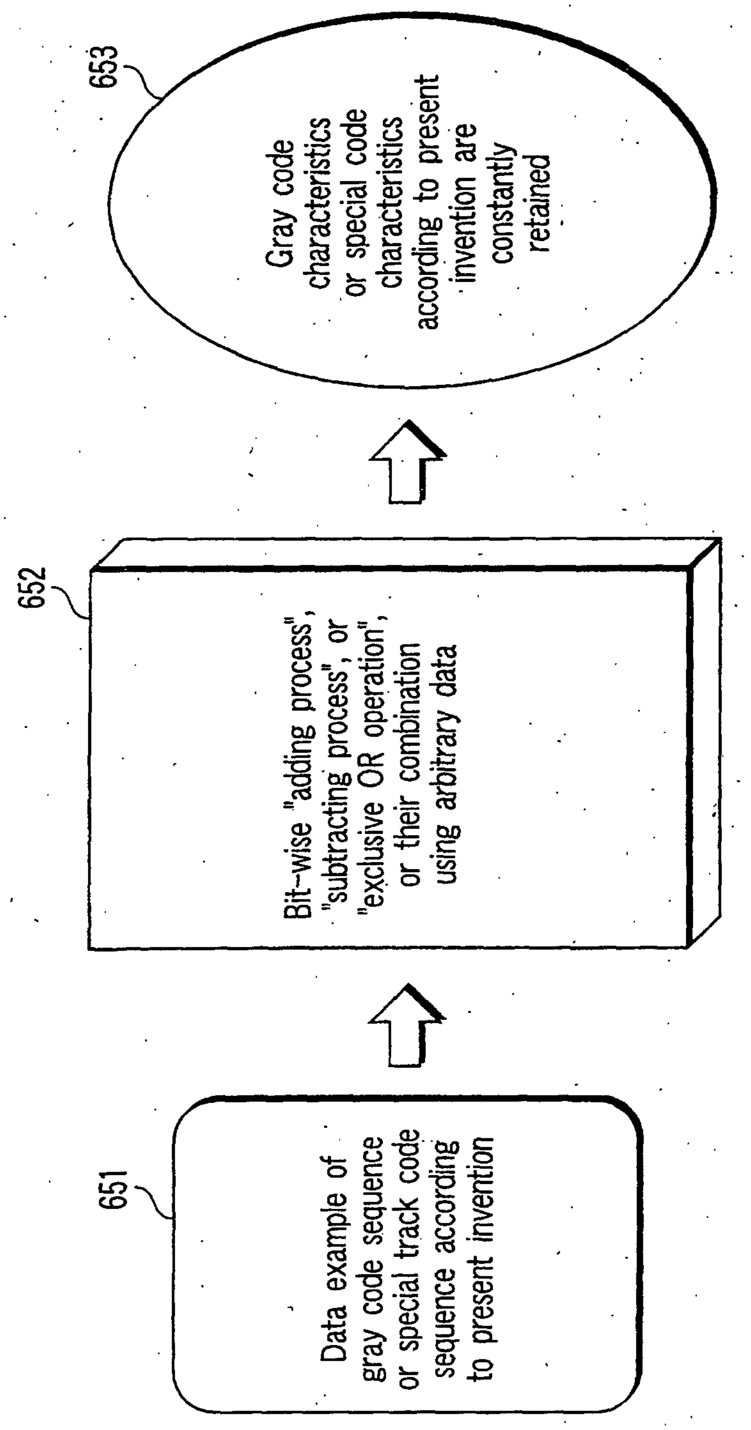
653
Gray code characteristics or special code characteristics according to present invention are constantly retained
652
Bit-wise "adding process", "subtracting process", or "exclusive OR operation", or their combination using arbitrary data
651
Data example of gray code sequence or special track code sequence according to present invention

FIG. 35

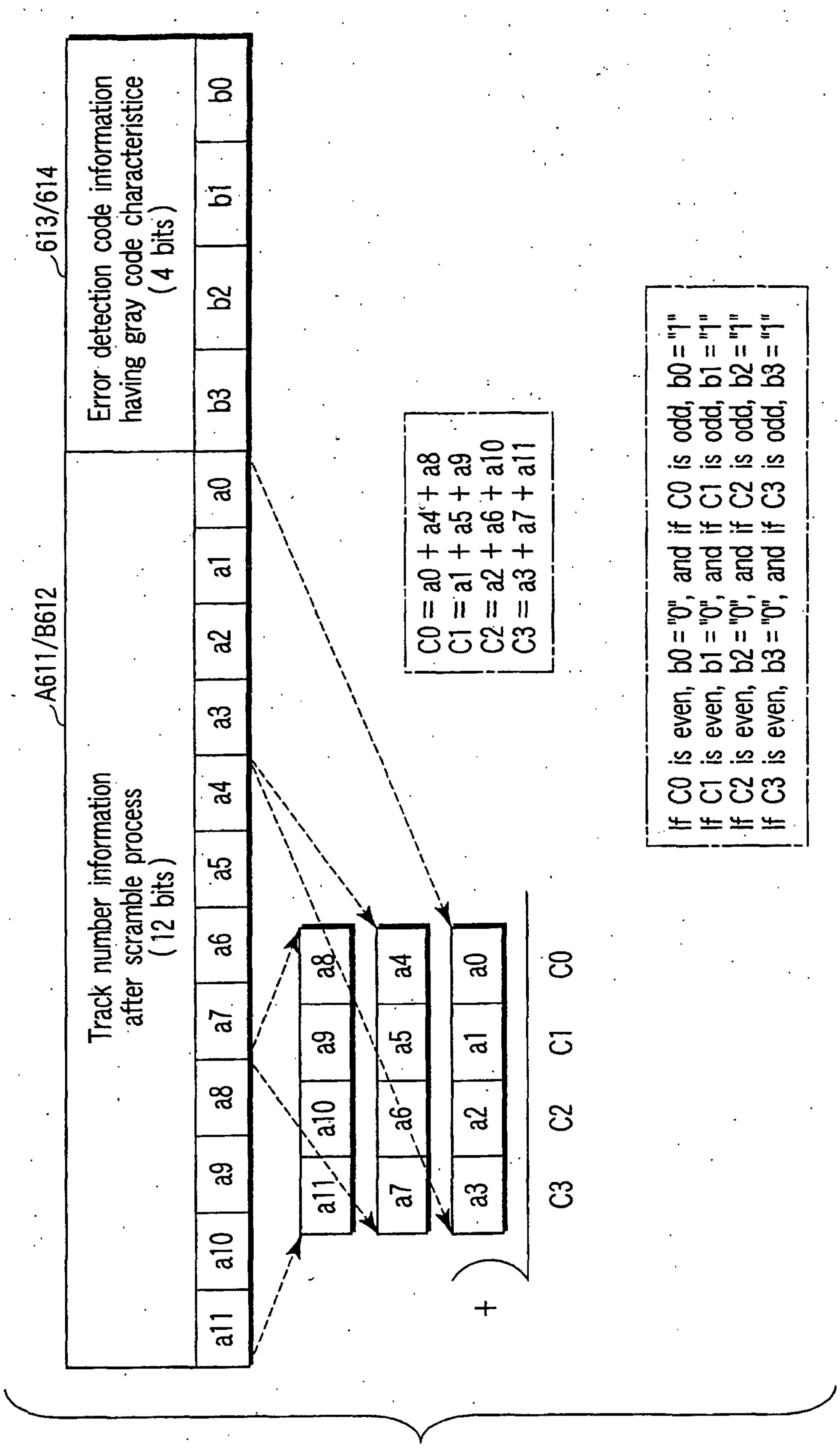
613/614
Error detection code information having gray code characteristice (4 bits)
b3
b2
b1
b0
A611/B612
Track number information after scramble process (12 bits)
a11
a10
a9
a8
a7
a6
a5
a4
a3
a2
a1
a0
+
C3
C2
C1
C0
C0 = a0 + a4 + a8
C1 = a1 + a5 + a9
C2 = a2 + a6 + a10
C3 = a3 + a7 + a11
If C0 is even, b0 = "0", and if C0 is odd, b0 = "1"
If C1 is even, b1 = "0", and if C1 is odd, b1 = "1"
If C2 is even, b2 = "0", and if C2 is odd, b2 = "1"
If C3 is even, b3 = "0", and if C3 is odd, b3 = "1"

FIG. 36

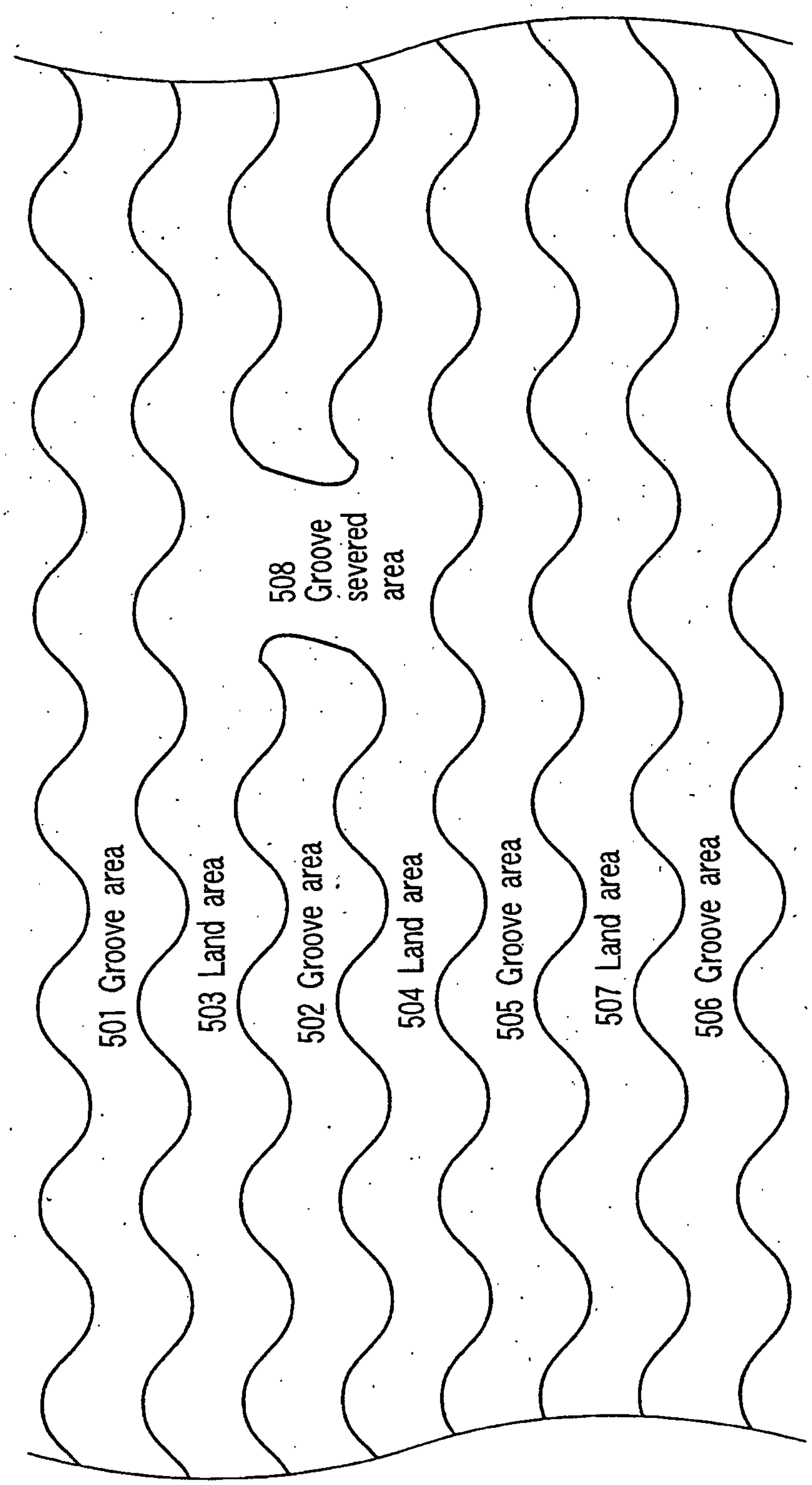
501 Groove area
503 Land area
502 Groove area
504 Land area
505 Groove area
507 Land area
506 Groove area
508 Groove severed area

FIG. 37

| L/G identification | Track number | Track number information A611 | Track number information B612 |
|---|---|---|---|
| Groove | 2n+3 | 2n+4 | 2n+3 |
| Land | 2n+3 | Indefinite (2n+2 or 2n+3) | 2n+3 |
| Groove | 2n+2 | 2n+2 | 2n+3 |
| Land | 2n+2 | 2n+2 | Indefinite (2n+1 or 2n+3) |
| Groove | 2n+1 | 2n+2 | 2n+1 |
| Land | 2n+1 | Indefinite (2n or 2n+2) | 2n+1 |
| Groove | 2n | 2n | 2n+1 |

FIG. 38

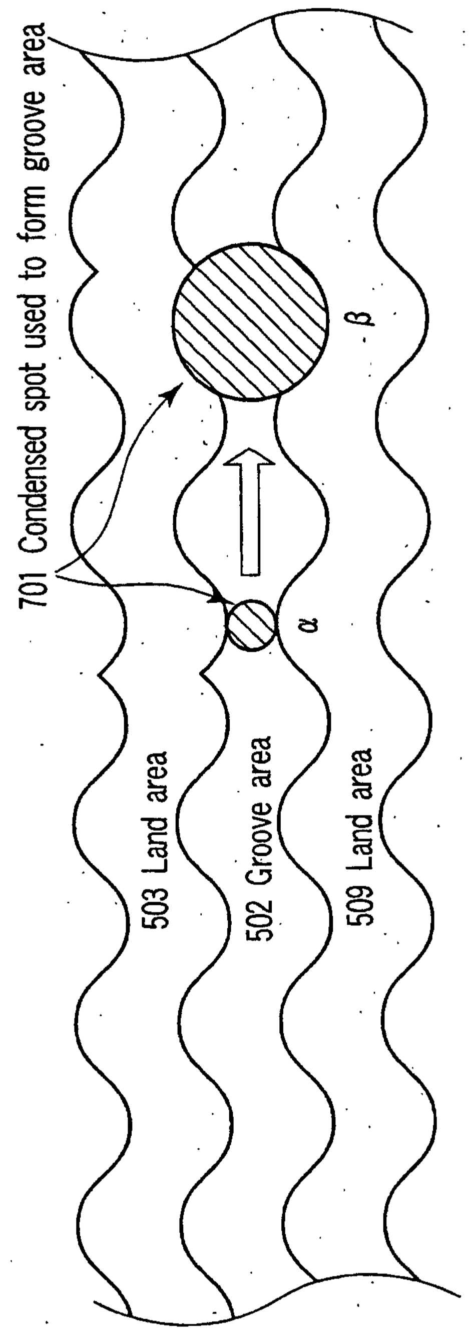


FIG. 39A

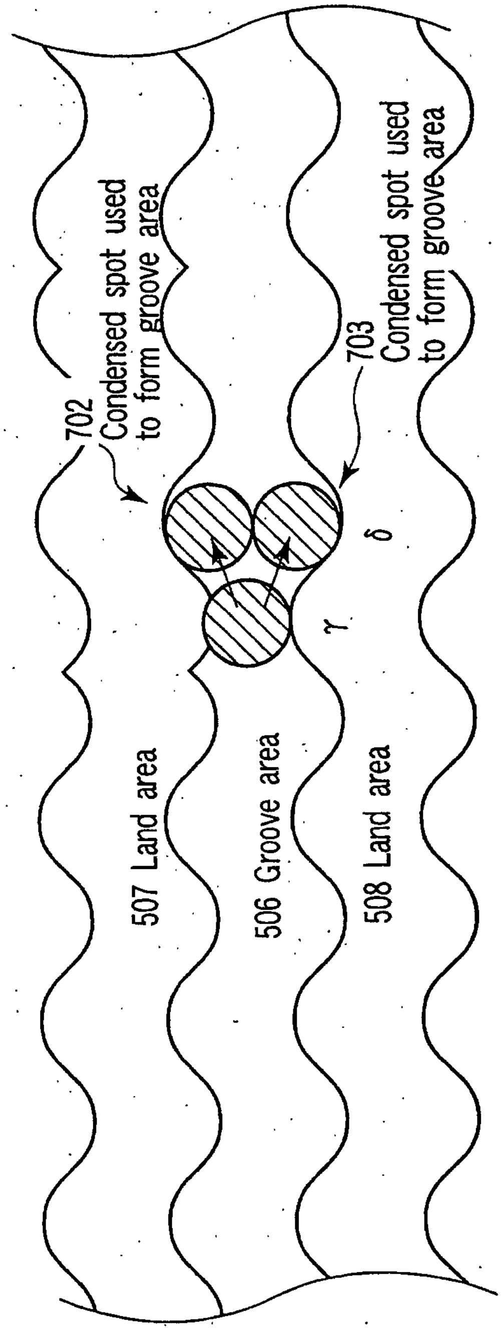


FIG. 39B

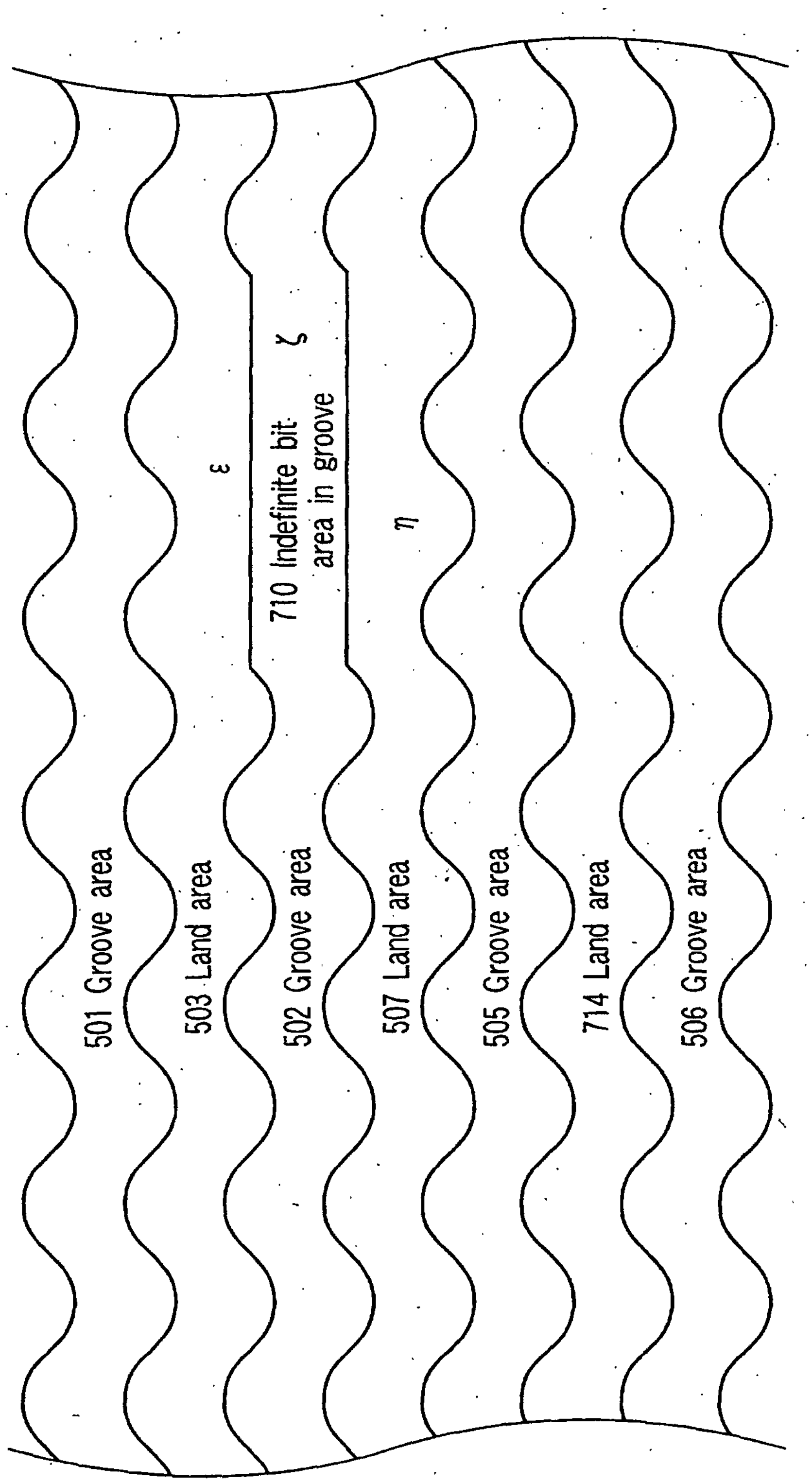
501 Groove area
503 Land area
502 Groove area
507 Land area
505 Groove area
714 Land area
506 Groove area
710 Indefinite bit area in groove
ε
ζ
η

FIG. 40

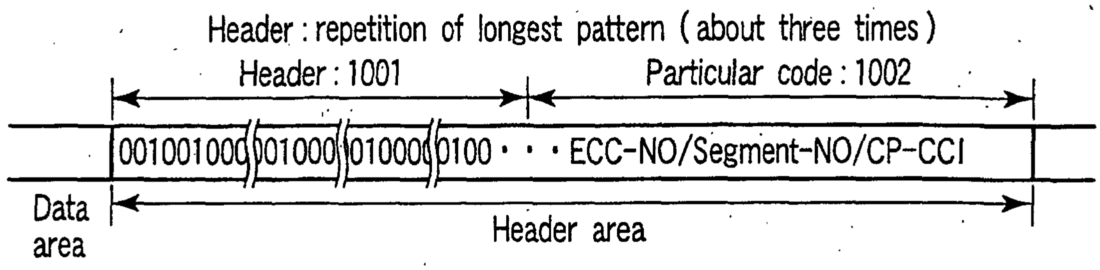
Header : repetition of longest pattern ( about three times )
Header : 1001
Particular code : 1002
001001000 001000 010000 0100 · · · ECC-NO/Segment-NO/CP-CCI
Data area
Header area

FIG. 41

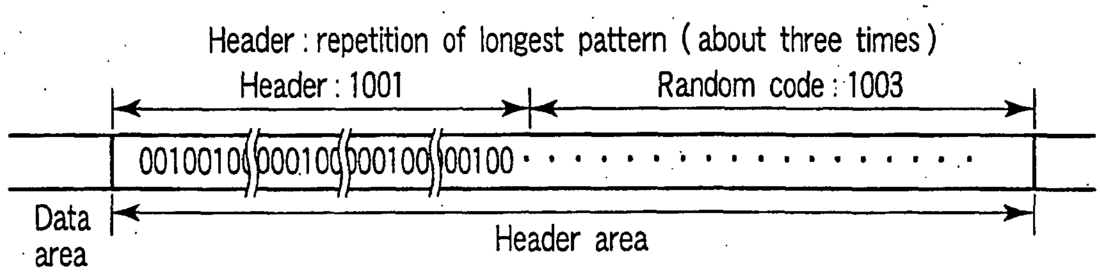
Header : repetition of longest pattern ( about three times )
Header : 1001
Random code : 1003
0010010 000100 000100 00100 · · · · · · · · · · · · · · · · · · · ·
Data area
Header area

FIG. 42

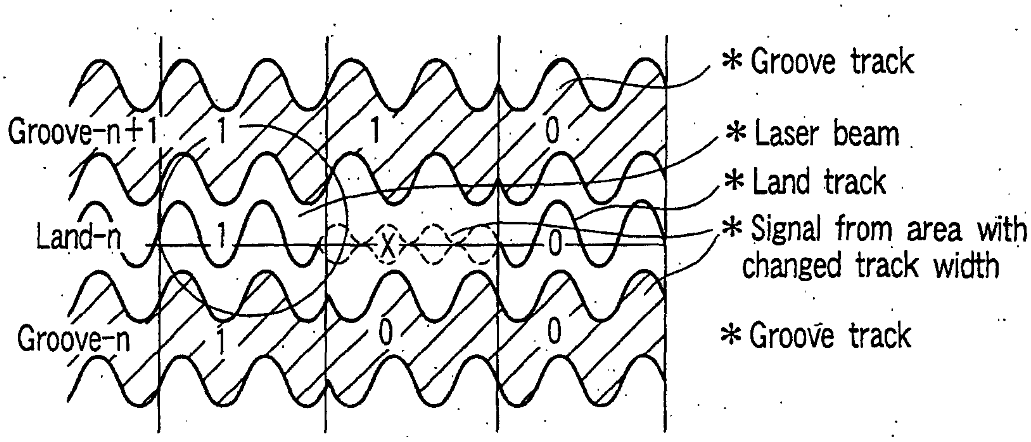


FIG. 43

| Track form | Detected track number |
|---|---|
| Groove | n+3 |
| Even-land (n+2) | (n+2) or (n+3) |
| Groove | n+2 |
| Odd-land (n+1) | (n+1) or (n+2) |
| Groove | n+1 |
| Even-land (n) | (n) or (n+1) |
| Groove | n |

FIG. 44

| G/L track | Track number | Track number determination criteria |
|---|---|---|
| Groove : G(n+2) | 1101 | |
| Odd-land : L(n+1) | 110* | Only 1101 or 1100 for odd-lands |
| Groove : G(n+1) | 1100 | |
| Even-land : L(n) | *100 | Only 1100 or 0100 for even-lands |
| Groove : G(n) | 0100 | |

FIG. 45

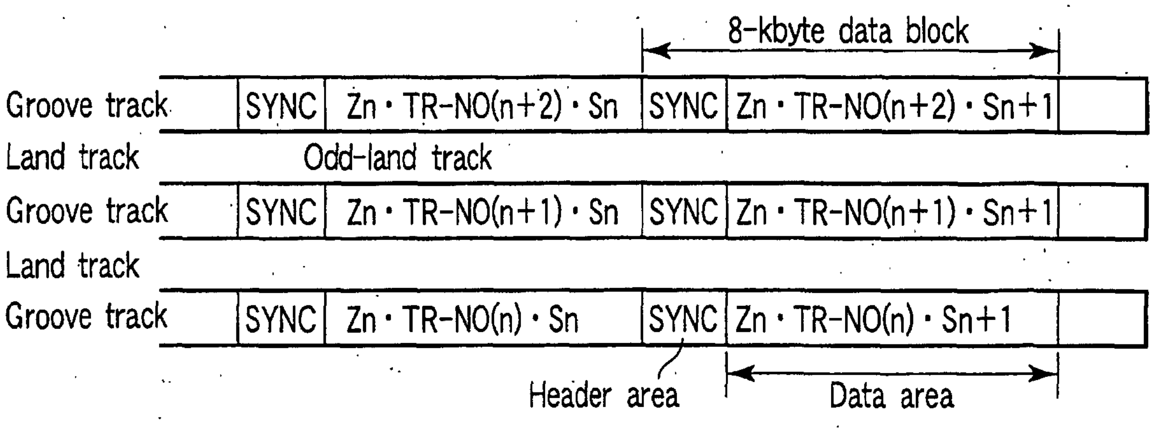


FIG. 46

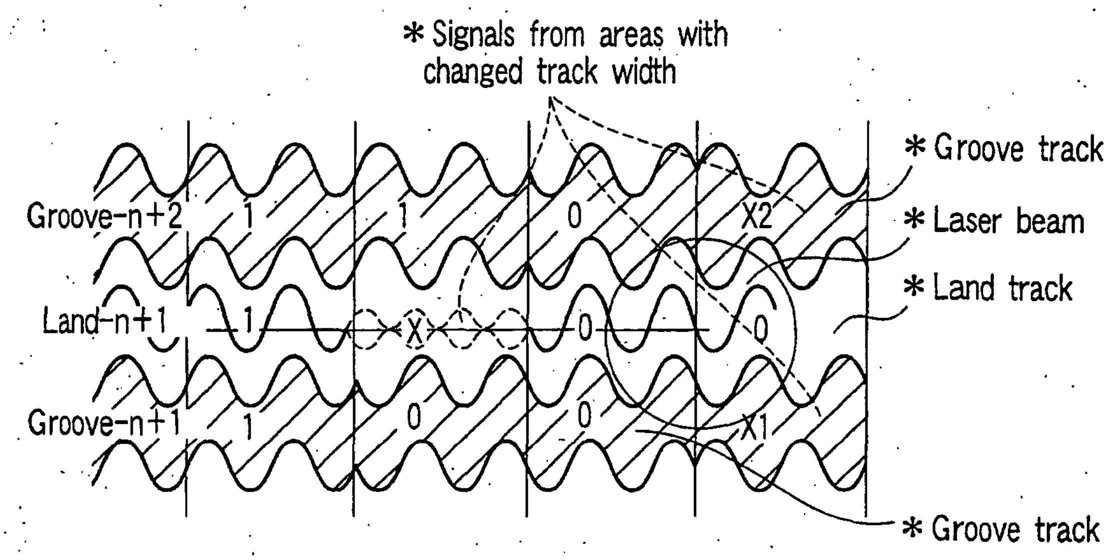


FIG. 47

| | | | | | |
|---|---|---|---|---|---|
| Groove track | G-S 1101 | L-S 11X1 | G-S 1101 | L-S 11X1 | |
| Land track | | L-S 1101 | | L-S 1100 | |
| Groove track | G-S 1100 | L-S X100 | G-S 1100 | L-S X100 | |
| Land track | | L-S 0101 | | L-S 0100 | |
| Groove track | G-S 0101 | L-S 010X | G-S 0100 | L-S 010X | |

FIG. 48

| G / L track | Track number | Track number determination criteria |
|---|---|---|
| Groove : G(n+2) | 1101X | For grooves, only leading 4 bits are effective |
| Odd-land : L(n+1) | 110X0 | Only 11010 or 11000 for odd-lands |
| Groove : G(n+1) | 1100X | For grooves, only leading 4 bits are effective |
| Even-land : L(n) | X1001 | Only 11001 or 01001 for even-lands |
| Groove : G(n) | 0100X | For grooves, only leading 4 bits are effective |

FIG. 49

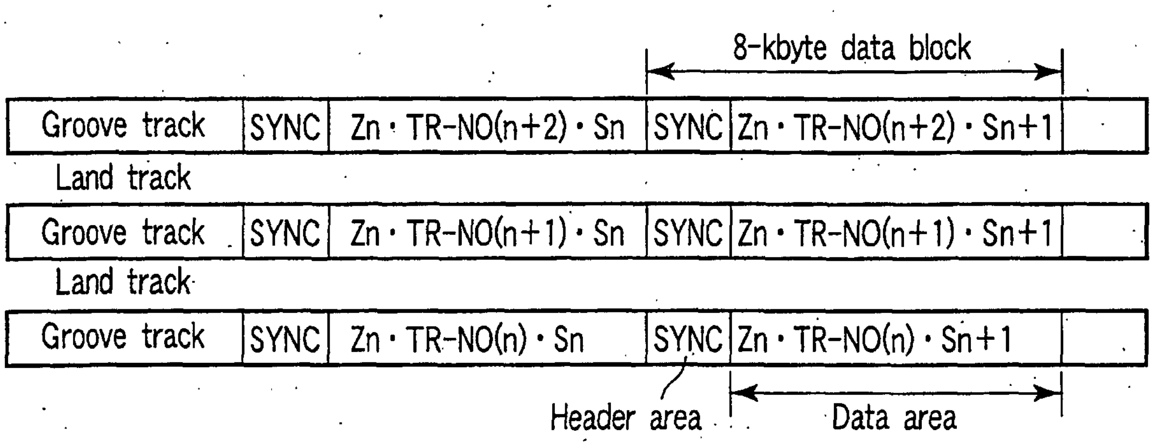


FIG. 50

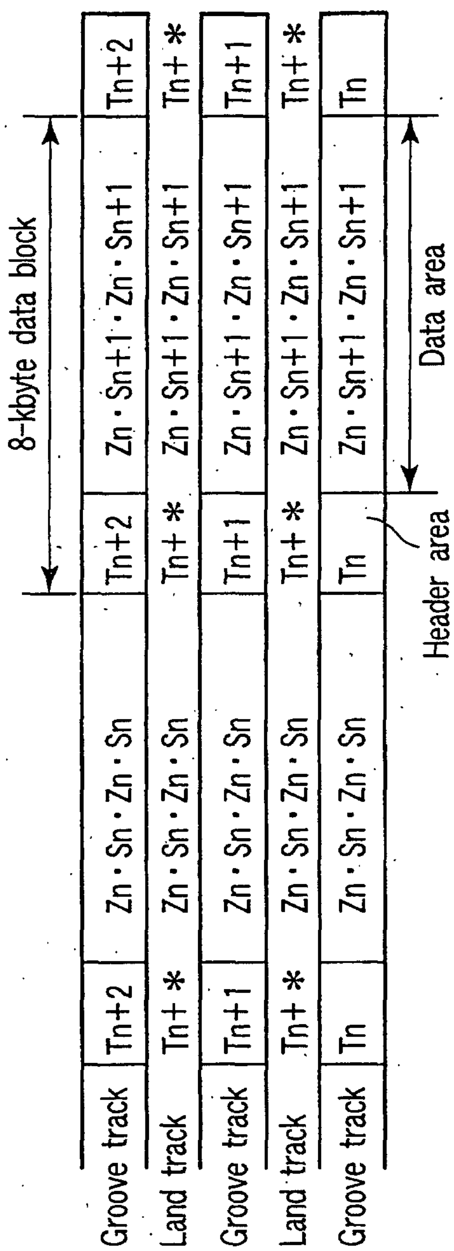
8-kbyte data block
Groove track
Land track
Groove track
Land track
Groove track
Tn+2
Tn+*
Tn+1
Tn+*
Tn
Zn・Sn・Zn・Sn
Zn・Sn+1・Zn・Sn+1
Header area
Data area

FIG.51

## INTERNATIONAL SEARCH REPORT

International application No.
PCT/JP03/03102

**A. CLASSIFICATION OF SUBJECT MATTER**
Int.Cl[7] G11B7/0045, 7/007, 7/24, 20/18

According to International Patent Classification (IPC) or to both national classification and IPC

**B. FIELDS SEARCHED**

Minimum documentation searched (classification system followed by classification symbols)
Int.Cl[7] G11B7/00-7/013, 7/24, 7/30, 20/18

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 9-017033 A (NEC Corp.), 17 January, 1997 (17.01.97), Par. Nos. [0017], [0026], [0027]; Fig. 2 (Family: none) | 1-3 |
| X | JP 6-338066 A (Victor Company Of Japan, Ltd.), 06 December, 1994 (06.12.94), Par. No. [0008]; Fig. 29 (Family: none) | 1 |
| Y | JP 8-022621 A (Sharp Corp.), 23 January, 1996 (23.01.96), Par. No. [0044]; Fig. 8(c) & US 5673250 A | 4-7 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 July, 2003 (09.07.03) | 22 July, 2003 (22.07.03) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP03/03102

C (Continuation). DOCUMENTS CONSIDERED TO BE RELEVANT

| Category* | Citation of document, with indication, where appropriate, of the relevant passages | Relevant to claim No. |
|---|---|---|
| Y | JP 7-272420 A (Victor Company Of Japan, Ltd.), 20 October, 1995 (20.10.95), Par. Nos. [0008], [0009]; Fig. 4 (Family: none) | 4,5,7 |
| Y | JP 63-086042 A (Ricoh Co., Ltd.), 16 April, 1988 (16.04.88), Full text (Family: none) | 4-7 |
| Y | JP 1-204163 A (Brother Industries, Ltd.), 16 August, 1989 (16.08.89), Page 2, lower left column, line 12 to page 3, upper left column, line 16; Fig. 2 (Family: none) | 4-7 |
| X | JP 5-054561 A (Sony Corp.), 05 March, 1993 (05.03.93), Full text (Family: none) | 8,9,11,12 |
| X | JP 61-260468 A (Matsushita Electric Industrial Co., Ltd.), 18 November, 1986 (18.11.86), Full text & EP 202571 A & US 4742517 A | 10 |

Form PCT/ISA/210 (continuation of second sheet) (July 1998)

**INTERNATIONAL SEARCH REPORT**

International application No.
PCT/JP03/03102

**Box I Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II Observations where unity of invention is lacking (Continuation of item 3 of first sheet)**

This International Searching Authority found multiple inventions in this international application, as follows:

(See extra sheet)

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.

☒ No protest accompanied the payment of additional search fees.

Form PCT/ISA/210 (continuation of first sheet (1)) (July 1998)

**INTERNATIONAL SEARCH REPORT**

International application No.
PCT/JP03/03102

Continuation of Box No. II of continuation of first sheet (1)

The invention of claims 1-3 relates to an information storage medium characterized in that at least a part of grooves have a synchronous structure where the wobbles on both sidewalls of the groove are synchronously formed and at least a part of lands have an asynchronous structure where the wobbles on both sidewalls of the land are asynchronously formed.

The invention of claims 4-7 relates to an information recording/reproducing device characterized by comprising first additional writing means for recording information in a groove in a data area of an information storage medium, deleting information in a management area if an information rewrite instruction or a deletion instruction is issued, and additionally writing information without overwriting information in the groove, a second additional writing means for, after the additional write in all the grooves by the additional writing means is ended, recording information on a land in the data area, deleting data in the management area if an information rewrite instruction or a deletion instruction is issued, and additionally writing information on the land, and overwriting means for, after the additional write on all the lands by the second additional writing means is ended, overwriting, in the groove or on the land area, information for which the rewrite or deletion instruction is issued.

The invention of claims 8, 9, 11, 12 relate to an information recording medium characterized in that data recordable on an information recording medium and data recorded on the information recording medium have ECC block units, each ECC block unit is composed of segments, each segment is composed of sectors, and each sector is composed of sync data.

The invention of claim 10 relates to an information recording medium having a structure to which an error detection code is added by conducting at least one of addition, subtraction, and a non-equivalence operation of track address information or conducting a combination of at least two of them.

The invention of claim 1 is publicly known one as disclosed in JP 6-338066 A. Therefore, the technical feature of claim 11 cannot be considered to be a special technical feature. Claim 1, claim 2, and claim 3 lack the unity of invention since the inventions of claims 2, 3 solve another technical problem by further adding a limitation.

Therefore, the international application contains six inventions as listed below.

Claim 1
Claim 2
Claim 3
Claims 4-7
Claims 8, 9, 11, 12
Claim 10

Consequently, the claims do not comply with the requirement of unity of invention.

Form PCT/ISA/210 (extra sheet) (July 1998)